(19) Europäisches Patentamt
European Patent Office
Office européen des brevets

(11) EP 1 693 425 A1

(12) # EUROPEAN PATENT APPLICATION
published in accordance with Art. 158(3) EPC

(43) Date of publication:
**23.08.2006 Bulletin 2006/34**

(21) Application number: **04819973.1**

(22) Date of filing: **08.12.2004**

(51) Int Cl.:
***C09D 11/00*** *(2006.01)* ***B41J 2/01*** *(2006.01)*
***B41M 5/00*** *(2006.01)*

(86) International application number:
**PCT/JP2004/018316**

(87) International publication number:
**WO 2005/054382 (16.06.2005 Gazette 2005/24)**

(84) Designated Contracting States:
**DE FR GB**

(30) Priority: **08.12.2003 JP 2003409616**

(71) Applicant: **SONY CORPORATION**
**Tokyo 141-0001 (JP)**

(72) Inventors:
- **SEKIGUCHI, Hideki**
**Shinagawa-ku,**
**Tokyo 1410001 (JP)**
- **TANAKA, Yasuhiro**
**Shinagawa-ku,**
**Tokyo 1410001 (JP)**
- **FURUKAWA, Noriaki**
**c/o MEITEC CORPORATION**
**Minato-ku,**
**Tokyo 1070052 (JP)**

(74) Representative: **Müller, Frithjof E.**
**Müller Hoffmann & Partner**
**Patentanwälte**
**Innere Wiener Strasse 17**
**81667 München (DE)**

(54) **RECORDING LIQUID, LIQUID CARTRIDGE, LIQUID JETTING APPARATUS AND METHOD OF LIQUID JETTING**

(57) Disclosed is an ink 2 containing colorant matter, a solvent for dispersing the colorant matter and further a polyhydric alcohol. The polyhydric alcohol has a ratio (I/O) of an inorganic value (IV) to an organic value (OV) not less than 1.18 and not more than 2.5 and contains a hydrocarbon group with not more than 9 carbon atoms. The 0-second dynamic surface tension of the ink 2 is not less than 30 mN/m and not more than 40 mN/m. With the use of the ink 2, small-sized bubbles are suppressed from being generated, and emission failures, such as non-emission or warped emission of the ink 2, may be prevented from occurring, so that an image of high dignity may be printed which is free from blurring or non-printed white spots.

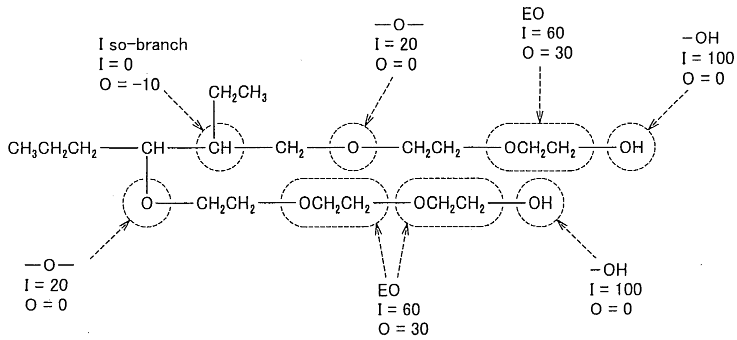


**FIG.5**

EP 1 693 425 A1

## Description

### Technical Field

This invention relates to a recording liquid deposited on a support in the state of droplets for recording thereon, a liquid cartridge for holding the recording liquid, and to a liquid emitting device and a liquid emitting method for emitting the recording liquid, contained in the liquid cartridge, through an emitting opening onto a support in the from of droplets.
This application claims priority of Japanese Patent Application No.2003-409616, filed in Japan on December 8, 2003, the entirety of which is incorporated by reference herein.

### Background Art

As a liquid emitting device, there is an ink j et printer in which a recording liquid, or a so-called ink, is emitted via an ink emitting head to a recording paper sheet, as a support, to record an image or a letter/character thereon. The printer of the ink jet system has advantages such as low running costs, small size, and ease in printing a colored image.
The ink jet system, emitting the ink via an ink emitting head, may be implemented by, for example, a deflection system, a cavity system, a thermo-jet system, a bubble-jet system (registered trademark), thermal ink jet system, a slit jet system, or a spark jet system. Based on various operating principles of these known systems, the ink is turned into fine liquid droplets, which are then emitted via emitting openings, that is, nozzles, of an ink emitting head, so as to be deposited on a sheet for recording an image or a letter/character thereon.
Meanwhile, a demand is raised for the nozzle not to be stopped up with the recording liquid used in the ink jet recording system. It has so far been felt that fine bubbles in the ink represent one of the factors for such stop-up of the nozzle.
In the ink, a preset quantity of a gas, such as air, remains dissolved. If, with rise in temperature, the gas is lowered in solubility, the gas which may not be dissolved in the liquid is separated to form fine bubbles in the liquid. Specifically, when the ink present in an ink tank, used for supplying the ink to e.g. an ink emitting head, in an ink duct, or in an ink emitting duct, rises in temperature, the gas dissolved in the liquid is released to form fine bubbles.
When these fine bubbles are present in the ink emitting head, emission troubles, such as non-emission of the ink from the nozzle or warped emission of the ink, that is, the ink being emitted from the nozzle along a path offset from the intended path, is produced, with the result that a printed image suffers from non-printed white spots or becomes blurred to degrade the printing quality.
In the recording system in which the ink is turned into fine liquid droplets, under the action of thermal energy, and the so formed liquid droplets are emitted from the nozzle, that is, in the recording system of the thermal type or the bubble jet (registered trademark) type, the ink is heated rapidly by a heater and emitted in the form of liquid droplets under the pressure of air bubbles generated by film boiling of the ink. Thus, heat is accumulated in the vicinity of the heater, and hence the ink in the ink duct is extremely liable to rise in temperature, with the result that emission troubles, such as the aforementioned non-emission or warped emission, tend to be produced frequently.
For combating such problem, it is proposed in e.g. the JP Patent Publications 1 and 2 to use an aqueous pigment ink doped with a propylene oxide adduct polymer of a lower alcohol. However, these proposals are not up to sufficient suppression of fine bubbles, and further improvement has been desired.
It has also been proposed in Patent Publication 3 to add an ethylene oxide adduct of a higher dihydric alcohol alkoxylate in an ink. The ink proposed in this Patent Publication 3 is stated to be superior in emission stability during high frequency driving, infiltration performance to the recording paper sheet and in drying properties. However, if a compound obtained on adding only ethylene oxide to the higher alcohol dihydric alcohol alkoxylate is contained in the ink, in accordance with the teaching by Patent Publication 1, it has not been possible to tackle successfully the problem of the nozzles being stopped up with fine bubbles. More specifically, the ink obtained on adding 7 mols or more only of ethylene oxide undergoes vigorous foaming to cause rather severe stop-up of the nozzle.
On the other hand, with the ink used for the ink jet recording system, a demand has been raised not only for prohibiting nozzle stop-up but also for preventing the optical density from being lowered or for preventing the boundary bleeding or speckled mixing of colors in all-over printing, even in case of printing on a medium grade paper sheet, such as copy paper sheet or report paper sheet, or a high grade paper sheet.
For meeting the demand, it has been proposed in e.g. Patent Publication 4 to use a compound, obtained on treating a water-insoluble colorant with a high polymer material containing a sulfonic acid (sulfonate) group and/or with a high polymer material containing phosphoric acid (phosphate) group, as a colorant, and also to add a high polymer material, including a carboxylic acid (carboxylate) to the ink. It has also been proposed in Patent Publication 5 to get the ink doped with an alginic acid having a D-mannuronic acid to L-guluronic acid ratio ranging between 0.5 and 1.2. It has also been proposed in Patent Publication 6 to add at least one surfactant selected from the group of fluorine-based surfactants and silicon-based surfactants and alginates to the ink. However, none of these Publications is sufficient to

meet the aforementioned demand, and further improvement has been desired.

It is noted that the aforementioned problem, related with the bubbles, occurs more pronouncedly with a printer capable of performing high-speed printing on a recording paper sheet, that is, a line-based printer having an ink emitting area substantially equal to the width of the recording paper sheet (for example, see Patent Publications 7 to 9).

More specifically, with a line-based printer, having one or more rows of nozzles juxtaposed in a direction substantially at right angles to the feed direction of the recording paper sheet, that is, along the width-wise direction of the recording paper sheet, as distinct from a serial-based printer in which an ink emitting head is swept in a direction substantially at right angles to the feed direction of the recording paper sheet, an ink duct for conducting the ink from an ink tank is formed for traversing the feed direction of the recording paper sheet, and a plural number of ink emitting heads, each having a nozzle, are arrayed on one or both sides of the ink duct. Hence, the number of ink heating sites is increased with increase in the number of the nozzles, so that fine bubbles tend to be generated. Moreover, since the ink tank is separated from the ink emitting head by a long distance and a complicated structure is interposed from the ink tank to the ink emitting head to render it difficult to remove generated fine bubbles, thus leading to serious troubles caused by fine bubbles.

With the line-based printer, the period of emission of liquid droplets from one nozzle line to the next is that short and hence an ink exhibiting good infiltration characteristics into the bulk of the recording paper sheet needs to be used. If the ink of this sort is used for a paper sheet of medium quality, the ink exhibits the tendency to seep into the bulk of the paper sheet along its depth, that is, along its thickness, with the result that the optical density of the printed product tends to be lowered.

In addition, if so-called color printing of emitting inks of different colors on a recording paper sheet is to be carried out with the line-based printer, where the period of emission of liquid droplets from one nozzle line to the next is short, a color liquid droplet is deposited before the previously deposited color liquid droplet sufficiently seeps into the bulk of the paper sheet, with the consequence that boundary bleeding or speckled mixing of colors in all-over printing tends to be produced between different colors.

Patent Publication 1: Japanese Laid-Open Patent publication 2001-2964
Patent Publication 2: Japanese Laid-Open Patent publication H10-46075
Patent Publication 3: Japanese Laid-Open Patent publication H7-70491
Patent Publication 4: Japanese Laid-Open Patent publication 2000-154342
Patent Publication 5: Japanese Laid-Open Patent publication H8-290656
Patent Publication 6: Japanese Laid-Open Patent publication H8-193177
Patent Publication 7: Japanese Laid-Open Patent publication 2002-36522
Patent Publication 8: Japanese Laid-Open Patent publication 2001-315385
Patent Publication 9: Japanese Laid-Open Patent publication 2001-301199

## Disclosure of the Invention

It is an object of the present invention to provide a recording liquid whereby the aforementioned problems of the related art may be overcome.

It is another object of the present invention to provide a recording liquid suffering from foaming only to a lesser extent, superior in emission stability, exhibiting high optical density in case of multi-color printing of an image or a letter/ character on a paper sheet of a medium quality, as a support, and which is free from boundary bleeding or speckled mixing of colors in all-over printing, thereby enabling high-quality printing. It is yet another object of the present invention to provide a liquid cartridge containing the recording liquid, and a method and a device for effecting high quality printing using the recording liquid contained in the liquid cartridge.

The present invention tackles the problem of deterioration of the emission stability caused by fine bubbles in the recording liquid, deterioration of the optical density on multi-color printing of a letter/ character or an image on a medium quality paper sheet, as a support, boundary bleeding or speckled mixing of colors in all-over printing, by setting the 0-second dynamic surface tension to a preset range and by having polyhydric alcohol of a preset ratio I/O contained in the recording liquid, where I/O stands for the ratio of the inorganic value (IV) to the organic value (OV). The present invention also tackles the above problem by setting the static surface tension to a preset range and by having an alkylene oxide adduct of a polyhydric alcohol of a preset ratio I/O contained in the recording liquid, where I/O stands for the ratio of the inorganic value (IV) to the organic value (OV). The present invention also tackles the above problem by having at least one ethylene oxide/ propylene oxide copolymer contained in the ink in place of the alkylene oxide adduct of the polyhydric alcohol.

The present invention provides a recording liquid deposited on a support in the state of liquid droplets for effecting the printing on the support, wherein the recording liquid contains colorant matter and a solvent for dispersing the colorant matter and has a 0-second dynamic surface tension not less than 30 mN/m to not more than 40 mN/m

emission stability.

The recording liquid according to the present invention has the static surface tension not less than 30 mN/m and not more than 35 mN/m.

The recording liquid according to the present invention also contains an alkylene oxide adduct of a polyhydric alcohol containing a hydrocarbon group with 9 or less carbon atoms and having a ratio (I/O) of an inorganic value (IV) to an organic value (OV) not less than 1 and not more than 1.33.

The recording liquid according to the present invention also contains at least one ethylene/ propylene oxide copolymer in place of the alkylene oxide adduct of the polyhydric alcohol.

The present invention also includes a liquid cartridge detachably mounted on a liquid emitting head provided on a liquid emitting device. The liquid cartridge operates as a supply source for supplying a recording liquid, accommodated in a liquid vessel, to the liquid emitting head. The liquid emitting device is adapted to emit the recording liquid from the liquid vessel in the form of liquid droplets to deposit the emitted ink onto a support to effect printing. The recording liquid contains colorant matter and a solvent for dispersing the colorant matter, and has a 0-second dynamic surface tension not less than 30 mN/m and not more than 40 mN/m.

The present invention also provides a liquid emitting device including a liquid emitting head, having an emitting opening for emitting a recording liquid therethrough in the form of liquid droplets and adapted for emitting the liquid droplets through the emitting opening onto a support transported to a location facing the emitting opening, and a liquid cartridge connected to the liquid emitting head and operating as a supply source for supplying the recording liquid to the liquid emitting head. The recording liquid contains colorant matter and a solvent for dispersing the colorant matter, and has a 0-second dynamic surface tension not less than 30 mN/m and not more than 40 mN/m emission stability.

The present invention also provides a liquid emitting method to be carried out by a liquid emitting device including a liquid emitting head, having an emitting opening for emitting a recording liquid therethrough in the form of liquid droplets and adapted for emitting the liquid droplets through the emitting opening onto a support transported to a location facing the emitting opening, and a liquid cartridge connected to the liquid emitting head and operating as a supply source for supplying the recording liquid to the liquid emitting head. The method comprises emitting the recording liquid via the emitting opening of the liquid emitting head. The recording liquid contains colorant matter and a solvent for dispersing the colorant matter, and has a 0-second dynamic surface tension not less than 30 mN/m and not more than 40 mN/m.

According to the present invention, the polyhydric alcohol, having the ratio (I/O) of the inorganic value (IV) to the organic value (OV) of not less than 1.18 and not more than 2.5, and containing polyhydric alcohol including a hydrocarbon group with 9 or less carbon atoms, is contained in the recording liquid to set the 0-second dynamic surface tension of the recording liquid to not less than 30 mN/m and not more than 40 mN/m. This optimizes the wettability of the recording liquid with respect to the support to suppress fine bubbles from being generated in the recording liquid to prevent the emission failures, such as non-emission or warped emission, at the time of emission of the recording liquid from the emitting opening.

According to the present invention, the recording liquid contains an alkylene oxide adduct of a polyhydric alcohol containing a hydrocarbon group with 9 or less carbon atoms and having a ratio (I/O) of an inorganic value (IV) to an organic value (OV) of not less than 1 and not more than 1.33, in order to set the static surface tension of the recording liquid to not less than 30 mN/m and not more than 35 mN/m, whereby the recording liquid may be improved further in wettability or fine bubbles may further be suppressed from being generated in the liquid, by way of assuring more favorable operation and result.

Moreover, according to the present invention, in which at least one ethylene oxide/ propylene oxide copolymer is contained in the recording liquid in place of the alkylene oxide adduct of the polyhydric alcohol, it is possible to improve the wettability of the recording liquid or to suppress generation of fine bubbles in the liquid, by way of assuring more favorable operation and result.

Hence, according to the present invention, emission troubles, ascribable to the fine bubbles, generated in the recording liquid, may be prohibited from occurring, in order to provide for high dignity printing which is free from blurring, unprinted white spots, boundary bleeding or speckled mixing of colors in all-over printing, and which is high in optical density.

Other objects and specified advantages of the present invention will become more apparent from the following explanation of preferred embodiments thereof especially when read in conjunction with the drawings.

Brief Description of the Drawings

Fig.1 is a perspective view showing a printer embodying the present invention.
Fig.2 is a perspective view showing a head cartridge provided on the printer.
Fig.3 is a cross-sectional view showing the head cartridge.

Fig.4 illustrates the IO of isopropyl alcohol.

Fig.5 illustrates the IO of the chemical formula 16.

Figs.6A and 6B show an ink supply part when an ink tank is fitted to the head cartridge, where Fig.6A is a schematic view showing the closed state of the ink supply part and Fig.6B is a schematic view showing the opened state of the ink supply part.

Fig.7 is a schematic view showing the relationship between the ink tank and an ink emitting head in the head cartridge.

Figs.8A and 8B show a valving mechanism in a connecting part of the ink tank, where Fig.8A is a cross-sectional view with a valve in the closed state and Fig.8B is a cross-sectional view with the valve in the opened state.

Fig.9 is a cross-sectional view showing the structure of the ink emitting head.

Figs.10A and 10B show the ink emitting head, where Fig.10A is a schematic cross-sectional view showing the state in which an air bubble has been formed on a heater resistor and Fig.10B is a schematic cross-sectional view showing the state in which the ink liquid droplet has been discharged from the nozzle.

Fig. 11 is a partial see-through side view of the printer.

Fig. 12 is a schematic block diagram showing a control circuit of the printer.

Fig. 13 is a flowchart for illustrating the printing operation of the printer.

Fig. 14 is a partial see-through side view of the printer, shown with a head cap opened.

Best Mode for Carrying out the Invention

Referring to the drawings, a recording liquid, a liquid cartridge, a liquid emitting device and a liquid emitting method, embodying the present invention, will be explained in detail. An ink jet printer, referred to below as a printer 1, shown in Fig.1, emits e.g. the ink to a recording paper sheet P, running in a preset direction, for printing an image or a letter/character thereon. The printer 1 is a so-called line-based printer including a plural number of ink emitting openings (nozzles) juxtaposed substantially in a line along the width of the recording paper sheet P, that is, in a direction indicated by arrow W in Fig.1, in keeping with the printing width on the recording paper sheet P.

Referring to Figs.2 and 3, this printer 1 includes an ink jet printer head cartridge, referred to below as a head cartridge 3, for emitting an ink 2, as a recording liquid for recording an image or a letter/character on the recording paper sheet P, and a main printer body unit 4 for loading the head cartridge 3 thereon. In the present printer 1, the head cartridge 3 may be mounted on or dismounted from the main printer body unit 4. Moreover, ink tanks 5y, 5m, 5c and 5k, operating as ink supply sources for the head cartridge 3, and holding the ink 2, may be mounted on or dismounted from the head cartridge 3. With the printer 1, the ink tank 5y for yellow, the ink tank 5m for magenta, the ink tank 5c for cyan and the ink tank 5k for black, are usable. The head cartridge 3, that may be mounted on or dismounted from the main printer body unit 4, and the ink tanks 5y, 5m, 5c and 5k, that may be mounted on or dismounted from the head cartridge 3, are consumable items that may be replaced by exchange items.

With the printer 1, the recording paper sheet P, housed in a tray 65a, adapted for accommodating a stack of the plural recording paper sheets P therein, may be mounted in a tray loading unit 6, provided on the front bottom part of the main printer body unit 4, for supplying the recording paper sheets P, housed in the tray 65a, into the inside of the main printer body unit 4. When the tray 65a is loaded on the tray loading unit 6 on the front surface of the main printer body unit 4, the recording paper sheet P is supplied by a paper sheet supplying/ discharging mechanism 64 via paper sheet supply port 65 to the back surface side of the main printer body unit 4. The recording paper sheet P, forwarded to the back surface side of the main printer body unit 4, has its running direction reversed by a reversing roll 83, as later explained, and is forwarded on the upper forward running path from the back surface side towards the front side of the main printer body unit 4. Before the recording paper sheet P, forwarded from the back surface side of the main printer body unit 4 towards its front surface, is discharged from a discharge opening 66 provided in the front surface of the main printer body unit 4, printing data, corresponding to input letter/character data, entered from an information processing device 79, such as a personal computer, which will be explained subsequently, is printed as letters/characters on the recording paper sheet P.

The ink 2, acting as a recording liquid, at least contains an organic compound which provides for the 0-second dynamic surface tension of, for example, not less than 30 mN/m and not more than 40 mN/m to raise wettability with respect to the recording paper sheet P, a colorant material, such as various pigments or water-soluble dyes, as dyestuff, and a solvent for dispersing the colorant material.

The organic compound, operating for setting the 0-second dynamic surface tension to for example not less than 30 mN/m and not more than 40 mN/m, may be enumerated by monohydric lower alcohols, such as methanol, ethanol or isopropyl alcohol, glycol ethers, such as ethylene glycol mono n-butylether, diethylene glycol mono n-butylether, triethylene glycol mono n-butylether, or diethylene glycol mono hexylether, and organic solvents, such as, for example, 2-methyl-2-propyl-1,3-propanediol or 2,2-diethyl-1,3-propanediol.

The 0-second dynamic surface tension will now be explained. The equation of the relaxation function of dynamic surface tension-time changes of a liquid, containing a surfactant, shown by the following equation 1:

[equation 1]

$$\gamma_t = \gamma_m + (\gamma_0 - \gamma_m) / \{1 + (t/t^*)^n\}$$

where $\gamma m$ is a surface tension when changes in surface tension for 30 seconds has become not higher than 1mN/m, $\gamma_0$ is surface tension of the solvent, t* is the time when $\gamma_t$ has become equal to a mid value between $\gamma_0$ and $\gamma_m$ and n is a constant, as stated in, for example, Hua X.Y, Rosen M.J: J. Colloid Interface Sci. 124,652 (1988) and in Takamitsu Tamura, Surface Vol.38, Nos.10 22 to 44 (2000). The equation indicates derived results.

The following equation 2 shows the result of expansion for t = 0 of the relaxation function of dynamic surface tension- time changes of the liquid, containing the surfactant, shown by the equation 1 propounded by Rosen:

[equation 2]

Expanding the equation 1 for t = 0,

$$\gamma_t = \gamma_m + (\gamma_0 - \gamma_m) / \{1 + (0/t^*)^n\}$$

$$= \gamma_m + (\gamma_0 - \gamma_m)/1$$

$$= \gamma_m - \gamma_m + \gamma_0$$

$$= \gamma_0$$

As indicated by the equation 2, the 0-second dynamic surface tension may be found by measuring the static surface tension of a solvent, composed of water and an organic solvent for the ink, from which the components showing surface active performance, namely the colorant matter, antiseptics as later explained, fungicides, dispersant, osmotic agents and surfactants, are excluded. If now the dynamic surface tension of the solvent of the ink 2, freed of the above-mentioned components, exhibiting the surface active performance, is continuously measured, as the rate of generation of bubbles, that is, the foaming rate, is varied by, for example, the maximum foam pressure method, more specifically, if the above continuous measurement is conducted in a range of the foaming rate from 20 bubbles/second to 0.1 bubble/second, the resulting curve for dynamic surface tension is substantially rectilinear and parallel to the horizontal axis, such that, if the foaming rate is lowered, the curve for dynamic surface tension is not drooped significantly.

In case the 0-second dynamic surface tension of the ink 2 is lower than 30 mN/m, the wettability of the ink 2 may become excessively high to lead to unstable shape of the meniscus formed in a nozzle 52a as later explained. If, in such case, the ink emitting interval is narrowed down and ink emission is carried out at a high rate, specifically, at a rate exceeding 3 kHz, it may be an occurrence that the emitting direction of the ink 2 is deviated from its intended path to lower the quality of an image formed on the recording paper sheet P. There is also fear that, since the wettability of the ink 2 in such case has become excessively high, the ink 2, deposited on the recording paper sheet P, is penetrated excessively along the depth, that is, along the thickness, of the recording paper sheet P, thus lowering the optical density or causing the ink 2 to be penetrated to the back side of the recording paper sheet P. If conversely the 0-second dynamic surface tension of the ink 2 has exceeded 40 mN/m, since the ink is penetrated only slowly along the thickness of the recording paper sheet P, there is fear that the ink is subjected to boundary seeping, or to so-called feathering, in which the ink 2 flowing along the fiber of the recording paper sheet P from the point of deposition seeps in the form of a feather.

In the foregoing, monohydric lower alcohols or glycolethers are given as typical of the organic compound which will provide the above ink characteristics. It is however preferred to use polyhydric alcohols having the ratio of an inorganic value (IO) to an organic valur (OV), referred to below as I/O ratio, not less than 1.18 and not more than 2.5, and containing a hydrocarbon group with the number of carbon atoms not more than 9. It is more preferred to use polyhydric alcohols including branched hydrocarbon groups.

Specifically, as the organic compound shown by one of the following chemical formulas 1 to 5 may be recited a polyhydric alcohol which will provide for the 0-second dynamic surface tension ranging from not less than 30 mN/m and not more than 40 mN/m, has the I/O ratio not less than 1.18 and not more than 2.5, and which includes a hydrocarbon group with the number of carbon atoms not more than 9. Any one or more of them may optionally be used.

[chemical formula 1]

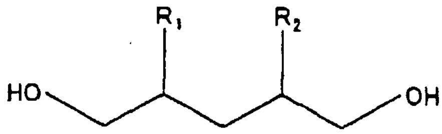

where $R_1$ and $R_2$ denote hydrocarbon groups such that $2 \leq R_1+R_2 \leq 4$, $R_1 \geq 0$ and $R_2 \geq 0$, with the proviso that, if $R_1= 0$ and $R_2 =0$, then $R_1$ and $R_2$ denote hydrogen atoms.

[chemical formula 2]

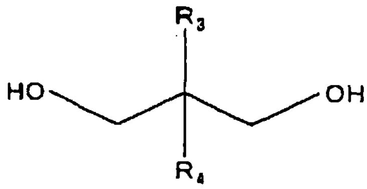

where $R_3$ and $R_4$ denote hydrocarbon groups such that $2 \leq R_3+R_4 \leq 6$, $R_3 \geq 0$ and $R_4 \geq 0$, with the proviso that, if $R_3= 0$ and $R_4 =0$, then $R_3$ and $R_4$ denote hydrogen atoms.

[chemical formula 3]

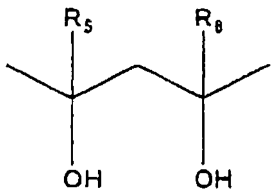

where $R_5$ and $R_6$ denote hydrocarbon groups such that $1 \leq R_5+R_6 \leq 4$, $R_5 \geq 0$ and $R_6 \geq 0$, with the proviso that, if $R_5= 0$ and $R_6 =0$, then $R_5$ and $R_6$ denote hydrogen atoms.

[chemical formula 4]

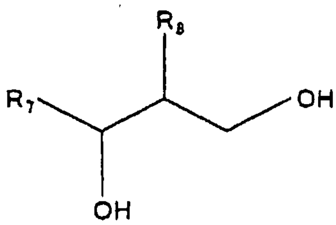

where $R_7$ and $R_8$ denote hydrocarbon groups such that $2 \leq R_7+R_8 \leq 6$.

[chemical formula 5]

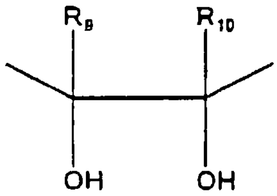

where $R_9$ and $R_{10}$ denote hydrocarbon groups such that $2 \leq R_9+R_{10} \leq 4$.

The inorganic value (IV) and organic value (OV) may be found from discussions on an organic conceptual diagram shown e.g. in Yoshio Koda: "Systematic Organic Conceptual Diagram- Fundamentals and Application", published by SANKYO Publishing Co. Ltd., 1984, Fujita and Akatsuka, "Systematic Organic Qualitative Analysis (for Mixtures)", published by Kazama-Shobou (1974), Nonuhiko Kuroki, "Theoretical Chemistry on Dyes", published by Maki-Shoten, (1966), Tobita and Uchida, "Fine Chemicals", Maruzen (1982) and in Inoue, Uehara and Minami, "Method for Separating Organic Compounds", published by Shoukabou, (1990).

The discussions on an organic conceptual diagram are relative with a technique of grasping the physical properties of a subject organic compound by combining 'inorganic properties', denoting the degree of the physical and chemical properties of an organic compound by the force of electrical affinity, and 'organic properties', denoting the degree of the physical and chemical properties of the organic compound by the Van Der Waals force.

That is, with the I/O, if the inorganic value (IV) of a given compound is increased, it is apt to be polarized to become more readily soluble in water and, if the organic value (OV) of a given compound is increased, the compound is increased in oleophilicity and lowered in solubility in water, while being more readily soluble in an organic solvent.

Meanwhile, the I/O of the monohydric lower alcohols or glycol ethers is calculated in accordance with the above cited Yoshio Koda: "Systematic Organic Conceptual Diagram-Fundamentals and Application", pp.13, Table 1.1. The Table 1.1, shown in page 13 of the above cited Yoshio Koda: "Systematic Organic Conceptual Diagram-Fundamentals and Application", pp.13, is Tables 1 and 2 shown below. In the above cited "Systematic Organic Conceptual Diagram-Fundamentals and Application", the organic value of the carbon atom is 20 and, accordingly, the I/O value is calculated with the value of 20 for the carbon atom, although this is not shown in Table 1 or 2. Meanwhile, the Tables 1 and 2 state that the iso-branch and the tert-branch are applied to the terminal part. However, the iso-branch and the tert-branch are applied here not only to the terminal parts but also to the C-chain. The I/O values for monohydric lower alcohols and glycolethers were calculated in accordance with Tables 1 and 2. The results are shown in the following Table 3.

In calculating the I/O value, the organic value may be found from the organic value of the carbon atoms. The inorganic values may also be found from the inorganic groups shown in Tables 1 and 2. As for the organic/inorganic groups, that is, the inorganic groups also having the organic properties, the organic values are also found and summed to the organic values mentioned above. The inorganic values, thus found, are divided by the organic value to find the I/O.

Table 1

| Inorganic groups | Values | organic/inorganic groups | values | |
|---|---|---|---|---|
| | | | organic | inorganic |
| Light metals (salts) | 500 or more | $R_4$Bi-OH | 80 | 250 |
| heavy metals (salts), amines and $NH_4$ salts | 400 or more | $R_4$Sb-OH | 60 | 250 |
| $-AsO_3H_2$, > $As_2O_2H$ | 300 | $R_4$As-OH | 40 | 250 |
| $-SO_2$-NH-CO-, $-N=N-NH_2$ | 260 | $R_4$P-OH | 20 | 250 |
| =>$N^+$-OH, $-SO_3H$, $-NH-SO_2-NH-$ | 250 | $-OSO_3H$ | 20 | 220 |
| -CO-NH-CO- NH-CO- | 250 | >$SO_2$ | 40 | 170 |
| ->S-OH, -CO-NH-CO-NH- | 240 | >SO | 40 | 140 |
| $-SO_2$-NH- | 240 | -CSSH | 100 | 80 |
| -CS-NH-*, -CO-NH-CO-* | 230 | -SCN | 90 | 80 |

(continued)

| Inorganic groups | Values | organic/inorganic groups | values | |
|---|---|---|---|---|
| | | | organic | inorganic |
| =N-OH, -NH-CO-NH-* | 220 | -CSOH, -COSH | 80 | 80 |
| =N- NH-*, -CO-NH-$NH_2$ | 210 | -NCS | 90 | 75 |
| -CO-NH-* | 200 | -Bi< | 80 | 70 |
| ->N→O | 170 | -$NO_2$ | 70 | 70 |
| -COOH | 150 | -Sb< | 60 | 70 |
| lactone ring | 120 | -As<,-CN | 40 | 70 |
| -CO-O-CO- | 110 | -P< | 20 | 70 |
| [Note] In the above Tables 1 and 2, the value for carbon in the inorganic groups is to be added to the organic value, provided, however, that the value for carbon in the organic/ inorganic group has already been added in the organic/inorganic value. R and Φ denote the alkyl group and the alkyl or phenyl group, respectively. A small asterisk * and ※ are applied to a non-cyclic part and to a terminal part, respectively, and † denotes the value within square brackets []. | | | | |

Table 2

| inorganic groups | values | organic/inorganic groups | values | |
|---|---|---|---|---|
| | | | organic | inorganic |
| anthracene groups, phenanthrene groups | 105 | -O-[-$CH_2$-$CH_2$-O-]-$CH_2$-† | 30 | 60 |
| -OH | 100 | -CSSΦ | 130 | 50 |
| -Hg (covalent bond) | 95 | -CSOΦ, -COSΦ | 80 | 50 |
| -NH-NH-, -O-CO-O- | 80 | -NO | 50 | 50 |
| -N<(-$NH_2$, -NHΦ, -N$Φ_2$), aminic properties | 70 | -O-$NO_2$ | 60 | 40 |
| >CO | 65 | -NC | 40 | 40 |
| -COOΦ, naphthalene nucleus, quinoline nucleus | 60 | -Sb=Sb- | 90 | 30 |
| >C=NH | 50 | -As=As- | 60 | 30 |
| -O-O- | 40 | -P=P-, -NCO | 30 | 30 |
| -N=N- | 30 | -O-NO, -SH, -S- | 40 | 20 |
| -O- | 20 | -1 | 80 | 10 |
| benzene nucleus (usual aromatic single ring) | 15 | -Br | 60 | 10 |
| ring (usual non-aromatic single ring, angle is irrelevant | 10 | =S | 50 | 10 |
| Triple bond | 3 | -Cl | 40 | 10 |
| double bond | 2 | -F | 5 | 5 |
| | | iso branch ※>- | -10 | 0 |

(continued)

| inorganic groups | values | organic/inorganic groups | values | |
|---|---|---|---|---|
| | | | organic | inorganic |
| | | tert branch ※->- | -20 | 0 |
| [Note] In the above Tables 1 and 2, the value for carbon in the inorganic groups is to be added to the organic value, provided, however, that the value for carbon in the organic/ inorganic group has already been added in the organic/ inorganic value. R and Φ denote the alkyl group and the alkyl or phenyl group, respectively. A small asterisk * and ※ are applied to a non-cyclic part and to a terminal part, respectively, and † denotes the value within square brackets []. | | | | |

Table 3

| | inorganic values (IV) | organic values (OV) | I/O |
|---|---|---|---|
| methanol | 100 | 20 | 5 |
| ethanol | 100 | 40 | 2.5 |
| isopropyl alcohol | 100 | 50 | 2 |
| ethylene glycol mono n-butylether | 120 | 120 | 1 |
| diethylene glycol mono n-butylether | 180 | 150 | 1.2 |
| triethylene glycol mono n-butylether | 240 | 180 | 1.33 |
| diethylene glycol monohexylether | 180 | 190 | 0.95 |

The method of calculating the I/O will be explained hereinbelow, taking isopropyl alcohol, in the above Table 3, as an example.

Referring to Fig.4, isopropyl alcohol includes one inorganic group, namely a hydroxyl group (OH), three carbon atoms, forming organic groups, and one iso branch. It will be seen from the above Tables 1 and 2 that, since the IV of OH as an inorganic group is 100, an inorganic value (IV) of isopropyl alcohol (IV) = 100 $\times$ 1 (number of OH) = 100. Since the OV of C, as an organic group, is 20, and the OV of the iso-branch is -10, the organic value (OV) of isopropyl alcohol is 20$\times$3(number of carbon atoms) + (-10) $\times$1 (number of iso branches) = 50. Hence, the I/O of isopropyl alcohol = 100/50 = 2.

In case the I/O of the organic compound, contained in the ink 2, and which will provide for the 0-second dynamic surface tension of the ink 2 in the preset range, is less than 1.18, there is fear that the organic compound becomes low in hydrophilicity and separated in the ink 2, with the so separated organic compound being turned into oil droplets to stop up the nozzle 52a, for example, to deteriorate the emission stability. If, on the other hand, the I/O of the organic compound, contained in the ink 2, and which will provide for the 0-second dynamic surface tension of the ink 2 in the preset range, exceeds 2.5, the organic compound tends to be low in hydrophobicity, such that fine bubbles tend to be generated in the ink 2, thus possibly deteriorating the emission stability in similar manner.

The organic compound, which will provide for the 0-second dynamic surface tension in a range not less than 30 mN/m and not higher than 40 mN, is contained preferably in a range of 0.1 wt% to 10 wt%, and more preferably in a range of 0.5 wt% to 3 wt%, based on the total weight of the ink 2. In case the content of the organic compound, which will provide for the 0-second dynamic surface tension in a range not less than 30 mN/m and not higher than 40 mN, is lesser than 0.1 wt%, it becomes difficult to achieve the above-described operation and result. If, on the other hand, the content of the organic compound, which will provide for the 0-second dynamic surface tension in the range not less than 30 mN/m and not higher than 40 mN, is more than 10 wt%, exceeds 10 wt%, there is fear that the ink 2 is increased in viscosity to deteriorate infiltration performance of the ink 2 into the bulk of the recording paper sheet P.

In case the number of carbon atoms of the polyhydric alcohol, as the organic compound which will provide for the 0-second dynamic surface tension in the preset range, exceeds 9, there is fear that the ink 2 becomes higher in viscosity, such that, depending on the content of the polyhydric alcohol in the ink 2, infiltration performance of the ink 2 into the bulk of the recording paper sheet P is deteriorated. Meanwhile, in polyhydric alcohol, the number of carbon atoms is spontaneously determined by the I/O value.

In case the organic compound which provides for the 0-second dynamic surface tension of the ink 2 in the

range not less than 30 mN/m and not higher than 40 mN or, as this organic compound, a polyhydric alcohol, satisfying the condition that the I/O shall be in a range not less than 1.18 and not more than 2.5, with the polyhydric alcohol including a hydrocarbon group with 9 or less carbon atoms, is contained in the ink 2, the ink is improved in wettability with respect to the recording paper sheet P, as described above. Thus, when printing is made with the ink 2 on the recording paper sheet P, emission troubles otherwise caused by fine bubbles in the ink 2 are prevented to improve emission stability. It is possible to prevent blurring or generation of non-printed white spots, while it is also possible to prevent boundary bleeding or speckled mixing of colors in all-over printing.

In the following Table 4, the inorganic value (IV), organic value (IO) and I/O in polyhydric alcohols are shown for variable numbers of the hydrocarbon groups (R) of the aforementioned chemical formulas 1 to 5. It is noted that I/O has been calculated based on the above Tables 1 and 2, and that, even in the case of a C-chain, the iso-branch and the tert-branch in Tables 1 and 2 are applied.

Table 4

| polyhydric alcohols | chemical formulas | hdrocarbon groups | inorganic value (IV) | organic value (10) | I/O |
|---|---|---|---|---|---|
| A | 1 | $R_1$ = 2, $R_2$ = 0 | 200 | 130 | 1.54 |
| B | | $R_1$ = 3, $R_2$ = 0 | 200 | 150 | 1.33 |
| C | | $R_1$ = 4, $R_2$ = 0 | 200 | 170 | 1.18 |
| D | | $R_1$ = 1, $R_2$ = 1 | 200 | 120 | 1.67 |
| E | | $R_1$ = 2, $R_2$ = 1 | 200 | 140 | 1.43 |
| F | | $R_1$ = 2, $R_2$ = 2 | 200 | 160 | 1.25 |
| G | 2 | $R_3$ = 1, $R_4$ = 1 | 200 | 80 | 2.5 |
| H | | $R_3$ = 2, $R_4$ = 1 | 200 | 100 | 2 |
| I | | $R_3$ = 3, $R_4$ = 1 | 200 | 120 | 1.67 |
| J | | $R_3$ = 4, $R_4$ = 1 | 200 | 140 | 1.43 |
| K | | $R_3$ = 5, $R_4$ = 1 | 200 | 160 | 1.25 |
| L | | $R_3$ = 2, $R_4$ = 2 | 200 | 120 | 1.67 |
| M | | $R_3$ = 3, $R_4$ = 2 | 200 | 140 | 1.43 |
| N | | $R_3$ = 3, $R_4$ = 3 | 200 | 160 | 1.25 |
| O | | $R_3$ = 4, $R_4$ = 2 | 200 | 160 | 1.25 |
| P | 3 | $R_5$ = 1, $R_6$ = 0 | 200 | 100 | 2 |
| Q | | $R_5$ = 2, $R_6$ = 0 | 200 | 120 | 1.67 |
| R | | $R_5$ = 3, $R_6$ = 0 | 200 | 140 | 1.43 |
| S | | $R_5$ = 4, $R_6$ = 0 | 200 | 160 | 1.25 |
| T | | $R_5$ = 1, $R_6$ = 1 | 200 | 100 | 2 |
| U | | $R_5$ = 2, $R_6$ = 1 | 200 | 120 | 1.67 |
| V | | $R_5$ = 2, $R_6$ = 2 | 200 | 140 | 1.43 |

(continued)

| polyhydric alcohols | chemical formulas | hdrocarbon groups | inorganic value (IV) | organic value (10) | I/O |
|---|---|---|---|---|---|
| W | 4 | $R_7 = 1, R_8 = 1$ | 200 | 90 | 2.22 |
| X | | $R_7 = 2, R_8 = 1$ | 200 | 110 | 1.82 |
| Y | | $R_7 = 3, R_8 = 1$ | 200 | 130 | 1.54 |
| Z | | $R_7 = 4, R_8 = 1$ | 200 | 150 | 1.33 |
| AA | | $R_7 = 5, R_8 = 1$ | 200 | 170 | 1.18 |
| AB | | $R_7 = 1, R_8 = 2$ | 200 | 110 | 1.82 |
| AC | | $R_7 = 1, R_8 = 3$ | 200 | 130 | 1.54 |
| AD | | $R_7 = 1, R_8 = 4$ | 200 | 150 | 1.33 |
| AE | | $R_7 = 1, R_8 = 5$ | 200 | 170 | 1.18 |
| AF | | $R_7 = 2, R_8 = 2$ | 200 | 130 | 1.54 |
| AG | | $R_7 = 2, R_8 = 3$ | 200 | 150 | 1.33 |
| AH | | $R_7 = 3, R_8 = 2$ | 200 | 150 | 1.33 |
| AI | | $R_7 = 3, R_8 = 3$ | 200 | 170 | 1.18 |
| AJ | 5 | $R_9 = 1, R_{10} = 1$ | 200 | 80 | 2.5 |
| AK | | $R_9 = 2, R_{10} = 1$ | 200 | 100 | 2 |
| AL | | $R_9 = 2, R_{10} = 2$ | 200 | 120 | 1.67 |
| AM | | $R_9 = 3, R_{10} = 1$ | 200 | 120 | 1.67 |

In case the polyhydric alcohols from A to AM, shown in Table 4, with I/O not less than 1.18 and not more than 2.5, are contained in the ink 2, it is possible to raise the wettability of the ink with respect to the inner peripheral surface of a nozzle 52a or a nozzle sheet 52, as later explained, and to suppress oil droplets or fine bubbles from being generated in the ink 2, so that it is possible to prohibit the emission failure, such as non-emission or warped emission.

Here, the organic compounds, corresponding to the compounds, in which the number of the hydrocarbon groups of the chemical formulas 1 to 5 are changed, are given as typical of polyhydric alcohols having hydrocarbon groups with 9 or less carbon atoms, with the I/O ranging between 1.18 and 2.5. However, these organic compounds are given merely for illustration and are not intended for restricting the present invention. That is, any polyhydric alcohols, providing for 0-second dynamic surface tension of the ink 2 not less than 30 mN/m and not more than 40 mN/m, with the I/O being in a range not less than 1.18 and not more than 2.5, and containing hydrocarbon groups with the number of carbon atoms not more than 9, may be contained in the ink 2 to give the operation and the result which are similar to those of the organic compounds of the chemical formulas 1 to 5.

If the ink 2, having the 0-second dynamic surface tension not less than 30 mN/m and not more than 40 mN/m, further has the static surface tension not less than 30 mN/m and not more than 35 mN/m, it is possible to further improve the emission stability, boundary bleeding and speckled color mixing in all-over high-speed printing. That is, if the ink 2 is added by an organic compound, which provides for the preset range of the 0-second dynamic surface tension, or by the aforementioned polyhydric alcohol, as this organic compound, it is possible to optimize the static surface tension as well. However, the favorable operation and result, derived from the organic compound providing for the preset range of the 0-second dynamic surface tension may further be improved by the ink further containing the surfactant which will now be described.

Specifically, an alkylene oxide adduct of a polyhydric alcohol, or at least one or more of ethylene oxide/ propylene oxide copolymers, having I/O ranging between 1 and 1.33 and containing a hydrocarbon group with 9 or less carbon atoms, is contained in the ink 2, as a surfactant which provides for the preset range of the static surface tension of the ink 2.

If, in particular, an alkylene oxide adduct of a polyhydric alcohol is used, it is desirable to have an alkylene oxide adduct of a polyhydric alcohol contained in the ink 2. As alkylene oxide adducts of polyhydric alcohols, having and I/O in a range between 1 and 1.33 and including hydrocarbon groups with 9 or less carbon atoms, there are, for example, the organic compounds shown by the chemical formulas 6 to 10, which may be used either singly or as a mixture.

[Chemical formula 6]

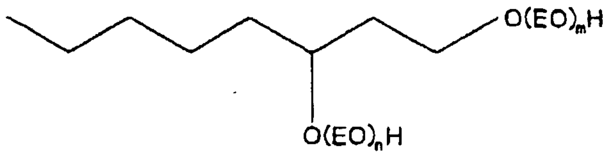

where EO in the formula denotes an ethylene oxide group, with m+n = 2

[Chemical formula 7]

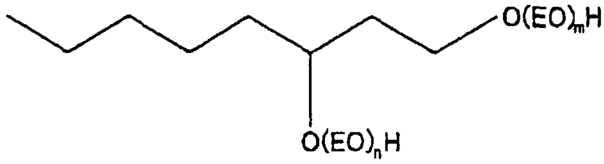

where EO in the formula denotes an ethylene oxide group, with m+n = 4

[Chemical formula 8]

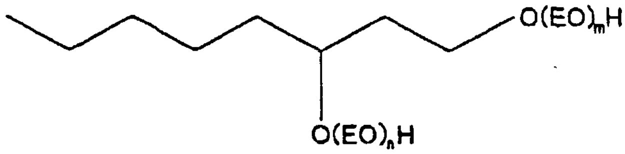

where EO in the formula denotes an ethylene oxide group, with m+n = 6

[Chemical formula 9]

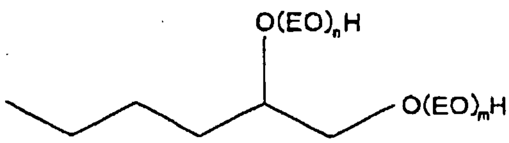

where EO in the formula denotes an ethylene oxide group, with m+n = 2

[Chemical formula 10]

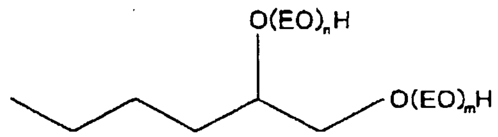

where EO in the formula denotes an ethylene oxide group, with m+n = 3.

If the aforementioned alkylene oxide adduct of the polyhydric alcohol is contained in the ink 2, and the static surface tension of the ink 2 is set so as to be in a suitable range, that is, in a range from 30 mN/m or higher to 35 mN/m or less, it is possible to suppress fine bubbles from being produced in the liquid or to suppress boundary bleeding or speckled mixing of colors in all-over printing from being generated on printing on the recording paper sheet P with the ink.

Moreover, if there is contained in the ink 2 an alkylene oxide adduct of a polyhydric alcohol including a hydrocarbon group having an iso branch or a tert branch as shown for example in the chemical formulas 11 to 18, as an alkylene oxide adduct of a polyhydric alcohol, containing a hydrocarbon group with 9 or less carbon atoms, and having an I/O in a range between 1 and 1.33, the steric chemical structure of the alkylene oxide adduct of the polyhydric alcohol proves a barrier to further suppress the generation of fine bubbles, thereby providing for superior emission stability.

[Chemical formula 11]

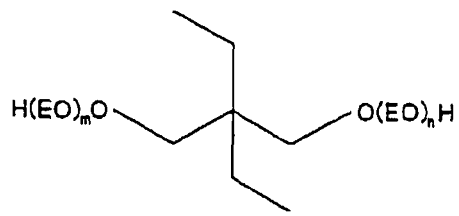

where EO denotes an ethylene oxide group, with m+n = 2.

[Chemical formula 12]

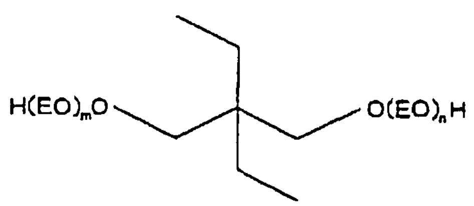

where EO denotes an ethylene oxide group, with m+n = 3.

[Chemical formula 13]

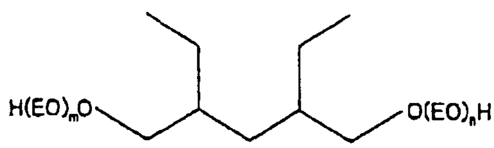

where EO denotes an ethylene oxide group, with m+n = 2.

[Chemical formula 14]

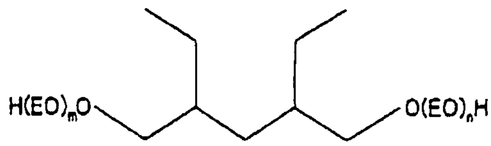

where EO denotes an ethylene oxide group, with m+n = 6.

[Chemical formula 15]

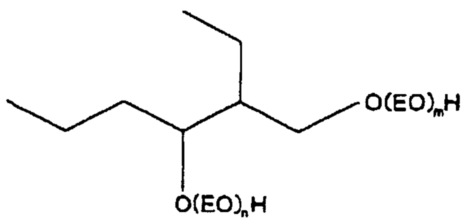

where EO denotes an ethylene oxide group, with m+n = 2.

[Chemical formula 16]

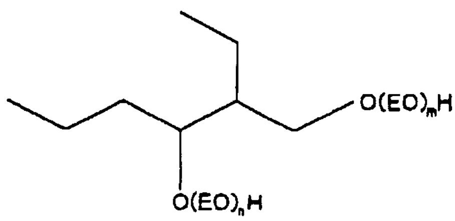

where EO denotes an ethylene oxide group, with m+n = 5.

[Chemical formula 17]

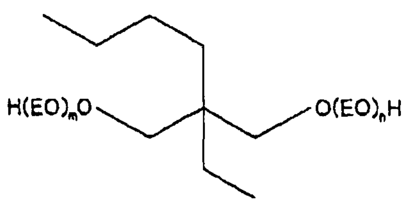

where EO denotes an ethylene oxide group, with m+n = 2.

[Chemical formula 18]

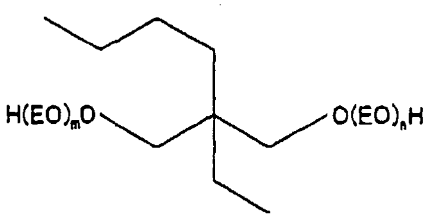

where EO denotes an ethylene oxide group, with m+n = 6.

In particular, the compounds shown by the chemical formulas 13 to 18 are desirably contained in the ink 2 as the alkylene oxide adducts of the polyhydric alcohol including 9 or less carbon atoms and having the I/O in a range from 1 to 1.33. By having these compounds contained in the ink 2, either alone or in combination, it is possible to achieve outstanding operation and results.

In case the alkylene oxide adduct of the polyhydric alcohol, contained in the ink 2, is an organic compound, having more than 9 carbon atoms, the ink 2 is increased in viscosity. In this case, there is fear that, depending on the content of the compound in the ink 2, the ink 2 may be deteriorated in infiltration performance into the bulk of the recording paper sheet P. Meanwhile, in the alkylene oxide adduct of the polyhydric alcohol, the number of carbon atoms is spontaneously determined by the I/O value.

The alkylene oxide adduct of the polyhydric alcohol, having a hydrocarbon group with 9 or less carbon atoms, and having the I/O ranging between 1 and 1.33, is contained in the ink 2 in an amount of preferably 0.1 to 5 wt% and more preferably 0.5 to 3 wt% based on the total weight of the ink 2. If the content of the alkylene oxide adduct of the polyhydric alcohol is less than 0.1 wt%, based on the total weight of the ink 2, the above-described operation and result can hardly be attained. If, on the other hand, the content of the alkylene oxide adduct of the polyhydric alcohol in the ink 2 exceeds 5 wt%, the ink 2 tends to be increased in viscosity, so that there is fear of the ink 2 being deteriorated in infiltration performance into the bulk of the recording paper sheet P.

On the other hand, if the I/O of the alkylene oxide adduct of the polyhydric alcohol, contained in the ink 2, is less than 1, the compound tends to be low in hydrophilicity and separated in the ink 2 to become oil droplets which may stop up the nozzle 52a to deteriorate the emission stability. If the I/O exceeds 1.33, the compound tends to be low in hydrophobicity, so that fine bubbles tend to be generated in the ink 2 to deteriorate the emission stability in similar manner.

The following Table 5 shows inorganic values (IV), organic values (IO) and the ratio I/O in the alkylene oxide adducts of the polyhydric alcohols shown in the chemical formulas 6 to 18. The I/O values are again calculated on the basis of the above Tables 1 and 2. Meanwhile, the iso-branch and the tert-branch in Tables 1 and 2 are applied to the C-chain as described above.

Table 5

| alkylene oxide adduct of the polyhydric alcohol | inorganic value (IV) | organic value (OV) | I/O |
|---|---|---|---|
| chemical formula 6 | 240 | 240 | 1 |
| chemical formula 7 | 360 | 300 | 1.2 |
| chemical formula 8 | 480 | 360 | 1.33 |
| chemical formula 9 | 240 | 200 | 1.2 |
| chemical formula 10 | 240 | 230 | 1.04 |
| chemical formula 11 | 240 | 200 | 1.2 |
| chemical formula 12 | 300 | 230 | 1.3 |
| chemical formula 13 | 240 | 240 | 1 |
| chemical formula 14 | 480 | 360 | 1.33 |
| chemical formula 15 | 240 | 230 | 1.04 |
| chemical formula 16 | 420 | 320 | 1.31 |

(continued)

| alkylene oxide adduct of the polyhydric alcohol | inorganic value (IV) | organic value (OV) | I/O |
|---|---|---|---|
| chemical formula 17 | 240 | 240 | 1 |
| chemical formula 18 | 480 | 360 | 1.33 |

The specified method for calculating the I/O for the chemical formula 16 of the above Table 5 will be explained. Referring to Fig.5, the chemical formula 16 includes two -OH groups, as inorganic groups, two (-O-)s, three ($-O-CH_2-CH_2-$)s, as organic/inorganic groups, referred to below as 'EOs', 12 carbon atoms, forming organic groups, and one iso branch. From the Tables 1 and 2, the IV of the (-O-) is 20. From this, the IV of the chemical formula 16 is IV= 100×2 (number of OH groups) + 20×2 (number of O atoms) + 60×3 (number of EOs) = 420. The OV of the chemical formula 16 = 20×12 (number of C atoms) + (-10) × 1 (number of iso branches) + 30×3 (number of EOs) = 320. Hence, the I/O of the chemical formula 16 is 420/320 = 1.31.

From the I/O values, shown in Table 5, the I/O is not less than 1 and not more than 1.33, in each of the alkylene oxide adducts of the polyhydric alcohols, shown in the chemical formulas 6 to 18, and the alkylene oxide adducts of the polyhydric alcohols, if added to the ink 2, are operative to suppress generation of oil droplets or fine bubbles in the ink 2, thus preventing the emission failure, such as non-emission or warped emission.

Here, the organic compounds shown by the chemical formulas 6 to 18 are shown as the alkylene oxide adducts of the polyhydric alcohols containing hydrocarbon groups with 9 or less carbon atoms and having the I/O in a range between 1 and 1.33. These organic compounds are, however, merely illustrative and, specifically, any alkylene oxide adducts of the polyhydric alcohols, which will provide for the static surface tension not less than 30 mN/m and not more than 35 mN/m, and containing hydrocarbon groups with 9 or less carbon atoms, with the I/O not less than 1 and not more than 1.33, may be used as a surfactant for the ink 2, to give rise to the favorable operation and result similar to those of the compounds of the chemical formulas 6 to 18.

Moreover, the static surface tension of the ink 2 may basically be adjusted by suitably setting the sort or the quantity of addition to the ink 2 of the alkylene oxide adducts of the polyhydric alcohols containing hydrocarbon groups with 9 or less carbon atoms, with the I/O being not less than 1 and not more than 1.33. However, in case the static surface tension cannot be adjusted with ease, suitable conventional surfactants may be added insofar as such addition does not detract from the operation and result proper to the aforementioned alkylene oxide adducts of the polyhydric alcohols containing hydrocarbon groups with 9 or less carbon atoms, with the I/O not less than 1 and not more than 1.33.

Specified examples of the routinely used surfactants include special phenol based nonionic surfactants, such as polycyclic phenol ethoxylates, ester-based nonionic surfactants, such as ethylene oxide adducts of glyceride, polyethylene glycol oleate, polyoxyalkylene taloate, sorbitan laurylester, sorbitan oleylester, and polyoxyethylene sorbitane oleylester, amide-based non-ionic surfactants, such as coconut oil fatty acid diethanol amide, or polyoxyethylene coconut oil fatty acid monoethanol amide and polyoxyethylene coconut oil fatty acid monoethanol amide, acetylene glycol, ethylene oxide adducts thereof, anionic surfactants, such as alcohol sulfate sodium salts, higher alcohol sulfate sodium salts, polyoxyethylene alkyl phenylether sulfuric acid ester ammonium salts, and alkylbenzene sulfonic acid sodium salts, cationic surfactants, such as mono long chain alkyl cation, di long chain alkyl cation or alkylamine oxide, and amphoteric surfactants, such as laurylamido propyl acetic acid betaine and laurylamino acetic acid betaine. These known surfactants may be used alone or as a mixture.

The aforementioned known surfactants are added in an amount not more than 30 mass wt% and preferably not more than 20 mass wt%, based on the total weight of the alkylene oxide adduct of a polyhydric alcohol in the ink 2 having a hydrocarbon group with 9 or less carbon atoms and having the I/O ratio ranging between 1 and 1.37. If the known surfactants are added in an amount exceeding 30 mass wt% of the total weight of the alkylene oxide adduct of a polyhydric alcohol, having a hydrocarbon group with 9 or less carbon atoms and having the I/O ratio value ranging between 1 and 1.33, the risk is high that the optical density is lowered to cause boundary bleeding or speckles in color mixing in all-over printing.

Also, an ethylene oxide/ propylene oxide copolymer of the following chemical formula 19, referred to below as 'EOPOEO', may be added to the ink 2, in addition to the polyhydric alcohol containing a hydrocarbon group having 9 or less carbon atoms, with the I/O not lower than 1.18 and not more than 2.5, as surfactant, in place of the alkylene oxide adducts. This compound EOPOEO is capable of suppressing generation of fine bubbles in the ink 2 or optimizes the wettability of the ink 2.

[Chemical formula 19]

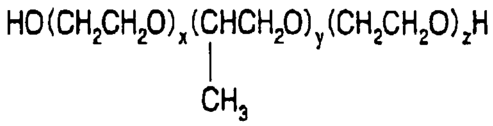

where x, y and z are integers such that 3 ≤ x+z ≤12 and 8 ≤ y ≤ 21, with the content of the ethylene oxide units in the molecule being 20 to 40 wt%.

With the EOPOEO, the total number of units (x+z) of ethylene oxide, referred to below as 'EO', is preferably not less than 3 and not more than 12 and more preferably not less than 3 and not more than 10. The total content of the 'EO' in an EOPOEO molecule is not less than 20 wt% and not more than 40 wt%. On the other hand, the number of units (y) of propylene oxide, referred to below as 'PO', is preferably not less than 8 and not more than 21 and more preferably not less than 8 and not more than 16.

In case the total number of units (x+z) of EO is smaller than 3 or the content of the total number of units of EO is smaller than 20 wt%, the solubility of EOPOEO in water becomes inferior, such that, in a warmed state of the printer, the ink 2 becomes turbid, so that the physical properties of the ink 2 are impaired.

If, on the other hand, the total number of the units of EO is more than 12 or the content of the total number of units of EO is more than 40 wt%, the hydrophilicity of the EOPOEO becomes so high that the function of the surfactant is lowered to render it difficult to suppress generation of fine bubbles in the ink 2.

If the number of units of PO (y) in the EOPOEO is smaller than 8, the EOPOEO becomes high in hydrophilicity and becomes readily soluble in water. However, the function of the EOPOEO as the surfactant is lowered so that it becomes impossible to suppress generation of fine bubbles.

If, on the other hand, the number of units of PO (y) is more than 21, the EOPOEO becomes hydrophilic and becomes difficultly soluble even at room temperature. In such case, the ink 2 becomes turbid in the warmed-up state of the printer, so that the physical properties of the ink 2 are impaired.

The ratio of the total number of units of EO (x+z) in EOPOEO to the number of units of PO (y), or (x+z)/y, is specifically 3~ 6/7, 3~ 7/8, 3~ 7/9, 4~ 8/10, 4~ 9/11, 4~ 10/12, 5~ 11/13, 5~ 12/14, 5~ 12/15, 6~ 12/16, 6~ 12/17, 6~ 12/18, 7~ 12/19, 7~ 12/20 or 7~ 12/21. These EOPOEOs are usually of a molecular weight not higher than 1700 and more preferably not higher than 1300. The high molecular weight exceeding 1700 is not desirable because the ink 2 becomes higher in viscosity.

With the above EOPOEO, in case the total number of units of EO(x+z) is not less than 3 and not higher than 12, the total contents of the units of EO in an EOPOEO molecule is not less than 20 wt% and not higher than 40 wt%, and the number of units (y) of PO is not less than 8 and not higher than 21, the generation of fine bubbles in the ink 2 may be suppressed without impairing the physical properties of the ink 2. With this ink 2, the nozzle 52a may be prevented from being stopped up with fine bubbles to improve the emission stability. Moreover, the ink 2, containing the EOPOEO, may be improved in wettability. Printing on the recording paper sheet P gives an image which is high in optical density and free from boundary bleeding or speckled mixing of colors in all-over printing.

The content of EOPOEO is in a range from 0.05 to 5 wt% and preferably from 0.1 to 2 wt% based on the total weight of the ink 2. In case the content of EOPOEO is less than 0.05 wt%, it becomes impossible to suppress generation of fine bubbles or to achieve the results mentioned above. In case the content of EOPOEO is more than 5 wt%, the ink 2 becomes thickened and lowered in emission stability to retard the ink infiltration into the bulk of the recording paper sheet P.

In case polyhydric alcohol and EOPOEO are contained in the ink 2, it is possible to suppress generation of fine bubbles in case the ink 2 is heated or in case there are many heated sites of the ink 2 in the flow ducts of a complicated structure. In case of the extremely short emission period, high quality images may be formed because of high infiltration performance of the ink 2 into the bulk of the recording paper sheet P even in case of using an ordinary paper sheet as the recording paper sheet P.

The content of polyhydric alcohol is 0.1 to 10 wt% and preferably 0.5 to 7 wt% based on the total weight of the ink 2. In case the content of polyhydric alcohol becomes smaller than 0.1 wt% based on the weight of the ink 2, it becomes difficult to achieve the aforementioned operation and result. If, on the other hand, the content of polyhydric alcohol based on the weight of the ink 2 is higher than 5 wt%, the ink 2 is increased in viscosity, or only part of polyhydric alcohol is soluble in the ink 2, with the result that intermittent emission stability is lowered.

As the colorant material, fine particles of dyes, pigments or colored polymers, well-known in the art, may be used alone or as a mixture. In particular, the water-soluble dyes are preferred. As the water-soluble dyes, any of acidic

dyes, direct dyes, basic dyes, reactive dyes or edible dyes may be selected and used, mainly from the perspective of solubility in water, coloration and color fastness.

Specifically, the yellow water-soluble dyes may be enumerated by, for example, C.I. Acid Yellow 17, 23, 42, 44, 79 and 142, C.I. Food Yellow 3 and 4, C.I. Direct Yellow 1, 12, 24, 26, 33, 44, 50, 86, 120, 132, 142 and 144, C.I. Direct Orange 26, 29, 62 and 102, C.I. Basic yellow 1, 2, 11, 13, 14, 15, 19, 21, 23, 24, 25, 28, 29, 32, 36, 40, 41, 45, 49, 51, 53, 63, 64, 65, 67, 70, 73, 77, 87 and 91, C.I. Reactive Yellow 1, 5, 11, 13, 14, 20, 21, 22, 25, 40, 47, 51, 55, 65 and 67.

The magenta water-soluble dyes may be enumerated by, for example, C.I. Acid Red 1, 8, 13, 14, 18, 26, 27, 35, 37, 42, 52, 82, 87, 89, 92, 97, 106, 111, 114, 115, 134, 186, 249, 254 and 289, C.I. Food Red, 7, 9 and 14, C.I. Direct Red 1, 4, 9, 13, 17, 20, 28, 31, 39, 80, 81, 83, 89, 225 and 227, C.I. Basic Red 2, 12, 13, 14, 15, 18, 22, 23, 24, 27, 29, 35, 36, 38, 39, 46, 49, 51, 52, 54, 59, 68, 69, 70, 73, 78, 82, 102, 104, 109 and 112, and C.I. Reactive Red 1, 14, 17, 25, 26, 32, 37, 44, 46, 55, 60, 66, 74, 79, 96 and 97.

The cyan water-soluble dyes may be enumerated by, for example, C.I. Acid Blue 9, 29, 45, 92 and 249, C.I, Direct Blue 1, 2, 6, 15, 22, 25, 71, 76, 79, 86, 87, 90, 98, 163, 165, 199 and 202, C.I. Basic Blue 1, 3, 5, 7, 9, 21, 22, 26, 35, 41, 45, 47, 54, 62, 65, 66, 67, 69, 75, 77, 78, 89, 92, 93, 105, 117, 120, 122, 124, 129, 137, 141, 147 and 155, and C.I. Reactive Blue 1, 2, 7, 14, 15, 23, 32, 35, 38, 41, 63, 80 and 95.

The black water-soluble dyes may be enumerated by, for example, C.I. Acid Black 1, 2, 7, 24, 26 and 94, C.I. Food Black 1 and 2, C.I. Direct Black 19, 22, 32, 38, 51, 56, 71, 74, 75, 77, 154, 178 and 171, C.I. Basic Black 2, 8, and C.I. Reactive Black 3, 4, 7, 11, 12 and 17.

The amount of addition of the aforementioned colorant to the ink 2 ranges between 1 mass wt% and 10 mass wt%, preferably between 3 mass wt% and 5 mass wt%, with respect to the total mass weight of the ink 2, and is determined in consideration of, for example, the viscosity, drying performance, emitting stability, coloration properties of the ink and preservation stability of the printed product.

Although the ink 2 is used dissolved in water, as a solvent, it is also possible to use well-known organic solvents, for the purpose of imparting desirable physical properties to the ink 2, improving dispersibility and solubility in water of the colorant, and preventing the ink 2 from drying, along with the aforementioned organic compounds which provide for a preset range of the 0-second dynamic surface tension..

More specifically, the organic solvents, usable as solvents, may be enumerated by, for example, polyhydric alcohols, such as ethylene glycols, diethylene glycols, triethylene glycols or polyethylene glycols, nitrogen-containing heterocyclic compounds, such as N-methyl-2-pyrrolidone, N-hydroxyethyl-pyrrolidone, 1,3- dimethyl imidazoylidinone, ε-caprolactam or γ-butyrolactone, amides, such as formamide, N-methyl formamide or N,N-dimethyl formamide, amines, such as monoethanol amine, diethanolamine, triethanolamine, monoethylamine, diethylamine or triethylamine, and sulfur-containing compounds, such as dimethyl sulfoxides or sulforane.

The content of the aforementioned organic solvents in the ink 2 is 5 to 50 wt% and preferably 10 to 35 wt%, based on the total weight of the ink 2. It is determined in consideration of the viscosity, drying performance and emission stability of the ink 2, as in the case of the colorant material.

It is noted that pH adjustment agents, chelate reagents, antiseptics and rust-proofing agents may be added to the ink 2 in addition to the organic compound which provides for a preset range of the 0-second dynamic surface tension, alkylene oxide adducts of polyhydric alcohols or EOPOEOs, which provide for a preset range of the static surface tension, colorant materials, solvents, or conventional known surfactants.

Specifically, the pH adjustment agents may be enumerated by amines, such as diethanolamine or triethanolamine, hydroxides of alkali metals, such as lithium hydroxide, sodium hydroxide or potassium hydroxide, ammonium hydroxide, quaternary ammonium hydroxide, quaternary phosphonium hydroxide, and carbonates of alkali metals, such as lithium carbonate, sodium carbonate or potassium carbonate. These may be used alone or in combination. The chelate reagents may be enumerated by, for example, ethylene diamine sodium tetraacetate, nitrilo sodium triacetate, hydroxyethyl ethylene diamine sodium triacetate, diethylene triamine sodium pentaacetate and uramil sodium diacetate. These may be used alone or in combination. The antiseptics may be enumerated by, for example, sodium dehydroacetate, sodium sorbinate, 2-pyridinethiol-1-oxide sodium, sodium benzoate, and pentachlorophenol sodium. These may be used alone or in combination. The rust-proofing agents may be enumerated by, for example, acidic sulfites, sodium thiosulfate, ammon thioglycolate, diisopropyl ammonium nitrite, pentaerythritol tetranitrate, and dicyclohexyl ammonium nitrite. These may be used alone or in combination. The ink 2 may further be added to with UV ray absorber proposed in, for example the JP Laid-Open Patent Publication 9-227811.

In preparing the ink 2 of the above structure, the organic compound which will provide for a preset range of the 0-second dynamic surface tension, the alkylene oxide adduct of the polyhydric alcohol or EOPOEO which will provide for a preset range of the static surface tension, the colorant material, solvent or conventional known surfactants are mixed in a preset mixing ratio. The resulting mixture then is agitated and dispersed with e.g. a screw to prepare the ink, at an ambient temperature or as the mixture is heated to 40 to 80ºC.

Referring to Figs.2 and 3, the yellow ink, magenta ink M, cyan ink and the black ink K, together representing the ink 2, mentioned above, are contained in ink tanks 5y, 5m, 5c and 5k, respectively.

The head cartridge 3, that may be mounted to and dismounted from the main printer body unit 2 making up the printer 1, and the ink tanks 5y, 5m, 5c and 5k, that may be mounted to and dismounted from the head cartridge 3, will now be explained with reference to the drawings.

The head cartridge 3 for printing on the recording paper sheet P is loaded from the side of the upper surface of the main printer body unit 4, that is, from the direction of an arrow A in Fig.1, and emits the ink 2 onto the recording paper sheet P, fed by the paper sheet supplying/ discharging mechanism 64, in order to emit the ink 2 to effect printing.

The head cartridge 3 pulverizes the ink 2 into extremely fine particles, by the pressure generated by pressure generating means of, for example the electro-thermal transducing type device or an electro-mechanical transducing type device, to spray the ink 2 as fine droplets onto the major surface of the support, such as the recording paper sheet P. Specifically, the head cartridge 3 includes a main cartridge body unit 21, on which are loaded the ink tanks 5y, 5m, 5c and 5k, as vessels, each of which is charged with the ink 2, as shown in Figs.2 and 3. In the following, the ink tanks 5y, 5m, 5c and 5k are also simply referred to as an ink tank 5.

The ink tank 5, which may be mounted to and dismounted from the head cartridge 3, includes a tank vessel 11, prepared on injection molding e.g. a resin material, such as polypropylene, exhibiting strength and resistance against the ink. The tank vessel 11 is formed to a substantially rectangular shape, having a longitudinal dimension substantially equal to the width-wise size of the recording paper sheet P, for thereby increasing the capacity of the ink stored therein.

Specifically, the tank vessel 11, forming the ink tank 5, is provided with an ink reservoir 12, accommodating the ink 2, an ink supplying unit 13 for supplying the ink 2 from the ink reservoir 12 into the main cartridge body unit 21 of the head cartridge 3, a series of communication ports 14 for taking in air from outside into the ink reservoir 12, and an air inlet duct 15 for introducing air taken in via communication ports 14 into the ink reservoir 12. The tank vessel is also provided with an ink storage 16 for transient storage of the ink 2 between the communication ports 14 and the air inlet duct 15, a retention lug 17 for retaining the ink tank 5 by the main cartridge body unit 21 and an engagement step 18.

The ink reservoir 12, formed of a material of high air tightness, delimits a spacing in which to accommodate the ink 2. The ink reservoir 12 is formed to a substantially rectangular shape having a long-side dimension substantially equal to the width-wise size of the recording paper sheet P, used for printing, that is, along the direction indicated by arrow W in Fig.3.

The ink supplying unit 13 is provided at a mid part on the lower surface of the ink reservoir 12. This ink supplying unit 13 is a substantially protuberantly-shaped nozzle kept in communication with the ink reservoir 12. The distal end of the nozzle is fitted to a connecting part 26 of the head cartridge 3 as later explained to connect the tank vessel 11 of the ink tank 2 with the main cartridge body unit 21 of the head cartridge 3.

Referring to Figs.6A and 6B, the ink supplying unit 13 is provided with a supply port 13b for supplying the ink 2 to a bottom surface 13a of the ink tank 5. On this bottom surface 13a, there are provided a valve 13c for opening/ closing the supply port 13b, a coil spring 13d for biasing the valve 13c in a direction of closing the supply port 13b, and an opening/closing pin 13e for opening/ closing the valve 13c. In a stage prior to loading the ink tank 5 to the main cartridge body unit 21 of the head cartridge 3, the supply port 13b, connected to the connecting part 26 of the head cartridge 3 for supplying the ink 2, is closed by the valve 13c being biased in a direction of closing the supply port 13b, under the bias of the coil spring 13d, as a biasing member, as shown in Fig.6A. When the ink tank 5 is loaded on the main cartridge body unit 21, the opening/closing pin 13e is uplifted in a direction opposite to the biasing direction of the coil spring 13d, by an upper part of the connecting part 26 of the main cartridge body unit 21 forming the head cartridge 3, as shown in Fig.6B. The opening/closing pin 13e, thus uplifted, uplifts the valve 13c, against the bias of the coil spring 13d, for opening the supply port 13b. This connects the ink supplying unit 13 of the ink tank 5 to the connecting part 26 of the head cartridge 3, for establishing communication between the ink reservoir 12 and an ink well 31 to enable the ink 2 to be supplied to the ink well 31.

When the ink tank 5 is extracted from the connecting part 26 of the head cartridge 3, that is, when the ink tank 5 is dismounted from a loading part 22 of the head cartridge 3, the uplifted state of the valve 13c by the opening/closing pin 13e is canceled, so that the valve 13c is moved in the biasing direction of the coil spring 13d to close the supply port 13b. This prohibits the ink 2 from leaking from the inside of the ink reservoir 12 even in a state in which the distal end of the ink supplying unit 13 is directed downwards just before the ink tank 5 is loaded on the main cartridge body unit 21. When the ink tank 5 is extracted from the main cartridge body unit 21, the valve 13c immediately closes the supply port 13b, and hence the ink 2 may be prohibited from leaking from the distal end of the ink supplying unit 13.

Referring to Fig.3, the communication port 14 is an air take-in port for taking in air from outside the ink tank 5 into the ink reservoir 12. The communication port 14 is provided at a preset location in the upper surface of the tank vessel 11 facing the outside when the ink tank is loaded on the loading part 22, here at a mid part on the upper surface of the vessel, so that the communication port faces the outside to take in outside air even when the ink tank 5 is mounted on the loading part 22. The communication port 14 takes in air into the ink tank in an amount corresponding to a decreased amount of the ink 2 in the ink reservoir 12 when the ink tank 5 is loaded on the main cartridge body unit 21 and the ink 2 has flown down from the ink reservoir 12 towards the main cartridge body unit 21.

The air inlet duct 15 sets up communication between the ink reservoir 12 and the communication port 14 to

introduce air taken in at the communication port 14 into the ink reservoir 12. Thus, even if, when the ink tank 5 is loaded on the main cartridge body unit 21, the ink 2 is supplied to the main cartridge body unit 21 of the head cartridge 3, so that the amount of the ink 2 in the ink reservoir 12 is decreased to decrease the internal pressure, air may be introduced via air inlet duct 15 into the ink reservoir 12, so that the internal pressure is maintained in a state of equilibrium to assure proper supply of the ink 2 into the main cartridge body unit 21.

The ink storage 16 is provided between the communication port 14 and the air inlet duct 15 for transiently storing the ink 2 so that, when the ink 2 has leaked out from the air inlet duct 15 communicating with the ink reservoir 12, the ink 2 will not flow outwards precipitously. This ink storage 16 is lozenge-shaped, with the long diagonal line of the lozenge shape extending along the longitudinal direction of the ink reservoir 12. The inlet duct 15 is located at an apex point of the ink storage, lying at a lowermost point of the ink reservoir 12, that is, at the lower end of the short diagonal line of the lozenge shape, so that the ink 2 intruded from the ink reservoir 12 may be restored into the ink reservoir 12. The communication port 14 is provided at the uppermost end of the short diagonal line of the lozenge shape of the ink storage unit 16 so that the ink 2 introduced from the ink reservoir 12 will hardly leak to outside through the port 14.

The retention lug 17 is provided on one lateral short side of the ink tank 5 and is engaged in an engagement opening 24a formed in a latch lever 24 of the main cartridge body unit 21 of the head cartridge 3. This retention lug 17 has an upper surface formed as a planar surface extending substantially at right angles to the lateral surface of the ink reservoir 12, while having a lower surface inclined from the lateral surface to the upper surface.

The engagement step 18 is provided at an upper part of the ink tank 5 on the opposite lateral side with respect to the lateral side carrying the retention lug 17. The engagement step 18 is made up by an inclined surface 18a, connecting to the upper surface of the ink vessel 11, and by a planar surface 18b consecutive to the other end of the inclined surface 18a and extending substantially parallel to the upper surface of the ink vessel 11. Since the ink tank 5 is provided with the engagement step 18, the lateral surface thereof provided with the planar surface 18b is lower by one step than the upper surface of the ink vessel 11. It is by this step that the ink tank is engaged with an engagement part 23 of the main cartridge body unit 21. The engagement step 18 is provided on the inserting side lateral surface of the ink tank when the ink tank is inserted into the loading part 22 of the head cartridge 3. The engagement step is engaged with the engagement part 23 of the loading part 22 of the head cartridge 3 so as to act as a fulcrum point of rotation when the ink tank 5 is mounted on the loading part 22.

The above-described ink tank 5 includes, in addition to the above component parts, a residual ink quantity detection unit for detecting the residual quantity of the ink 2 in the ink reservoir 12, and a discriminating unit for discriminating the ink tanks 5y, 5m, 5c and 5k.

The head cartridge 3, on which to load the ink tanks 5y, 5m, 5c and 5k, accommodating the yellow, magenta, cyan and black inks 2, respectively, as described above, will now be explained in detail.

The head cartridge 3 is made up by the aforementioned ink tanks 5 and the main cartridge body unit 21, as shown in Figs.2 and 3. The ink tanks 5 are mounted on the main cartridge body unit 21. The main cartridge body unit 21 includes loading zones 22y, 22m, 22c and 22k, on which are loaded the ink tanks 5. It is noted that, when these loading zones are denoted in their entirety, they are simply referred to below as the loading part 22. The main cartridge body unit 21 also includes the engagement part 23 and the latch lever 24 for securing the ink tank 5, a biasing member 25 for biasing the ink tank 5 in a takeout direction, the connecting part 26 connected to the ink supplying unit 13 so as to be supplied with the ink 2, an ink emitting head 27 for emitting the ink 2, and a head cap 28 for protecting the ink emitting head 27.

The loading part 22, on which to load the ink tanks 5, has a substantially recessed upper surface for use as an inserting/ ejecting opening for the ink tank 5. In this recessed upper surface, there are arrayed the four ink tanks 5 in juxtaposition in a direction substantially perpendicular to the width of the recording paper sheet P, that is, in a direction along the running direction of the recording paper sheet P. The loading part 22, in which are loaded the ink tanks 5, is of a length elongated along the printing width, as is the ink tank 5. The ink tanks 5 are housed and loaded in the main cartridge body unit 21.

The loading part 22 is a zone in which the ink tanks 5 are loaded, as shown in Fig.2. The zones of the loading part, on which are loaded the ink tank 5y for yellow, the ink tank 5m for magenta, the ink tank 5c for cyan and the ink tank 5k for black, are labeled 22y, 22m, 22c and 22k, respectively. The loading zones 22y, 22m, 22c and 22k are separated from each other by partitions 22a. Meanwhile, the ink tank 5k for black is of a larger thickness in order to accommodate a larger quantity of the ink in view of the generally larger consumption of the black ink, and hence the ink tank 5k for black is broader in width than the remaining ink tanks. Consequently, the loading zone 22k is broader in width than the remaining loading zones 22y, 22m and 22c in keeping with the thickness of the ink tank 5k.

The opening end of the loading part 22, on which are loaded the ink tanks 5, is provided with the engagement part 23, as shown in Fig.3. This engagement part 23 is provided at a longitudinal end of the loading part 22 so as to be engaged with the engagement step 18 of the ink tank 5. The ink tank 5 may be mounted on the loading part 22 by obliquely inserting the ink tank 5 into the loading part 22, with the engagement step 18 of the ink tank 5 first. The side of the ink tank 5 not provided with the engagement step 18 may then be rotated towards the loading part 22, with the

location of engagement of the engagement step 18 of the ink tank 5 with the engagement part 23 as the fulcrum point of rotation, for loading the ink tank on the loading part 22. In this manner, the ink tank 5 may readily be mounted on the loading part 22.

The latch lever 24 is formed by bending a spring sheet and is provided on the lateral surface of the loading part 22 opposite to the engagement part 23, that is, on the opposite longitudinal end of the loading part 22. The proximal end of the latch lever 24 is provided as one with the bottom surface of the opposite lateral surface along the longitudinal end of the loading part 22 so that the distal end thereof is resiliently flexed in a direction towards and away from the aforementioned lateral surface. The distal end of the latch lever 24 is provided with an engagement opening 24a. The latch lever 24 is resiliently deflected the instant the ink tank 5 is mounted on the loading part 22, with the retention lug 17 of the ink tank 5 then engaging with the engagement opening 24a to prevent the ink tank 5 from becoming detached from the loading part 22 on which has been loaded the ink tank.

The biasing member 25 is a spring sheet provided on the bottom surface towards the lateral surface provided with the engagement step 18 of the ink tank 5, with the spring sheet being bent for biasing the ink tank 5 in the direction of dismounting the ink tank 5. The biasing member 25 includes a top formed by bending and may be resiliently deflected in a direction towards and away from the aforementioned bottom surface, in order to thrust the bottom surface of the ink tank 5 at the top thereof to bias the ink tank 5 loaded on the loading part 22 in a direction of being dismounted from the loading part 22. When the retention lug 17 is disengaged from the engagement opening 24a of the latch lever 24, the biasing member 25 ejects the ink tank 5 from the engagement part 23.

On mid parts along the longitudinal direction of the loading zones 22y, 22m, 22c and 22k, there is provided the connecting part 26 the ink supplying units 13 of the ink tanks 5y, 5m, 5c and 5k are connected to when the ink tanks 5y, 5m, 5c and 5k are mounted to the loading zones 22y, 22m, 22c and 22k, respectively. This connecting part 26 operates as an ink supply duct for delivery of the ink 2 from the ink supplying unit 13 of the ink tank 5 mounted on the loading part 22 to the ink emitting head 27 provided to the bottom surface of the main cartridge body unit 21.

Specifically, the connecting part 26 includes an ink well 31 for storing the ink 2 supplied from the ink tank 5, a sealing member 32 for sealing the ink supplying unit 13 connected to the connecting part 26, a filter 33 for removing impurities in the ink 2 and a valving mechanism 46 for opening/closing the supply duct to the ink emitting head 27, as shown in Fig.7.

The ink well 31 is a spacing connecting to the ink supplying unit 13 and in which the ink 2 is stored. The sealing member 32 is provided on the top of the ink well 31 and, when the ink supplying unit 13 of the ink tank 5 is connected to the ink well 31 of the connecting part 26, the sealing member hermetically seals the boundary between the ink well 31 and the ink supplying unit 13 in order to prevent the ink 2 from leaking to outside. The filter 33 removes dust and dirt, eventually mixed into the ink 2, such as during the mounting and the dismounting of the ink tank 5, and is provided downstream of the ink well 31.

Referring to Figs.8A and 8B, the valving mechanism 34 includes an ink inlet duct 41, the ink 2 is supplied to from the ink well 31, an ink chamber 42, the ink 2 flows to from the ink inlet duct 41, an ink effluent duct 43, on which the ink 2 flows out from the ink chamber 52, and an opening 44 provided between the ink inlet duct 41 and the ink effluent duct 43 of the ink chamber 42. The valving mechanism also includes a valve 45 for opening/closing the opening 44, a biasing member 46 for biasing the valve 45 in the direction of closing the opening 44, and a negative pressure adjustment screw 47 for adjusting the biasing force of the biasing member 46. The valving mechanism also includes a valve shaft 48 connected to the valve 45 and a diaphragm 49 connected to the valve shaft 48.

The ink inlet duct 41 is a supply duct connecting to the ink reservoir 12 for supplying the ink in the ink reservoir 12 in the ink tank 5 through the ink well 31 to the ink emitting head 27. The ink inlet duct 41 is provided for extending from the bottom side of the ink well 31 to the ink chamber 42. The ink chamber 42 is a substantially rectangular spacing, formed as one with the ink inlet duct 41, the ink effluent duct 43 and with the opening 44. The ink 2 flows via the ink inlet duct 41 into the ink chamber 42 to flow out through the opening 44 and the ink effluent duct 43. The ink effluent duct 43, supplied with the ink 2 from the ink chamber 42 through the opening 44, connects to the ink emitting head 27. The ink effluent duct 43 extends from the bottom side of the ink chamber 42 to the ink emitting head 27.

The valve 45 closes the opening 44 to separate the side of the ink inlet duct 41 and the side of the ink effluent duct 43 from each other, and is provided in the ink chamber 42. The valve 45 is moved in the up-and-down direction under the biasing force of the biasing member 46, the force of restoration of the diaphragm 49, connected to the valve shaft 48, and under the negative pressure of the ink 2 on the side of the ink effluent duct 43. When at the lower end of the valve stroke, the valve 45 closes the opening 44 for separating the ink inlet duct 41 and the side of the ink effluent duct 43 of the ink chamber 42 from each other for interrupting the supply of the ink 2 to the ink effluent duct 43. When located at the lower end of the valve stroke, against the bias of the biasing member 46, the valve 45 does not separate the ink inlet duct 41 and the side of the ink effluent duct 43 of the ink chamber 42 from each other to enable the ink 2 to be supplied to the ink emitting head 27. Although there is no limitation to the sort of the material of the valve 45, it is formed e.g. of an elastic rubber, such as elastomer, in order to assure sufficient closing characteristics.

The biasing member 46 is e.g. a compression coil spring and interconnects the negative pressure adjustment

screw 47 and the valve 45 between the upper surface of the valve 45 and the upper surface of the ink chamber 42 to bias the valve 45 in a direction of closing the opening 44 under its force of elasticity. The negative pressure adjustment screw 47 adjusts the biasing force of the biasing member 46. By adjusting the negative pressure adjustment screw 47, it is possible to adjust the biasing force of the biasing member 46. By so doing, the negative pressure of the ink 2 for actuating the valve 45, configured for opening/closing the opening 44, may be adjusted by the negative pressure adjustment screw 47, as will be explained in detail subsequently.

The valve shaft 48 has its one end connected to the valve 45 and its other end connected to the diaphragm 49 for producing concerted movements thereof. The diaphragm 49 is a thin sheet of an elastic material connected to the opposite side end of the valve shaft 48. This diaphragm 49 includes a major surface towards the ink effluent duct 43 of the ink chamber 42 and the opposite side major surface contacting with atmospheric air, and is elastically deflected towards the atmospheric air side and towards the ink effluent duct 43 side under the atmospheric pressure and under the negative pressure of the ink 2.

In the above-described valving mechanism 34, the valve 45 is thrust for closing the opening 44 of the ink chamber 42 under the bias of the biasing member 46 and under the biasing force of the diaphragm 49, as shown in Fig. 8A. When the ink 2 has been emitted from the ink emitting head 27, so that the negative pressure of the ink 2 in the ink chamber 42 towards the ink effluent duct 43, divided from the ink chamber by the opening 44, is increased, the diaphragm 49 is uplifted by the atmospheric pressure under the negative pressure of the ink 2, for uplifting the valve 45, along with the valve shaft 48, against the bias of the biasing member 46, as shown in Fig.8B. At this time, the opening 44 between the ink inlet duct 41 and the ink effluent duct 43 of the ink chamber 42 is opened to supply the ink 2 from the ink inlet duct 41 towards the ink effluent duct 43. When the negative pressure of the ink 2 is decreased, the diaphragm 49 is restored to its original shape, the biasing force of the biasing member 46 lowers the valve 45, along with the valve shaft 48, for closing the ink chamber 42. Thus, in the valving mechanism 34, the above-described operation is repeated each time the ink 2 is emitted to increase its negative pressure.

Moreover, with the present connecting part 26, the amount of the ink 2 in the ink reservoir 12 is decreased when the ink 2 in the ink reservoir 12 is supplied to the ink chamber 42. At this time, the atmospheric air is introduced into the ink tank 5 from the air inlet duct 15. The air introduced into the ink tank 5 is forwarded to an upper part of the ink tank 5. This restores the state which prevailed prior to emission of the ink droplets i from nozzles 52a, as later explained, to set up a state of equilibrium. In this state of equilibrium, there is scarcely any ink 2 contained in the air inlet duct 15.

The connecting part 26 is of a complicated structure, as described above. It is through a duct of this complicated structure that the ink 2 is transported. In the ink 2, there is contained at least an organic compound which provides for the aforementioned 0-second dynamic surface tension not less than 30 mN/m and not more than 40 mN/m, described above, for improving the wettability of the ink 2 with respect to the inner duct wall. Moreover, fine bubbles of the ink 2 are suppressed from being generated in the ink 2 during opening/ closure of the valve 34e and during movement of the ink 2 on the duct. Hence, the ink 2, not mixed with fine bubbles, is supplied to the ink emission head 27.

Furthermore, since the alkylene oxide adduct of a polyhydric alcohol which provides for the static surface tension of not less than 30 mN/m and not more than 35 mN/m, is contained in the ink 2, along with the organic compound which provides for the 0-second dynamic surface tension of the ink 2 of not less than 30 mN/m and not more than 40 mN/m, it is possible to suppress fine bubbles from being generated in the ink 2 more efficaciously than when only the organic compound which provides for the 0-second dynamic surface tension of the preset range is contained in the ink 2.

Moreover, in case of using the ink 2 containing the EOPOEO, in place of the alkylene oxide adduct of the polyhydric alcohol, along with the organic compound which provides for the 0-second dynamic surface tension of the ink 2 of not less than 30 mN/m and not more than 40 mN/m, generation of fine bubbles in the ink 2 can again be suppressed more extensively than in case only the organic compound which provides for the 0-second dynamic surface tension of the preset range is contained in the ink 2.

The ink emitting head 27 is arranged for extending along the bottom surface of the main cartridge body unit 21, and a plurality of nozzles 52a, as ink emission ports for emitting ink droplets i, supplied from the connecting part 26, are arranged as shown in Fig.7. Specifically, the nozzles 52a are arrayed substantially in a line along the width of the recording paper sheet P, that is, in a direction indicated by arrow W in Fig.7, from one color to the next.

A head cap 28 is a cover provided for protecting the ink emitting head 27, as shown in Fig.2. The head cap is retreated from the ink emitting head 27 during the printing operation. The head cap 28 is provided with a pair of engagement ribs 28a on both ends along the opening/ closing direction as indicated by arrow W in Fig.2, and with a cleaning roll 28b, extending along the longitudinal direction, for sucking off excess ink 2 deposited on an ink emitting surface 27a of the ink emitting head 27. The engagement ribs 28a of the head cap 28 are engaged in a pair of engagement grooves 27b, formed in the ink emitting surface 27a of the ink emitting head 27 for extending substantially at right angles to the direction of the arrow W in Fig.2, so that the head cap is moved along the engagement grooves 27b for opening/closure along the short side of the ink tank 5, that is, in a direction substantially at right angles to the direction W in Fig.2. With the head cap 28, excess ink 2 may be sucked off during the opening/ closure operation, by the cleaning roll 28b being run

in rotation in abutting contact with the ink emitting surface 27a of the ink emitting head 27, thereby cleaning the ink emitting surface 27a of the ink emitting head 27. This cleaning roll 28b is formed of a highly hygroscopic material, specifically, a sponge, a non-woven cloth or a woven cloth. Except during the printing operation, the head cap 28 closes the ink emitting surface 27a to prevent the drying of the ink 2 in the ink emitting head 27.

The above-described head cartridge 3 includes, in addition to the above components, a residual quantity detection unit for detecting the residual quantity of the ink 2 in the ink tank 5, and a discriminating unit for discriminating the presence/absence of the ink 2 when the ink supplying unit 13 is connected to the connecting part 26.

Referring to Fig.9, the ink emitting head 27 includes a printed circuit board 51, as a base, a nozzle sheet 52, provided with plural nozzles 52a, a film 53 for separating the printed circuit board 51 from the nozzle sheet 52 from one of the nozzles 52a to the next, an ink liquid chamber 54 for pressurizing the ink 2 supplied via an ink duct 43, a resistance heater 55 for heating the ink 2 supplied to the ink liquid chamber 54, and an ink duct 56 for supplying the ink 2 to the ink liquid chamber 54.

The printed circuit board 51 forms a control circuit, formed by a logic IC (integrated circuit) or a driver transistor, on a semiconductor wafer, formed e.g. of silicon, and forms an upper surface of the ink liquid chamber 54.

The nozzle sheet 52 is a sheet material, with a thickness on the order of 10 to 15 μm, and is provided with the nozzle 52a, reduced in diameter towards the emitting surface 27a, and having a diameter on the ink emitting surface 27a of the order of 20 μm. The nozzle sheet is arranged on the opposite side of the printed circuit board 51, with the film 53 in-between, for forming the lower surface of the ink liquid chamber 54.

The film 53 is a dry film resist cured on light exposure, for example, and is formed for surrounding each film 52a except the communicating area with the ink duct 43. The film 53 is interposed between the printed circuit board 51 and the nozzle sheet 52 for forming the lateral surface of the ink liquid chamber 54.

The ink liquid chamber 54, surrounded by the printed circuit board 51, nozzle sheet 52 and the film 53, forms the spacing for pressurizing the ink 2 supplied from the ink duct 43 from one of the nozzles 52a to the next.

The resistance heater 55 is arranged on the printed circuit board 51, facing the ink liquid chamber 54, and is electrically connected to e.g. a control circuit provided to the printed circuit board 51. The resistance heater 55 is heated under control by e.g. the control circuit to heat the ink 2 within the ink liquid chamber 54.

The ink duct 56 is connected to the ink effluent duct 43 of the connecting part 26 and is supplied with the ink 2 from the ink tank 5 connected to the connecting part 26 to supply the ink 2 to each ink liquid chamber 54 communicating with the ink duct 56. That is, the ink duct 56 communicates with the connecting part 26. Thus, the ink 2, supplied from the ink tank 5, flows into the ink duct 56 so as to be charged into the ink liquid chamber 54.

The above-described sole ink emitting head 27 is provided with the resistance heater 55, from one ink liquid chamber 54 to the next, and includes approximately 100 to 5000 ink liquid chambers 54, provided each with the resistance heater 55, from one color ink tank 5 to the next. In the ink emitting head 27, the resistance heaters 55 of the ink liquid chambers 54 are selectively heated, under a command from a controller 78 of the printer 1, as later explained, to emit the ink 2 in the ink liquid chamber 54, associated with the heated resistance heater 55, from the nozzle 52a, associated with the ink liquid chambers 54, in the form of ink liquid droplets i.

Specifically, with the ink emitting head 27, the control circuit of the printed circuit board 51 actuates the resistance heater 55, in a controlled manner, to supply the pulse current for e.g. 1 to 3 μsec to the selected resistance heater 55. By so doing, the resistance heater 55 of the ink emitting head 27 is heated quickly. Then, an air bubble b is generated in the ink 2 in the ink liquid chamber 54, contacting with the resistance heater 55, in the ink emitting head 27, as shown in Fig.10A. In the ink emitting head 27, the air bubble b is expanded to pressurize the ink 2, with the extruded ink 2 being emitted as the ink liquid droplet i from the nozzle 52a, as shown in Fig.13b. After emission of the ink liquid droplet i, the ink 2 is supplied through the ink duct 43 into the ink liquid chamber 54, in the ink emitting head 27, so that the state prior to emission is restored.

Meanwhile, the above-described ink emitting head 27 is formed by forming the film 53 on one major surface of the printed circuit board 51, in its entirety, shaping the film 53 in keeping with the ink liquid chamber 54, by applying the photolithographic technique, and by laminating the nozzle sheet 52 thereon.

With the above-described ink emitting head 27, the number of heating sites for the ink is increased with the number of the resistance heaters 55, so that fine bubbles tend to be generated. However, at least the organic compound, which provides for the 0-second surface tension of the ink 2 in the range from not less than 30 mN/m to not more than 40 mN/m, is contained in the ink 2, so that the ink 2 is improved in wettability with respect to the inner wall of the ink liquid chamber 54. Moreover, fine bubbles are prevented from being generated during movement of the ink 2 on the ink duct. Thus, emission troubles, such as non-emission of ink liquid droplets i or warped emission, may be prevented from occurring.

Additionally, with the present ink emission head 27, in case the ink 2 containing the alkylene oxide adduct of the polyhydric alcohol, which provides for the static surface tension in the range from not less than 30 mN/m to 35 mN/m, in addition to the organic compound, which provides for the 0-second surface tension of the ink 2 in the range from not less than 30 mN/m to not more than 40 mN/m, is emitted from the nozzle 52a, it becomes possible to suppress the fine

bubbles from being generated in the ink 2 more effectively than in case only the organic compound, which provides for the 0-second surface tension of the ink 2 in the preset range is contained in the ink, thereby further suppressing the emission troubles of the ink liquid droplets i.

Moreover, if the ink 2 containing the EOPOEO in place of the alkylene oxide adduct of the polyhydric alcohol, along with the organic compound which provides for the 0-second surface tension of the ink 2 in the range from not less than 30 mN/m to not more than 40 mN/m, is used with the ink emitting head 27, it is possible to suppress generation of fine bubbles in the ink 2 further to suppress emission failure of the ink liquid droplets further.

Referring to the drawings, the main printer body unit 4, forming the printer 1, on which to mount the head cartridge 3, constructed as described above, will now be explained.

Referring to Figs.1 and 11, the main printer body unit 4 includes a head cartridge loading part 61, the head cartridge 3 is mounted to, a head cartridge holding mechanism 62 for holding and securing the head cartridge 3, a head cap opening/ closing mechanism 63, a paper sheet supplying/ discharging mechanism 64 for feeding/ discharging the recording paper sheet P, a paper sheet feed port 65 for supplying the recording paper sheet P to the paper sheet supplying/ discharging mechanism 64, and a paper sheet discharge port 66 for outputting the recording paper sheet P from the paper sheet supplying/ discharging mechanism 64.

The head cartridge loading part 61 is a recess in which to load the head cartridge 3. The head cartridge 3 is loaded so that the ink emitting surface 27a of the ink emitting head 27 will be substantially parallel to the paper sheet surface of the recording paper sheet P, in order to effect printing on the running recording paper sheet P in accordance with the data for printing. There are occasions where the head cartridge 3 needs to be exchanged due to stop-up of the ink in the ink emitting head 27. Since the head cartridge 3 is a consumable commodity, even if it does not have to be exchanged so often as the ink tank 5, the head cartridge 3 is detachably retained by the head cartridge holding mechanism 62 relative to the head cartridge loading part 61.

The head cartridge holding mechanism 62 is used for detachably holding the head cartridge 3 on the head cartridge loading part 61, and is designed and constructed for holding and securing the head cartridge 3, with the head cartridge 3 pressuring against the reference surface 4a in the main printer body unit 4, with a knob 62a provided to the head cartridge 3 being retained in position by a biasing member, such as a spring, provided in a retention opening 62b of the main printer body unit 4.

The head cap opening/ closing mechanism 63 includes a driving unit for opening/closing the head cap 28 of the head cartridge 3. For printing, the head cap 28 is opened for exposing the ink emitting head 27 to the recording paper sheet P and, when the printing is finished, the head cap 28 is closed to protect the ink emitting head 27.

The paper sheet supplying/ discharging mechanism 64 includes a driving unit for transporting the recording paper sheet P. Specifically, the paper sheet supplying/discharging mechanism transports the recording paper sheet P, supplied from the paper sheet feed port 65, to the ink emitting head 27 of the head cartridge 3, and transports the recording paper sheet P, on which the ink liquid droplets i, supplied from the nozzles 52a, have been deposited, to the paper sheet discharge port 66 and thence to outside the device. The paper sheet feed port 65 is an opening for supplying the recording paper sheet P to the paper sheet supplying/ discharging mechanism 64, and is able to stock plural recording paper sheets P in stacked up state on e.g. a tray 65a. The paper sheet discharge port 66 is an opening through which the recording paper sheet P, on which the ink liquid droplets i have been deposited by way of printing, are discharged.

A control circuit 71, shown in Fig.12, for controlling the printing by the printer 1, designed and constructed as described above, will now be explained with reference to the drawings.

The control circuit 71 includes a printer controller 72 for controlling the driving of the head cap opening/ closing mechanism 63 and the paper sheet supplying/ discharging mechanism 64 of the main printer body unit 4, an emission controller 73 for controlling e.g. the current supplied to the ink emitting head 27, associated with each color of the ink i, and an alarm unit 74 for indicating the residual quantity of the ink i of each color. The control circuit also includes an input/output terminal 75 for inputting/ outputting signals for an external device and a ROM (Read Only Memory) 76 having recorded e.g. a control program thereon. The control circuit also includes a RAM (Random Access Memory) 77 for transiently recording and reading out a control program as necessary, and a controller 78 for controlling various components.

The printer controller 72 actuates a driving motor of the head cap opening/closing mechanism 63, based on a control signal from the controller 78, in order to control the head cap opening/ closing mechanism for opening/ controlling the head cap 28. The printer controller 52 also actuates a driving motor of the paper sheet supplying/ discharging mechanism 64, based on a control signal from the controller 78, in order to control the paper sheet supplying/ discharging mechanism 64 to feed the recording paper sheet P from the paper sheet feed port 65 of the main printer body unit 4 to discharge the printed paper sheet P from the paper sheet discharge port 66 after printing.

The emission controller 73 is an electrical circuit including, for example, a switching element for on/off controlling the electrical connection to an external power supply, adapted for supplying the pulse current to the resistance heater 55, provided to the ink emitting head 27, a resistor for adjusting the value of the pulse current supplied to the resistance heater 55, and a control circuit for controlling the on/off switching of e.g. switching elements. The emission controller 73

adjusts the pulse current e.g. supplied to the resistance heater 55 provided to the ink emitting head 27 to control the ink emitting head 27 adapted for emitting the ink i from the nozzles 52a.

The alarm unit 74 is a display means, such as LCD (liquid crystal display), and demonstrates the information exemplified by printing conditions, printing states or residual ink quantities. The alarm unit 74 may also be a voice outputting means, such as a loudspeaker, in which case the information such as the printing conditions, printing states or the residual ink quantities is output by voice. The alarm unit 74 may include the display means and the voice outputting means in combination. The alarm may be issued by, for example a monitor or a loudspeaker of an information processing device 79.

The input/output terminal 75 sends the information, such as the printing conditions, printing states or the residual ink quantities, over an interface to e.g. the external information processing device 79. The input/output terminal 75 is also supplied from e.g. the information processing device 79 with printing data or with control signals for outputting the information exemplified by the above-mentioned printing conditions, printing states or the residual ink quantities. The information processing device 79 is an information processing device exemplified by e.g. a personal computer or a PDA (Personal Digital Assistant).

The input/output terminal 75, connected to e.g. the information processing device 79, may use e.g. a serial parallel interface or a parallel interface, as an interface. The input/output terminal 75 may have data communication, over a wired or wireless route, with the information processing device 79.

Between the input/output terminal 75 and the information processing device 79, there may be interposed a network, such as the Internet.

The ROM 76 is a memory, such as EP-ROM (Erasable Programmable Read-Only Memory), having stored therein a program for various processing operations carried out by the controller 78. This stored program is loaded by the controller 78 to the RAM 77. The RAM 77 stores the program as read out from the ROM 76 by the controller 78 or various states of the printer 1.

The controller 78 controls various parts based e.g. on printing data supplied from the input/output terminal 75 and on data of the residual quantity of the ink 2, supplied from the head cartridge 3. The controller 78 reads out a processing program, controlling the various parts, based e.g. on the input control signal, from the ROM 76, for storage in the RAM 77, to control or process various parts based on this processing program.

In the above-described control circuit 71, the processing program is stored in the ROM 76. However, the program storage medium is not limited to the ROM 76, such that a variety of other recording mediums, such as an optical disc, a magnetic disc, an MO disc or an IC card, having the processing program recorded thereon, may also be used. In this case, the control circuit 71 is connected to drives for actuating the recording mediums either directly or through the information processing device 79 for reading out the processing program from these recording mediums.

The printing operation by the above-described printer 1 will now be explained with reference to a flowchart shown in Fig.13. It is noted that the present operation is carried out by processing operations by a CPU (central processing unit), not shown, provided in the controller 78, based on a processing program stored in a memory, such as ROM 76.

First, a user issues a command, by acting e.g. on an operating panel provided on the main printer body unit 4, in order for the printer 1 to carry out the printing operation. Then, in a step S1, the controller 78 verifies whether or not the ink tank 5 of a preset color has been loaded on each loading part 22. If the ink tanks 5 of proper colors are mounted on all of the loading zones 22, the controller 78 proceeds to a step S2 and, if otherwise, the controller 78 proceeds to a step S4 to inhibit the printing operation.

The controller 78 in the step S2 verifies whether or not the quantity of the ink 2 in the ink tank 5 is less than a predetermined quantity, that is, whether or not the ink tank 5 is in the ink-depleted state. If it is determined that the ink tank 5 is in the ink-depleted state, the alarm unit 74 issues an alarm to that effect and, in a step S7, the printing operation is inhibited. If conversely the quantity of the ink 2 in the ink tank 5 is above the predetermined value, that is, the ink tank is charged with the ink, the printing operation is permitted in a step S3.

For carrying out the printing operation, the controller 78 causes the driving units 63, 54 to be driven in a controlled manner, by the printer controller 72, to shift the recording paper sheet P to a printing enabling position. Specifically, the controller 78 causes the actuation of the driving motor, forming the head cap opening/ closing mechanism 63, to cause movement of the head cap 28 towards the tray 65a with respect to the head cartridge 3, to expose the nozzles 52a of the ink emitting head 27, as shown in Fig.14. The controller 78 causes the driving of the driving motor, forming the paper sheet supplying/ discharging mechanism 64, to cause the feed movement of the recording paper sheet P. Specifically, the controller 78 controls the paper sheet supplying/ discharging mechanism 64 in such a manner that the recording paper sheet P is pulled out from the tray 65a by a paper sheet feed roll 81, the recording paper sheet P, thus pulled out, is transported by paired separating rolls 82a, 82b, rotating in the same direction, to a direction reversing roll 83 to reverse the transport direction, the recording paper sheet P then is transported to a transport belt 84, and the recording paper sheet P, thus transported, is held at a preset position by retention means 85, to determine the position of deposition of the ink 2.

The controller 78 then in step S5 controls the ink emitting head 27 by the emission controller 73 and causes

the ink liquid droplet i to be emitted and deposited via nozzles 52a onto the recording paper sheet P, transported to the printing position, to record an image or a letter/character formed by ink dots.

It is noted that at least the organic compound, which provides for the 0-second dynamic surface tension of the ink 2 in the range from not less than 30 mN/n to not more than 40 mN/m, is contained in the ink, the ink 2 is improved in wettability with respect to the inner wall of the ink liquid chamber 54a, and generation of fine bubbles in the ink 2 in the ink 2 passing through the ink duct 56 is suppressed. Hence, the generation of fine bubbles in the ink 2 charged in the ink liquid chamber 54 may be suppressed to prevent the emission failure exemplified by non-emission or warped emission of the ink liquid droplets i.

Moreover, at least the organic compound, which provides for the 0-second dynamic surface tension of the ink 2 in the range from not less than 30 mN/n to not more than 40 mN/m, is contained in the ink liquid droplets i, the optical density is improved to give a high quality image in which optical density is high with suppression of the boundary bleeding or speckled mixing of colors in all-over printing.

Additionally, since the alkylene oxide adduct of the polyhydric alcohol, which provides for the static surface tension in the range between not less than 30 mN/m and not less than 35 mN/m, is contained in the ink 2 with the present ink emitting head 27, along with the organic compound which provides for the 0-second dynamic surface tension of the ink 2 ranging between 30 mN/m and not less than 40 mN/m, it becomes possible to suppress generation of fine bubbles in the ink 2 more extensively than in case only the organic compound which provides for the preset range of the 0-second dynamic surface tension of the ink 2 is contained in the ink 2. In addition, since the alkylene oxide adduct of the polyhydric alcohol is contained in the ink 2, it is possible with the present ink emitting head 27 to improve the wettability of the ink 2 and the dignity of the letter/character further.

With the present ink emitting head 27, it is possible to further suppress the generation of fine bubbles of the ink 2 even in case the ink 2 containing the EOPOEO in place of the alkylene oxide adduct of the polyhydric alcohol along with the organic compound which provides for the 0-second dynamic surface tension of the ink 2 ranging between 30 mN/m and not less than 40 mN/m is used. The ink may be improved further in wettability to raise further the operation and effect derived from the organic compound which provides for the preset range of the 0-second dynamic surface tension.

When the ink liquid droplet i has been emitted from the nozzles 52a, the same quantity of the ink 2 as that emitted as the ink liquid droplet i is instantly replenished into the ink liquid chamber 54 from the ink duct 56, so that the original state is restored, as shown in Fig.8A. When the ink liquid droplet i is emitted from the ink emitting head 27, such that, when the negative pressure of the ink 2 in the portion of the ink chamber 42 lying towards the ink effluent duct 43 with respect to the opening 44 is increased as a result of the emission of the ink liquid droplet i from the ink emitting head 27, the diaphragm 49 of the valve 45 is uplifted by atmospheric pressure under the negative pressure of the ink 2, along with the valve shaft 48, to uplift the valve 45, which has so far kept the opening 44 of the ink chamber 42 closed under the bias of the biasing member 46 and that of the diaphragm 49, against the bias of the biasing member 46, as shown in Fig.8B.

The opening 44 between the ink inlet duct 41 and the ink effluent duct 43 of the ink chamber 42 is opened at this time to supply the ink 2 from the ink inlet duct 41 side to the ink effluent duct 43 side to replenish the ink 2 to the ink duct 56 of the ink emitting head 27. The negative pressure of the ink 2 is then decreased so that the diaphragm 49 is reset to its original shape by its restoring force, with the valve 45 then being lowered, along with the valve shaft 48, such as to close the ink chamber 42. Thus, with the valving mechanism 34, the above-described operation is repeated each time the ink liquid droplet i is emitted to raise the negative pressure of the ink 2.

With the ink emitting head 27, no fine bubbles are generated in the ink 2 flowing through a flow duct, even when the above-described supply of the ink 2 is carried out repeatedly, that is, even when the ink 2 is repeatedly supplied through the intricate flow duct, because at least the organic compound which provides for the 0-second dynamic surface tension of the ink liquid droplet i ranging between 30 mN/m or higher and 40 mN/m or less is contained in the ink liquid droplet i. Hence, there is no fear that fine bubbles are generated in the ink 2 passing through the flow path and hence the ink free from fine bubbles may be supplied to the ink emitting head 27 to prohibit non-emission or warped emission from occurring.

In this manner, the letters/characters or images, corresponding to data for printing, are sequentially printed to high printing quality on the recording paper sheet P running by the paper sheet supplying/ discharging mechanism 64. The recording paper sheet P, on which printing has been finished, is discharged via paper sheet feed/ discharge unit 64 in a step S6.

With the above-described printer 1, the ink 2, containing at least the organic compound which provides for the 0-second dynamic surface tension of the ink 2 ranging between 30 mN/m or higher and 40 mN/m or less or, as this organic compound, the polyhydric alcohol of the aforementioned chemical formulas 1 to 5, is emitted as ink liquid droplet i from the nozzle 52a onto the recording paper sheet P. Hence, letters/characters may be printed to high dignity without blurring or white spots in the image, because there is no fear of fine bubbles being generated in the ink 2 to prevent emission troubles.

With the present printer 1, the ink 2 containing at least the organic compound providing for the 0-second dynamic surface tension of the ink 2 ranging between not less than 30 mN/m and not more than 40 mN/m is deposited as ink liquid droplet i on the recording paper sheet P for printing. Thus, an image of high dignity may be printed in which the ink liquid droplet i is improved in wettability with respect to the recording paper sheet P, and in which the image is high in optical density and free from boundary bleeding or speckled mixing of colors in all-over printing.

Moreover, with the present printer 1, in which printing is made on the recording paper sheet P, with the use of the ink 2 containing, in addition to the organic compound providing for the 0-second dynamic surface tension of the ink 2 in the preset range, an alkylene oxide adduct of a polyhydric alcohol providing for the static surface tension of the ink 2 ranging between not less than 30 mN/m and not more than 35 mN/m, the printed image may be higher in dignity than the printed image obtained with the polyhydric alcohol which provides for the preset range of the 0-second dynamic surface tension.

Furthermore, with the present printer 1, the printed image may be higher in dignity than the printed image obtained with the polyhydric alcohol which provides for the preset range of the 0-second dynamic surface tension, in case of using the ink 2 containing, in addition to the organic compound providing for the 0-second dynamic surface tension of the ink 2 in the preset range, the EOPOEO in place of the alkylene oxide adduct of the polyhydric alcohol.

Meanwhile, with the above head cartridge 2, the ink tank 5 is dismountable from the main cartridge body member 12. However, the present invention is not limited to this configuration. That is, this head cartridge 2 itself is treated as a consumable item, and is dismountable with respect to the main body member of the printer 3. Thus, the ink tank 2 may be unified to the main cartridge body member 12.

In the above-described embodiment, the present invention is directed to a printer. However, the present invention is not limited to this embodiment and may broadly be applied to other liquid emitting devices, such as facsimile machine, copying machine, an emitting device for DNA chips in the liquid (see Japanese laid-Open Patent Publication 2002-253200) or to a liquid emitting device for emitting a liquid containing electrically conductive particles for forming a wiring pattern for an printed circuit board.

In the foregoing, the ink emitting head 27, in which the ink 2 is heated by the sole resistance heater 55, and the ink so heated is emitted, is taken as an example for explanation. However, the present invention is not limited to this embodiment and may also be applied to a liquid emitting device provided with emitting means having plural pressure generating elements each of which delivers discrete energy values at different timings to control the liquid emitting direction.

Moreover, in the foregoing, such an electro-thermal conversion system, in which the ink 2 is emitted from the nozzles 52a as the ink is heated by the sole resistance heater 55, is used. This is merely illustrative and such an electro-mechanical conversion system may also be used in which the ink is emitted electro-mechanically from the nozzle by an electro-mechanical conversion element exemplified by a piezoelectric device (see Japanese laid-Open Patent Publications S55-65559, S62-160243 andH2-270561).

In the foregoing, a line-based printer 1 has been explained. The present invention is not limited to this configuration and may also be applied to a serial-based liquid emitting device in which the ink head is moved in a direction substantially at right angles to the traveling direction of the recording paper sheet P.

Example

The present invention will now be explained with reference to samples of an ink actually prepared as a recording liquid embodying the present invention.

[Sample 1]

In the sample 1, a yellow-based ink was first prepared. For preparing the yellow-based ink, 3 mass wt% of Acid Yellow 142, as a colorant, 77 mass wt% of water, as a solvent, 10 mass wt% of glycerin, as another solvent, 5 mass wt% of diethylene glycol, as another solvent, 3 mass wt% of 2-pyrrolidone, as yet another solvent, and 3 mass wt% of triethylene glycol mono n-butylether, abbreviated below to TEBE, as an organic solvent which provides for the 0-second dynamic surface tension of the ink 2 of a preset range, specifically, a range between not less than 30 mN/m and not more than 40 mN/m, were mixed together and filtered by a membrane filter, with a pore size of 0.22μm (trade name: Millex- 0.22), to prepare a yellow-based ink.

Then, a black-based ink was prepared. For preparing the black-based ink, 4 mass wt% of Food Black 2, as a colorant, 76 mass wt% of water, as a solvent, 10 mass wt% of glycerin, 4 mass wt% of diethylene glycol, 3 mass wt% of 2-pyrrolidone, as other solvents, and 3 mass wt% of the TEBE, as an organic solvent, which provides for the 0-second dynamic surface tension of the ink of the preset range, were mixed together and filtered by a membrane filter, with a pore size of 0.22μm (trade name: Millex-0.22), to prepare a black-based ink.

Thus, in the sample 1, a yellow-based ink and a black-based ink, each containing TEBE, as organic solvent,

which provides for a preset range of the 0-second dynamic surface tension of the ink, were prepared.

[Sample 2]

With the sample 2, a yellow-based ink and a black-based ink were prepared in the same way as with the sample 1, except that 1 part by weight of the polyhydric alcohol F in the above Table 4 was added, in place of TEBE, as the compound which provides for the 0-second dynamic surface tension of the ink of the preset range.

[Sample 3]

With the sample 3, a yellow-based ink and a black-based ink were prepared in the same way as with the sample 1, except that 5 parts by weight of the polyhydric alcohol G in the above Table 4 was added, in place of TEBE, as the compound which provides for the 0-second dynamic surface tension of the ink of the preset range.

[Sample 4]

With the sample 4, a yellow-based ink and a black-based ink were prepared in the same way as with the sample 1, except that 1 part by weight of the polyhydric alcohol L in the above Table 4 was added, in place of TEBE, as the compound which provides for the 0-second dynamic surface tension of the ink of the preset range.

[Sample 5]

With the sample 5, a yellow-based ink and a black-based ink were prepared in the same way as with the sample 1, except that 1 part by weight of the polyhydric alcohol O in the above Table 4 was added, in place of TEBE, as the compound which provides for the 0-second dynamic surface tension of the ink of the preset range.

[Sample 6]

With the sample 6, a yellow-based ink and a black-based ink were prepared in the same way as with the sample 1, except that 3 parts by weight of the polyhydric alcohol T in the above Table 4 were added, in place of TEBE, as the compound which provides for the 0-second dynamic surface tension of the ink of the preset range.

[Sample 7]

With the sample 7, a yellow-based ink and a black-based ink were prepared in the same way as with the sample 1, except that 1 part by weight of the polyhydric alcohol AE in the above Table 4 was added, in place of TEBE, as the compound which provides for the 0-second dynamic surface tension of the ink of the preset range.

[Sample 8]

With the sample 8, a yellow-based ink and a black-based ink were prepared in the same way as with the sample 1, except that 5 parts by weight of the polyhydric alcohol AJ in the above Table 4 were added, in place of TEBE, as the compound which provides for the 0-second dynamic surface tension of the ink of the preset range.

[Sample 9]

With the sample 9, a yellow-based ink and a black-based ink were prepared in the same way as with the sample 1, except that 0.5 part by weight of the organic compound, shown by the chemical formula 13, was added as the alkylene oxide adduct of the polyhydric alcohol which provides for the static surface tension of the ink of the preset range, more specifically, the range between not less than 30 mN/m and not more than 35 mN/m, in addition to TEBE which provides for the 0-second dynamic surface tension of the ink of the preset range.

[Sample 10]

With the sample 10, a yellow-based ink and a black-based ink were prepared in the same way as with the sample 1, except that 0.7 part by weight of the organic compound, shown by the chemical formula 18, was added as the alkylene oxide adduct of the polyhydric alcohol which provides for the static surface tension of the ink of the preset range, in addition to TEBE which provides for the preset range of the 0-second dynamic surface tension of the ink.

[Sample 11]

With the sample 11, a yellow-based ink and a black-based ink were prepared in the same way as with the sample 2, except that 0.5 part by weight of the organic compound, shown by the chemical formula 9, was added as the alkylene oxide adduct of the polyhydric alcohol which provides for the static surface tension of the ink of the preset range, in addition to the polyhydric alcohol F in Table 4 which provides for the preset range of the 0-second dynamic surface tension of the ink.

[Sample 12]

With the sample 12, a yellow-based ink and a black-based ink were prepared in the same way as with the sample 2, except that 0.5 part by weight of the organic compound, shown by the chemical formula 17, was added as the alkylene oxide adduct of the polyhydric alcohol which provides for the static surface tension of the ink of the preset range, in addition to the polyhydric alcohol F in Table 4 which provides for the preset range of the 0-second dynamic surface tension of the ink.

[Sample 13]

With the sample 13, a yellow-based ink and a black-based ink were prepared in the same way as with the sample 3, except that 0.7 part by weight of the organic compound, shown by the chemical formula 13, was added as the alkylene oxide adduct of the polyhydric alcohol which provides for the the preset range of the static surface tension of the ink, in addition to the polyhydric alcohol G in Table 4 which provides for the 0-second dynamic surface tension of the ink of the preset range.

[Sample 14]

With the sample 14, a yellow-based ink and a black-based ink were prepared in the same way as with the sample 3, except that 0.7 part by weight of the organic compound, shown by the chemical formula 17, was added as the alkylene oxide adduct of the polyhydric alcohol which provides for the static surface tension of the ink of the preset range, in addition to the polyhydric alcohol G in Table 4 which provides for the 0-second dynamic surface tension of the ink of the preset range.

[Sample 15]

With the sample 15, a yellow-based ink and a black-based ink were prepared in the same way as with the sample 2, except adding 0.5 part by weight of an ethylene oxide/ propylene oxide copolymer (EOPOEO), with the number of the ethylene oxide units (x+z) equal to 3, the number of units of propylene oxide (y) equal to 8 and with the content of ethylene oxide (EO) equal to 22.1 wt%, in addition to the polyhydric alcohol F in the above Table 4 which provides for the 0-second dynamic surface tension of the ink of the preset range.

[Sample 16]

With the sample 16, a yellow-based ink and a black-based ink were prepared in the same way as with the sample 15, except adding 0.5 part by weight of EOPOEO, with the number of the ethylene oxide units (x+z) equal to 5, the number of units of propylene oxide (y) equal to 8 and with the content of ethylene oxide (EO) equal to 32.2 wt%.

[Sample 17]

With the sample 17, a yellow-based ink and a black-based ink were prepared in the same way as with the sample 1, except adding 3 parts by weight of polyhydric alcohol I in Table 4 which provides for the 0-second dynamic surface tension of the ink, in place of TEBE, and 0.5 part by weight of EOPOEO, with the number of the ethylene oxide units (x+z) equal to 4, the number of units of propylene oxide (y) equal to 12 and with the content of ethylene oxide EO equal to 20.2 wt%.

[Sample 18]

With the sample 18, a yellow-based ink and a black-based ink were prepared in the same way as with the sample 17, except adding 0.5 part by weight of EOPOEO, with the number of the ethylene oxide units (x+z) equal to 7,

the number of units of propylene oxide (y) equal to 12 and with the content of ethylene oxide (EO) equal to 30.7 wt%.

[Sample 19]

With the sample 19, a yellow-based ink and a black-based ink were prepared in the same way as with the sample 4, except adding 3 parts by weight of the polyhydric alcohol L in the above Table 4 which provides for the 0-second dynamic surface tension of the ink of the preset range and, in addition to this polyhydric alcohol, 0.5 part by weight of EOPOEO, with the number of the ethylene oxide units (x+z) equal to 9, the number of units of propylene oxide (y) equal to 16 and with the content of ethylene oxide EO equal to 29.9 wt%.

[Sample 20]

With the sample 20, a yellow-based ink and a black-based ink were prepared in the same way as with the sample 19, except adding 0.5 part by weight of EOPOEO, with the number of the ethylene oxide units (x+z) equal to 12, the number of units of propylene oxide (y) equal to 21 and with the content of EO equal to 30.2 wt%.

[Sample 21]

With the sample 21, a yellow-based ink and a black-based ink were prepared in the same way as with the sample 1, except not having the organic solvent, providing for the 0-second dynamic surface tension of the ink of the preset range, contained in the ink.

[Sample 22]

With the sample 22, a yellow-based ink and a black-based ink were prepared in the same way as with the sample 1, except adding 5 parts by weight of isopropyl alcohol in place of TEBE.

[Sample 23]

With the sample 23, a yellow-based ink and a black-based ink were prepared in the same way as with the sample 21, except adding 1.5 part by weight of acetylene glycol based non-ionic surfactant (trade name: ORFIN E1010), manufactured by NISSHIN KAGAKU KOGYO Co. Ltd., in place of the alkylene oxide adduct of polyhydric alcohol.

[Sample 24]

With the sample 24, a yellow-based ink and a black-based ink were prepared in the same way as with the sample 1, except setting the amount of TEBE to 2 parts by weight.

[Sample 25]

With the sample 25, a yellow-based ink and a black-based ink were prepared in the same way as with the sample 24, except adding 1.5 part by weight of acetylene glycol based non-ionic surfactant (trade name: ORFIN E1010), manufactured by NISSHIN KOGYO Co. Ltd., in place of TEBE.

[Sample 26]

With the sample 26, a yellow-based ink and a black-based ink were prepared in the same way as with the sample 1, except adding 5 parts by weight of isopropyl alcohol in place of TEBE and adding 1.5 part by weight of acetylene glycol based non-ionic surfactant (trade name: ORFIN E1010), manufactured by NISSHIN KOGYO Co. Ltd., in place of the alkylene oxide adduct of polyhydric alcohol and EOPOEO.

Measurement was then made of the 0-second dynamic surface tension and the static surface tension of each ink sample. The mixing data for organic compounds or polyhydric alcohols, responsible for lowering the 0-second dynamic surface tension of each of the samples 1 to 26, alkylene oxide adducts of the polyhydric alcohols, and EOPOEO, are summarized in the following Table 6. The results of measurement of the 0-second dynamic surface tension and the static surface tension of each sample are shown in Table 7.

Table 6

| | organic compounds or polyhydric alcohols responsible for lowering 0-second dynamic surface tension | | | |
|---|---|---|---|---|
| | sorts | hydrocarbon groups | I/O | content (parts by weight) |
| sample 1 | TEBE | - | 1.33 | 3 |
| sample 2 | F in Table 4 | 9 | 1.25 | 1 |
| sample 3 | G in Table 4 | 5 | 2.5 | 5 |
| sample 4 | L in Table 4 | 7 | 1.67 | 1 |
| sample 5 | O in Table 4 | 9 | 1.25 | 1 |
| sample 6 | T in Table 4 | 7 | 2 | 3 |
| sample 7 | AE in Table 4 | 9 | 1.18 | 1 |
| sample 8 | AJ in Table 4 | 6 | 2.5 | 5 |
| sample 9 | TEBE | - | 1.33 | 3 |
| sample 10 | TEBE | - | 1.33 | 3 |
| sample 11 | F in Table 4 | 9 | 1.25 | 1 |
| sample 12 | F in Table 4 | 9 | 1.25 | 1 |
| sample 13 | G in Table 4 | 5 | 2.5 | 5 |
| sample 14 | G in Table 4 | 5 | 2.5 | 5 |
| sample 15 | F in Table 4 | 9 | 1.25 | 1 |
| sample 16 | F in Table 4 | 9 | 1.25 | 1 |
| sample 17 | I in Table 4 | 7 | 1.67 | 3 |
| sample 18 | I in Table 4 | 7 | 1.67 | 3 |
| sample 19 | L in Table 4 | 7 | 1.67 | 3 |
| sample 20 | L in Table 4 | 7 | 1.67 | 3 |
| sample 21 | no addition | | | |
| sample 22 | 5 parts by weight of isopropyl alcohol as substitution | | | |
| sample 23 | no addition | | | |
| sample 24 | TEBE | - | 1.33 | 2 |
| sample 25 | TEBE | - | 1.33 | 2 |
| sample 26 | 5 parts by weight of isopropyl alcohol as substitution | | | |

Table 6 (continued)

| | alkylene oxide adduct of polyhydric alcohol | | | | EOPOEO | | | |
|---|---|---|---|---|---|---|---|---|
| | Sort | hydrocarbon groups | I/O | content (parts by weight) | x+z | y | EO content (mass wt%) | content (weight) |
| sample 1 | no addition | | | | no addition | | | |
| sample 2 | no addition | | | | no addition | | | |
| sample 3 | no addition | | | | no addition | | | |
| sample 4 | no addition | | | | no addition | | | |
| sample 5 | no addition | | | | no addition | | | |

(continued)

| | alkylene oxide adduct of polyhydric alcohol | | | | EOPOEO | | | |
|---|---|---|---|---|---|---|---|---|
| | Sort | hydrocarbon groups | I/O | content (parts by weight) | x+z | y | EO content (mass wt%) | content (weight) |
| sample 6 | no addition | | | | no addition | | | |
| sample 7 | no addition | | | | no addition | | | |
| sample 8 | no addition | | | | no addition | | | |
| sample 9 | chem. Form. 13 | 9 | 1 | 0.5 | - | - | - | - |
| sample 10 | chem. Form. 18 | 9 | 1.33 | 0.7 | - | - | - | - |
| sample 11 | chem. Form. 9 | 6 | 1.2 | 0.5 | - | - | - | - |
| sample 12 | chem. Form. 17 | 9 | 1 | 0.5 | - | - | - | - |
| sample 13 | chem. Form. 13 | 9 | 1 | 0.7 | - | - | - | - |
| sample 14 | chem. form. 17 | 9 | 1 | 0.7 | - | - | - | - |
| sample 15 | - | - | - | - | 3 | 8 | 22.1 | 0.5 |
| sample 16 | - | - | - | - | 5 | 8 | 32.2 | 0.5 |
| sample 17 | - | - | - | - | 4 | 12 | 20.2 | 0.5 |
| sample 18 | - | - | - | - | 7 | 12 | 30.7 | 0.5 |
| sample 19 | - | - | - | - | 9 | 16 | 29.9 | 0.5 |
| sample 20 | - | - | - | - | 12 | 21 | 30.2 | 0.5 |
| sample 21 | no addition | | | | | | | |
| sample 22 | no addition | | | | | | | |
| sample 23 | 1.5 weight part of acetylene glycol based non-ionic surfactant as substitution | | | | | | | |
| sample 24 | no addition | | | | | | | |
| sample 25 | 1.5 weight part of acetylene glycol based non-ionic surfactant as substitution | | | | | | | |
| sample 26 | 1.5 weight part of acetylene glycol based non-ionic surfactant as substitution | | | | | | | |

Table 7

| | 0-second dynamic surface tension | | static surface tension (mN/m) | |
|---|---|---|---|---|
| | yellow ink | black ink | yellow ink | black ink |
| sample 1 | 39.1 | 38.5 | 38.8 | 38.5 |
| sample 2 | 38.5 | 38.2 | 38.2 | 38 |
| sample 3 | 40 | 39.8 | 39.9 | 39.8 |
| sample 4 | 36.1 | 36 | 35.8 | 36 |
| sample 5 | 32.1 | 31.5 | 32 | 31.5 |
| sample 6 | 39.1 | 39.3 | 39.1 | 39 |
| sample 7 | 38.8 | 38.8 | 38.8 | 38.7 |

(continued)

| | 0-second dynamic surface tension | | static surface tension (mN/m) | |
|---|---|---|---|---|
| | yellow ink | black ink | yellow ink | black ink |
| sample 8 | 37.4 | 37.5 | 37.4 | 37.3 |
| sample 9 | 39.1 | 38.5 | 33.6 | 33.3 |
| sample 10 | 39.1 | 38.5 | 34.6 | 34.7 |
| sample 11 | 38.5 | 38.2 | 34.4 | 34 |
| sample 12 | 38.5 | 38.2 | 33 | 32.6 |
| sample 13 | 40 | 39.8 | 34.1 | 33.5 |
| sample 14 | 40 | 39.8 | 33.1 | 32.7 |
| sample 15 | 38.5 | 38.2 | 37.2 | 37 |
| sample 16 | 38.5 | 38.2 | 37.7 | 37.4 |
| sample 17 | 38.8 | 39.1 | 36.5 | 36.6 |
| sample 18 | 38.8 | 39.1 | 37.1 | 36.9 |
| sample 19 | 35.5 | 35.4 | 35.1 | 34.9 |
| sample 20 | 35.5 | 35.4 | 35.1 | 35.2 |
| sample 21 | 61.8 | 61.8 | 61.8 | 61.8 |
| sample 22 | 27.7 | 27.4 | 27.7 | 27.3 |
| sample 23 | 61.8 | 61.8 | 34.2 | 33.5 |
| sample 24 | 44.5 | 44.6 | 44.5 | 44.6 |
| sample 25 | 44.5 | 44.6 | 34.5 | 34 |
| sample 26 | 27.7 | 27.4 | 27 | 26.8 |

Here, the 0-second dynamic surface tension and the static surface tension at 25ºC atmosphere were measured using a surface tension meter CBVP-Z manufactured by KYOWA KAIMEN KAGAKU Co. Ltd. With the samples 1 to 8, 21, 22 and 24, static surface tension was measured, as the colorant material was removed from the ink components. With the samples 9 to 14, 23 and 25, static surface tension was measured, as the colorant material and the surfactant were removed from the ink components. In each of these cases, the so measured static surface tension was set as the 0-second dynamic surface tension. The I/O values in Table 6 were calculated on the basis of the Tables 1 and 2. It is noted that the iso-branch and the tert-branch in the Tables 1 and 2 were applied for the C-chain, as discussed above.

Then, evaluation was made of emission stability, intermittent emission stability, boundary bleeding, speckled mixing of colors in all-over printing and optical density of the yellow and black inks of the respective samples.

The emission stability was measured as follows: The inks of the respective samples were charged in the ink tanks. After emitting the respective inks by a line-based ink jet printer, carrying the head cartridge, the head cartridge was transiently dismounted from the ink jet printer. The head cartridge was allowed to stand for five days in an atmosphere of a temperature of 10ºC and a relative humidity of 50% and then for five days in an atmosphere of a temperature of 40ºC and a relative humidity of 50%, and was exposed to am environment of a temperature of 20ºC and a relative humidity of 50%. The head cartridge was again mounted on a line-based ink jet printer and a copy paper sheet 'Mitsubishi PPC paper sheet' manufactured by MITSUBISHI SEISHI Co. Ltd., was printed with so-called all-over printing in which each of a plural number of areas of the paper sheet was printed in its entirety with each color. The ink tanks were dismounted from the head cartridge and visually checked whether or not fine bubbles have been generated in the ink emission head. The image obtained on printing was also visually checked.

The intermittent emission stability was evaluated as follows: The inks of the respective samples were charged in the ink tanks which were then mounted on the head cartridge of a line-based ink jet printer. The respective inks were emitted by the line-based ink jet printer. The head cartridge was then dismounted transiently from the ink jet printer and allowed to stand in a stationary state for ten minutes in an atmosphere of a temperature of 30ºC and a relative humidity of 10%. The head cartridge was again mounted on the ink jet printer and all-over printing was then carried out for each of the respective colors, on a copy paper sheet 'Mitsubishi PPC paper sheet' manufactured by MITSUBISHI SEISHI Co.

Ltd. The printed image was checked visually.

The boundary bleeding was evaluated in the following manner. The inks of the respective samples were charged into the ink tanks which were then mounted on a head cartridge carried by the line-based ink jet printer. All-over printing was then carried out on a copy paper sheet 'Mitsubishi PPC paper sheet' manufactured by MITSUBISHI SEISHI Co. Ltd. so that the respective colors were neighboring to one another on the paper sheet. The state of bleeding at the boundary areas of the respective colors in the printed image was checked visually.

The speckled mixing of colors in all-over printing was evaluated in the following manner. The inks of the respective samples were charged into the ink tanks which were then mounted on a head cartridge carried by the line-based ink jet printer. All-over printing was carried out to 80% density so that the respective colors were overlaid one on others on the copy paper sheet 'Mitsubishi PPC paper sheet' manufactured by MITSUBISHI SEISHI Co. Ltd. The state of evenness of color density, that is, the possible presence of irregular colors in the printed image, was checked visually.

The optical density was measured in the following manner. The inks of the respective samples were charged into the ink tanks which were then mounted on a head cartridge carried by the line-based ink jet printer. All-over printing was carried out for each of the colors and a density of the reflected light was measured on an optical density meter TR924 manufactured by Macbeth Inc.

The results of evaluation of emission stability, intermittent emission stability, boundary bleeding, speckled mixing of colors in all-over printing and the optical density, obtained as described above, are shown in the following Table 8.

Table 8

| | optical density | | emission stability | intermittent emission stability | boundary bleeding | speckled all-over color mixing |
|---|---|---|---|---|---|---|
| sample 1 | yellow | 1.15 | ○ | ○ | ○ | ○ |
| | black | 1.21 | | | | |
| sample 2 | yellow | 1.14 | ◎ | ○ | ○ | ○ |
| | black | 1.22 | | | | |
| sample 3 | yellow | 1.14 | ◎ | ○ | ○ | ○ |
| | black | 1.21 | | | | |
| sample 4 | yellow | 1.14 | ◎ | ○ | ○ | ○ |
| | black | 1.25 | | | | |
| sample 5 | yellow | 1.13 | ◎ | ○ | ◎ | ○ |
| | black | 1.24 | | | | |
| sample 6 | yellow | 1.11 | ◎ | ○ | ○ | ○ |
| | black | 1.24 | | | | |
| sample 7 | yellow | 1.15 | ◎ | ○ | ○ | ○ |
| | black | 1.23 | | | | |
| sample 8 | yellow | 1.14 | ◎ | ○ | ○ | ○ |
| | black | 1.24 | | | | |
| sample 9 | yellow | 1.15 | ○ | ○ | ○ | ◎ |
| | black | 1.26 | | | | |
| sample 10 | yellow | 1.16 | ○ | ○ | ◎ | ◎ |
| | black | 1.25 | | | | |
| sample 11 | yellow | 1.14 | ◎ | ○ | ◎ | ◎ |
| | black | 1.24 | | | | |
| sample 12 | yellow | 1.17 | ◎ | ○ | ◎ | ◎ |
| | black | 1.25 | | | | |

(continued)

| | optical density | | emission stability | intermittent emission stability | boundary bleeding | speckled all-over color mixing |
|---|---|---|---|---|---|---|
| sample 13 | yellow | 1.15 | ◎ | ○ | ◎ | ◎ |
| | black | 1.24 | | | | |
| sample 14 | yellow | 1.15 | ◎ | ○ | ◎ | ◎ |
| | black | 1.24 | | | | |
| sample 15 | yellow | 1.18 | ◎ | ○ | ◎ | ◎ |
| | black | 1.25 | | | | |
| sample 16 | yellow | 1.17 | ◎ | ○ | ◎ | ◎ |
| | black | 1.25 | | | | |
| sample 17 | yellow | 1.17 | ◎ | ○ | ◎ | ◎ |
| | black | 1.24 | | | | |
| sample 18 | yellow | 1.15 | ◎ | ○ | ◎ | ◎ |
| | black | 1.23 | | | | |
| sample 19 | yellow | 1.13 | ◎ | ○ | ◎ | ◎ |
| | black | 1.22 | | | | |

Table 8 (continued)

| | optical density | | emission stability | intermittent emission stability | boundary bleeding | speckled all-over color mixing |
|---|---|---|---|---|---|---|
| sample 20 | yellow | 1.13 | ◎ | ○ | ◎ | ◎ |
| | black | 1.24 | | | | |
| sample 21 | yellow | 1.07 | × | × | × | × |
| | black | 1.03 | | | | |
| sample 22 | yellow | 1.01 | ○ | × | Δ | Δ |
| | black | 1 | | | | |
| sample 23 | yellow | 1.09 | × | × | × | × |
| | black | 1.18 | | | | |
| sample 24 | yellow | 1.11 | Δ | × | Δ | Δ |
| | black | 1.19 | | | | |
| sample 25 | yellow | 1.13 | Δ | Δ | Δ | Δ |
| | black | 1.18 | | | | |
| sample 26 | yellow | 1.01 | Δ | Δ | Δ | Δ |
| | black | 1.04 | | | | |

In emission stability in Table 8, the samples free of white spots in the entire images, with the ink in the ink emitting head being free of fine bubbles generated therein, are indicated by ◎ and the samples not of a problem in image quality but suffering from slight white spots in the image, with the ink in the ink emission head suffering from an extremely minor quantity of fine bubbles, are indicated by ○. The samples which suffer from white spots, detracting from the image quality, with the ink in the ink emission head suffering from an extremely small quantity of fine bubbles, are indicated by Δ, and those which suffer from white spots, detracting from the image quality, with the ink in the ink emission head

suffering from a major quantity of fine bubbles, are indicated by ×. In intermittent emission stability in Table 8, the samples whose images are clear and not blurred are indicated by ○ and those whose images are blurred slightly are indicated by Δ, while those whose images are blurred and severely deteriorated in image quality are indicated by ×. In boundary bleeding in Table 8, the samples whose images are completely free from color bleeding in boundary parts are denoted by ◎ and those not being of a problem in image quality but suffering slightly from color bleeding in boundary parts are denoted by ○. The samples suffering from color bleeding detracting from the image quality in boundary parts are denoted by Δ, while those suffering from color bleeding in the entire boundary parts and from severe deterioration in image quality are denoted by x. In speckled color mixing in Table 8, the samples completely free from color irregularities in blue color in their entirety are denoted by ◎ and those which are not of a problem in image quality but suffer from slight color irregularities are denoted by O. The samples suffering from color irregularities, detracting from the image quality, are denoted by Δ, while those suffering from color irregularities in the entire image parts and from severe deterioration in image quality are denoted by ×.

It is seen from the results of evaluation shown in Table 8 that the samples 1 to 20 in Table 7 in which the 0-second dynamic surface tension ranges from not less than 30 mN/m to not more than 40 mN/m, are superior in emission stability, intermittent emission stability, boundary bleeding, speckled color mixing and in optical density, to the samples 21 to 26 in which the 0-second dynamic surface tension deviates from the range from not less than 30 mN/m to not more than 40 mN/m.

In the samples 21 to 23 and 26, not containing the organic compound for lowering the 0-second dynamic surface tension, it becomes difficult to raise the wettability with respect to the inside of the liquid chamber or flow duct. Thus, fine bubbles may be generated in the ink to cause emission troubles or warped emission to deteriorate the image quality due to non-printed white spots or blurring. Moreover, in the samples 21 to 23 and 26, not containing the organic compound for lowering the 0-second dynamic surface tension, it becomes difficult to raise the wettability with respect to the copy paper sheets, so that boundary bleeding or speckled color mixing may be generated such that images with high dignity cannot be produced.

With the samples 24 and 25, containing TEBE, capable of lowering the 0-second dynamic surface tension, the content of the TEBE is so small that the 0-second dynamic surface tension cannot be lowered to a sufficiently small value. Hence, as in the samples 21 to 23 and 26, the emission failure, boundary bleeding or speckled color mixing tends to be generated to render it impossible to produce an image with high dignity.

With the samples 1 to 20, as contrasted to the above samples, TEBE or polyhydric alcohols are contained in moderate amounts as organic compounds for lowering the 0-second dynamic surface tension, such that the 0-second dynamic surface tension is set to the range between not less than 30 mN/m and not more than 40 mN/m, as indicated in Table 7. Consequently, the samples 1 to 20 may be improved in wettability with respect to the inside of the liquid chamber or flow ducts, while small-sized bubbles are suppressed from being generated in the ink. Thus, with the samples 1 to 20, the nozzles are not stopped with the small-sized bubbles and hence the emission failure may be suppressed to enable a high dignity image to be produced in a state free of non-printed white spots or blurring.

In addition, with the samples 1 to 20, containing TEBE or polyhydric alcohols as the organic compounds for lowering the 0-second dynamic surface tension, the 0-second dynamic surface tension is maintained in a moderate range, with the result that wettability with respect to copy paper sheets may be improved to enable images of high dignity to be generated in a manner substantially free from boundary bleeding or speckled color mixing.

With the samples 2 to 8, in particular, polyhydric alcohols with 9 or less carbon atoms are contained as the organic compounds for lowering the 0-second dynamic surface tension, so that wettability with respect to the inside of the liquid chamber or the flow duct may be improved further to provide for still higher emission stability.

With the samples 9 to 14, the alkylene oxide adducts of the polyhydric alcohols, which provide for the static surface tension of the ink ranging between not less than 30 mN/m and not more than 35 mN/m, are contained along with TEBE or polyhydric alcohols, which provide for the low 0-second dynamic surface tension of the ink, it is possible to further suppress small-sized bubbles from being produced in the ink. Thus, with the samples 9 to 14, an image of high dignity may be generated in which generation of the boundary bleeding or speckled color mixing is suppressed further.

It is also seen from the results of evaluation of table 8 that the samples 15 to 20, having the 0-second dynamic surface tension ranging between not less than 30 mN/m and not more than 40 mN/m, and containing EOPOEO, are superior in emission stability, intermittent emission stability, boundary bleeding and in speckled color mixing to the samples 1 to 8 containing only TEBE or polyhydric alcohols as organic compounds for lowering the 0-second dynamic surface tension.

With the samples 15 to 20, containing EOPOEO, in place of the alkylene oxide adducts of the polyhydric alcohols, as surfactant, along with polyhydric alcohols, as the organic compounds for lowering the 0-second dynamic surface tension, generation of fine bubbles in the ink may be suppressed further. Thus, with the samples 15 to 20, high dignity images, in which generation of boundary bleeding or speckled color mixing is suppressed further, may be printed.

It is seen from above that addition of an organic compound or polyhydric alcohols, providing for the 0-second dynamic surface tension ranging between not less than 30 mN/m and not more than 40 mN/m, in the preparation of the

ink, is crucial in preparing the ink enabling high dignity printing superior in emission stability and intermittent emission stability and which is substantially free from boundary bleeding or speckled color mixing.

It is also seen that addition of the polyhydric alcohol with 9 or less carbon atoms, as an organic compound providing for the 0-second dynamic surface tension ranging between not less than 30 mN/m and not more than 40 mN/m, in the preparation of the ink, is crucial in preparing the ink with still higher emission stability.

It is also seen that addition of the alkylene oxide adducts of the polyhydric alcohols, providing for the static surface tension of the ink ranging between not less than 30 mN/m and not more than 35 mN/m, in the preparation of the ink, along with the organic compound or the polyhydric alcohols, providing for the 0-second dynamic surface tension ranging between not less than 30 mN/m and not more than 40 mN/m, is crucial in preparing the ink for printing which is further suppressed in boundary bleeding or speckled color mixing and which is further improved in dignity.

Moreover, it is seen that addition of EOPOEO, as surfactant, in place of the alkylene oxide adduct of the polyhydric alcohol, along with the organic compound or the polyhydric alcohols, providing for the 0-second dynamic surface tension ranging between not less than 30 mN/m and not more than 40 mN/m, is crucial in preparing the ink for printing which is further suppressed in boundary bleeding or speckled color mixing and which is further improved in dignity.

Industrial Utilizability

The ink provided by the present invention suffers from small-sized bubbles only to a lesser extent, and is high in emission stability. The ink is used for high dignity printing because boundary bleeding or speckled color mixing is not produced and high optical density may be achieved in case the ink is used for multi-color printing of letters/ characters or images on an ordinary quality paper sheet, as a support.

**Claims**

1. A recording liquid deposited on a support in the state of liquid droplets for effecting printing on said support, wherein the recording liquid contains colorant matter and a solvent for dispersing said colorant matter, and has a 0-second dynamic surface tension not less than 30 mN/m and not more than 40 mN/m.

2. The recording liquid according to claim 1 wherein the recording liquid contains, in addition to said colorant matter and said solvent, a polyhydric alcohol having an I/O ratio, namely a ratio of an inorganic value (IV) to an organic value (OV), equal to not less than 1.18 and not more than 2.5, and containing a hydrocarbon group with the number of carbon atoms less than 9.

3. The recording liquid according to claim 2 wherein said polyhydric alcohol contains a branched hydrocarbon group.

4. The recording liquid according to claim 2 containing, as said polyhydric alcohol, one or more of organic compounds represented by the chemical formulas 1 to 5:

[chemical formula 1]

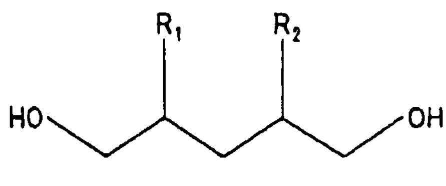

wherein $R_1$ and $R_2$ denote hydrocarbon groups, with $2 \leq R_1+R_2 \leq 4$, $R_1 \geq 0$ and $R_2 \geq 0$, provided that, if $R_1 = 0$ and $R_2 = 0$, $R_1$ and $R_2$ each denote a hydrogen atom;

[chemical formula 2]

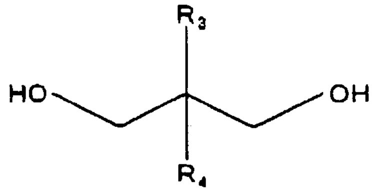

wherein $R_3$ and $R_4$ denote hydrocarbon groups, with $2 \leq R_3+R_4 \leq 6$, $R_3 \geq 0$ and $R_4 \geq 0$, provided that, if $R_3 = 0$ and $R_4 = 0$, $R_3$ and $R_4$ each denote a hydrogen atom;

[chemical formula 3]

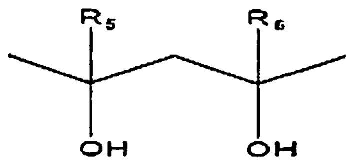

wherein $R_5$ and $R_6$ denote hydrocarbon groups, with $1 \leq R_5+R_6 \leq 4$, $R_5 \geq 0$ and $R_6 \geq 0$, provided that, if $R_5 = 0$ and $R_6 = 0$, $R_5$ and $R_6$ each denote a hydrogen atom;

[chemical formula 4]

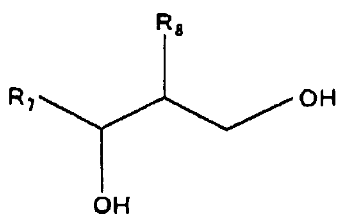

wherein $R_7$ and $R_8$ denote hydrocarbon groups, with $2 \leq R_7+R_8 \leq 6$; and

[chemical formula 5]

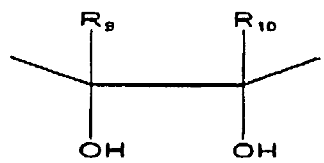

wherein $R_9$ and $R_{10}$ denote hydrocarbon groups, with $2 \leq R_9+R_{10} \leq 4$.

**5.** The recording liquid according to claim 1 wherein the static surface tension is not less than 30 mN/m and not more than 35 mN/m.

6. The recording liquid according to claim 1 containing, as a surfactant, an alkylene oxide adduct of a polyhydric alcohol, said alkylene oxide adduct of the polyhydric alcohol containing a hydrocarbon group with nine or less carbon atoms and having the ratio (I/O) of the inorganic value (IV) to the organic value (OV),not less than 1 and not more than 1.33.

7. The recording liquid according to claim 6 wherein said alkylene oxide adduct of polyhydric alcohol contains a branched hydrocarbon group.

8. The recording liquid according to claim 6 containing, as said alkylene oxide adduct of polyhydric alcohol, one or more of organic compounds represented by the chemical formulas 6 to 8:

[chemical formula 6]

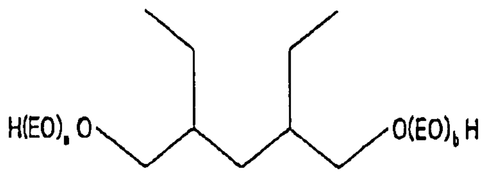

wherein EO denotes an ethylene oxide group, with $1 \leq a+b \leq 6$;

[chemical formula 7]

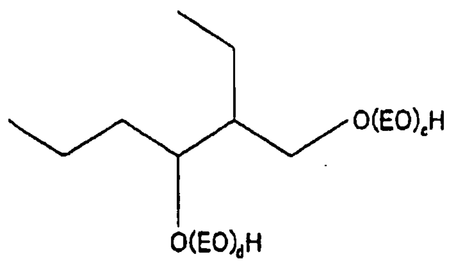

wherein EO denotes an ethylene oxide group, with $1 \leq c+d \leq 6$; and

[chemical formula 8]

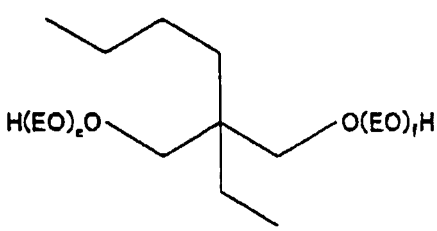

wherein EO denotes an ethylene oxide group, with $1 \leq e+f \leq 5$.

9. The recording liquid according to claim 6 wherein the static surface tension is not less than 30 mN/m and not more than 35 mN/m.

**10.** The recording liquid according to claim 2 containing, as a surfactant, at least one ethylene oxide/ propylene oxide copolymer represented by the chemical formula 9:

[chemical formula 9]

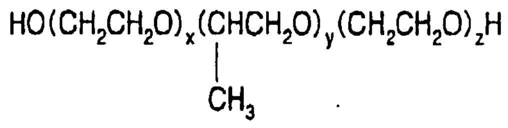

where x, y and z are integers, with $3 \leq x+z \leq 12$ and $8 \leq y \leq 21$, and where the content in a molecule of ethylene oxide units ranges between 20 wt% and 40 wt%.

**11.** A liquid cartridge detachably mounted on a liquid emitting head provided on a liquid emitting device, said liquid cartridge operating as a supply source for supplying a recording liquid, accommodated in a liquid vessel, to said liquid emitting head, said liquid emitting device being adapted to emit said recording liquid from said liquid vessel in the form of liquid droplets to deposit the emitted ink onto a support to effect printing, wherein
said recording liquid contains colorant matter and a solvent for dispersing said colorant matter, and has a 0-second dynamic surface tension not less than 30 mN/m and not more than 40 mN/m.

**12.** The liquid cartridge according to claim 11 wherein the recording liquid contains, in addition to said colorant matter and said solvent, a polyhydric alcohol having an I/O ratio, namely a ratio of an inorganic value (IV) to an organic value (OV), equal to not less than 1.18 and not more than 2.5, and containing a hydrocarbon group with the number of carbon atoms being not more than 9.

**13.** The liquid cartridge according to claim 12 wherein said polyhydric alcohol contains a branched hydrocarbon group.

**14.** The liquid cartridge according to claim 12 wherein said recording liquid contains, as said polyhydric alcohol, one or more of organic compounds represented by the chemical formulas 10 to 14:

[chemical formula 10]

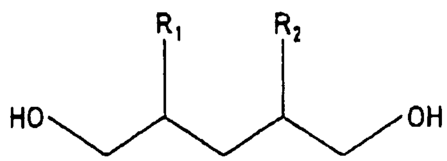

wherein $R_1$ and $R_2$ denote hydrocarbon groups, with $2 \leq R_1+R_2 \leq 4$, $R_1 \geq 0$ and $R_2 \geq 0$, provided that, if $R_1 = 0$ and $R_2 = 0$, $R_1$ and $R_2$ each denote a hydrogen atom;

[chemical formula 11]

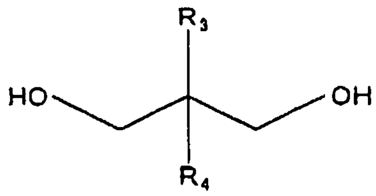

wherein $R_3$ and $R_4$ denote hydrocarbon groups, with $2 \leq R_3+R_4 \leq 6$, $R_3 \geq 0$ and $R_4 \geq 0$, provided that, if $R_3 = 0$ and $R_4 = 0$, $R_3$ and $R_4$ each denote a hydrogen atom;

[chemical formula 12]

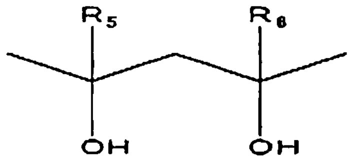

wherein $R_5$ and $R_6$ denote hydrocarbon groups, with $1 \leq R_5+R_6 \leq 4$, $R_5 \geq 0$ and $R_6 \geq 0$, provided that, if $R_5 = 0$ and $R_6 = 0$, $R_5$ and $R_6$ each denote a hydrogen atom;

[chemical formula 13]

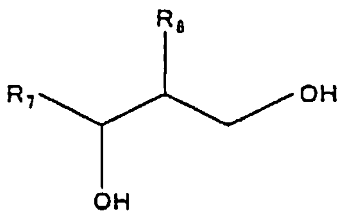

wherein $R_7$ and $R_8$ denote hydrocarbon groups, with $2 \leq R_7+R_8 \leq 6$; and

[chemical formula 14]

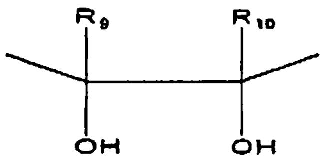

wherein $R_9$ and $R_{10}$ denote hydrocarbon groups, with $2 \leq R_9+R_{10} \leq 4$.

**15.** The liquid cartridge according to claim 11 wherein the static surface tension is not less than 30 mN/m and not more than 35 mN/m.

**16.** The liquid cartridge according to claim 11 containing, as a surfactant, an alkylene oxide adduct of a polyhydric alcohol, said alkylene oxide adduct of the polyhydric alcohol containing a hydrocarbon group with nine or less carbon atoms and having the ratio (I/O) of the inorganic value (IV) to the organic value (OV) not less than 1 and not more than 1.33.

**17.** The liquid cartridge according to claim 16 wherein said alkylene oxide adduct of polyhydric alcohol contains a branched hydrocarbon group.

**18.** The liquid cartridge according to claim 16 containing, as said alkylene oxide adduct of polyhydric alcohol, one or more of organic compounds represented by the chemical formulas 15 to 17:

[chemical formula 15]

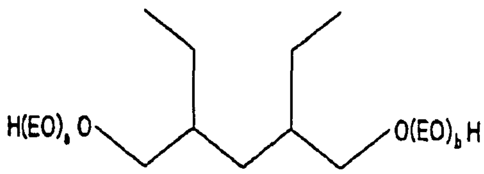

wherein EO denotes an ethylene oxide group, with $1 \leq a+b \leq 6$;

[chemical formula 16]

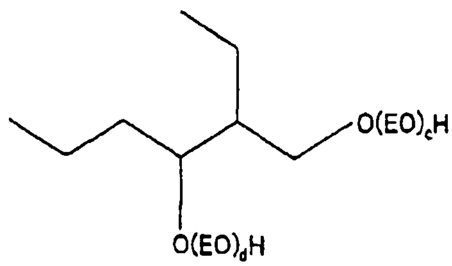

wherein EO denotes an ethylene oxide group, with $1 \leq c+d \leq 6$; and

[chemical formula 17]

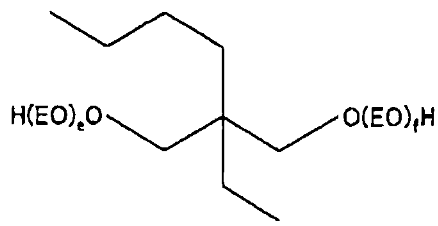

wherein EO denotes an ethylene oxide group, with $1 \leq e+f \leq 5$.

**19.** The liquid cartridge according to claim 16 wherein the static surface tension is not less than 30 mN/m and not more than 35 mN/m.

**20.** The liquid cartridge according to claim 12 containing, as a surfactant, at least one ethylene oxide/ propylene oxide copolymer represented by the chemical formula 18:

[chemical formula 18]

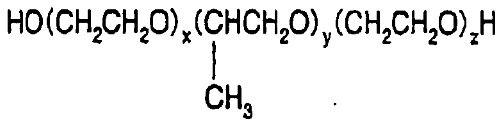

wherein x, y and z are integers, with $3 \leq x+z \leq 12$ and $8 \leq y \leq 21$, and wherein the content of ethylene oxide units in a molecule ranges between 20 wt% and 40 wt%.

**21.** A liquid emitting device including a liquid emitting head, having an emitting opening for emitting a recording liquid therethrough in the form of liquid droplets and adapted for emitting the liquid droplets through said emitting opening onto a support transported to a location facing said emitting opening, and a liquid cartridge connected to said liquid emitting head and operating as a supply source for supplying said recording liquid to said liquid emitting head, wherein the recording liquid contains colorant matter and a solvent for dispersing said colorant matter, and has a 0-second dynamic surface tension not less than 30 mN/m and not more than 40 mN/m.

**22.** The liquid emitting device according to claim 21 wherein the recording liquid contains, in addition to said colorant matter and said solvent, a polyhydric alcohol having an I/O ratio, namely a ratio of an inorganic value (IV) to an organic value (OV), equal to not less than 1.18 and not more than 2.5, and containing a hydrocarbon group with the number of carbon atoms not more than 9.

**23.** The liquid emitting device according to claim 22 wherein said polyhydric alcohol contains a branched hydrocarbon group.

**24.** The liquid emitting device according to claim 22 containing, as said polyhydric alcohol, one or more of organic compounds represented by the chemical formulas 19 to 23:

[chemical formula 19]

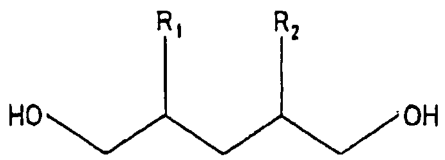

wherein $R_1$ and $R_2$ denote hydrocarbon groups, with $2 \leq R_1+R_2 \leq 4$, $R_1 \geq 0$ and $R_2 \geq 0$, provided that, if $R_1 = 0$ and $R_2 = 0$, $R_1$ and $R_2$ each denote a hydrogen atom;

[chemical formula 20]

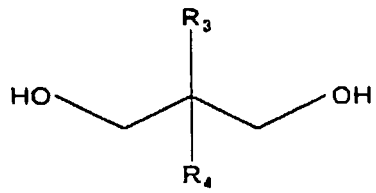

wherein $R_3$ and $R_4$ denote hydrocarbon groups, with $2 \leq R_3+R_4 \leq 6$, $R_3 \geq 0$ and $R_4 \geq 0$, provided that, if $R_3 = 0$ and $R_4 = 0$, $R_3$ and $R_4$ each denote a hydrogen atom;

[chemical formula 21]

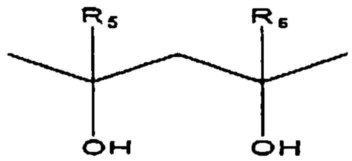

wherein $R_5$ and $R_6$ denote hydrocarbon groups, with $1 \leq R_5+R_6 \leq 4$, $R_5 \geq 0$ and $R_6 \geq 0$, provided that, if $R_5 = 0$ and $R_6 = 0$, $R_5$ and $R_6$ each denote a hydrogen atom;

[chemical formula 22]

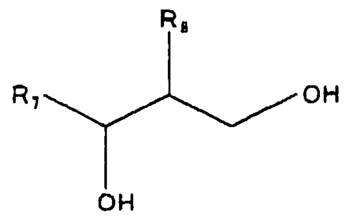

wherein $R_7$ and $R_8$ denote hydrocarbon groups, with $2 \leq R_7+R_8 \leq 6$; and

[chemical formula 23]

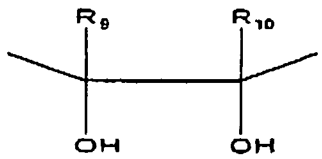

wherein $R_9$ and $R_{10}$ denote hydrocarbon groups, with $2 \leq R_9+R_{10} \leq 4$.

**25.** The liquid emitting device according to claim 21 wherein the static surface tension is not less than 30 mN/m and not more than 35 mN/m.

**26.** The liquid emitting device according to claim 21 containing, as a surfactant, an alkylene oxide adduct of a polyhydric alcohol, said alkylene oxide adduct of the polyhydric alcohol containing a hydrocarbon group with nine or less carbon atoms and having the ratio (I/O) of the inorganic value (IV) to the organic value (OV) not less than 1 and not more than 1.33.

**27.** The liquid emitting device according to claim 26 wherein said alkylene oxide adduct of polyhydric alcohol contains a branched hydrocarbon group.

**28.** The liquid emitting device according to claim 26 containing, as said alkylene oxide adduct of polyhydric alcohol, one or more of organic compounds represented by the chemical formulas 24 to 26:

[chemical formula 24]

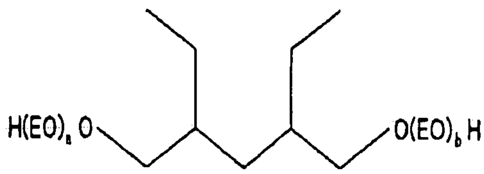

wherein EO denotes an ethylene oxide group, with $1 \leq a+b \leq 6$;

[chemical formula 25]

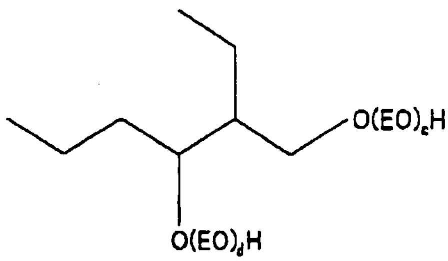

wherein EO denotes an ethylene oxide group, with $1 \leq c+d \leq 6$; and

[chemical formula 26]

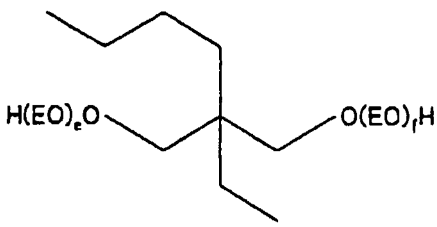

wherein EO denotes an ethylene oxide group, with $1 \leq e+f \leq 5$.

**29.** The liquid emitting device according to claim 26 wherein the static surface tension is not less than 30 mN/m and

not more than 35 mN/m.

**30.** The liquid emitting device according to claim 21 wherein there are provided a plurality of said emitting openings which are arrayed substantially in a line.

**31.** The liquid emitting device according to claim 22 wherein said recording liquid contains, as a surfactant, at least one ethylene oxide/ propylene oxide copolymer represented by the chemical formula 9:

[chemical formula 27]

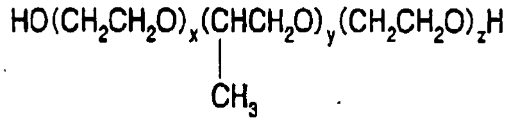

wherein x, y and z are integers, with $3 \le x+z \le 12$ and $8 \le y \le 21$, and wherein the content of ethylene oxide units in a molecule ranges between 20 wt% and 40 wt%.

**32.** A liquid emitting method to be carried out by a liquid emitting device including a liquid emitting head, having an emitting opening for emitting a recording liquid therethrough in the form of liquid droplets and adapted for emitting the liquid droplets through said emitting opening onto a support transported to a location facing said emitting opening, and a liquid cartridge connected to said liquid emitting head and operating as a supply source for supplying said recording liquid to said liquid emitting head, comprising:

emitting said recording liquid via said emitting opening of said liquid emitting head; said recording liquid containing colorant matter and a solvent for dispersing said colorant matter, and having a 0-second dynamic surface tension not less than 30 mN/m and not more than 40 mN/m.

**33.** The liquid emitting method according to claim 32 wherein the recording liquid contains, in addition to said colorant matter and said solvent, a polyhydric alcohol having an I/O ratio, namely a ratio of an inorganic value (IV) to an organic value (OV), equal to not less than 1.18 and not more than 2.5, and containing a hydrocarbon group with the number of carbon atoms not more than 9.

**34.** The liquid emitting method according to claim 33 wherein said polyhydric alcohol contains a branched hydrocarbon group.

**35.** The liquid emitting method according to claim 33 containing, as said polyhydric alcohol, one or more of organic compounds represented by the chemical formulas 28 to 32:

[chemical formula 28]

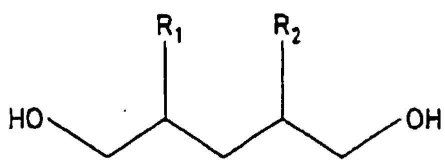

wherein $R_1$ and $R_2$ denote hydrocarbon groups, with $2 \le R_1+R_2 \le 4$, $R_1 \ge 0$ and $R_2 \ge 0$, provided that, if $R_1 = 0$ and $R_2 = 0$, $R_1$ and $R_2$ each denote a hydrogen atom;

[chemical formula 29]

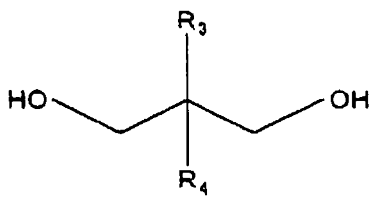

wherein $R_3$ and $R_4$ denote hydrocarbon groups, with $2 \leq R_3+R_4 \leq 6$, $R_3 \geq 0$ and $R_4 \geq 0$, provided that, if $R_3 = 0$ and $R_4 = 0$, $R_3$ and $R_4$ each denote a hydrogen atom;

[chemical formula 30]

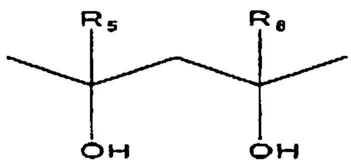

wherein $R_5$ and $R_6$ denote hydrocarbon groups, with $1 \leq R_5+R_6 \leq 4$, $R_5 \geq 0$ and $R_6 \geq 0$, provided that, if $R_5 = 0$ and $R_6 = 0$, $R_5$ and $R_6$ each denote a hydrogen atom;

[chemical formula 31]

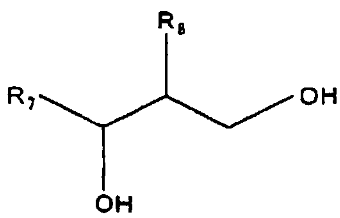

wherein $R_7$ and $R_8$ denote hydrocarbon groups, with $2 \leq R_7+R_8 \leq 6$; and

[chemical formula 32]

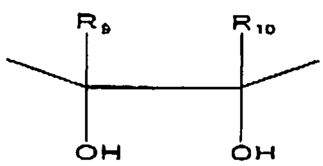

wherein $R_9$ and $R_{10}$ denote hydrocarbon groups, with $2 \leq R_9+R_{10} \leq 4$.

**36.** The liquid emitting method according to claim 32 wherein the static surface tension is not less than 30 mN/m and not more than 35 mN/m.

**37.** The liquid emitting method according to claim 32 wherein said recording liquid, containing, as a surfactant, an alkylene oxide adduct of a polyhydric alcohol, said alkylene oxide adduct of the polyhydric alcohol containing a hydrocarbon group with nine or less carbon atoms and having the ratio (I/O) of the inorganic value (IV) to the organic value (OV) not less than 1 and not more than 1.33, is emitted via said emitting opening.

**38.** The liquid emitting method according to claim 37 wherein said alkylene oxide adduct of polyhydric alcohol contains a branched hydrocarbon group.

**39.** The liquid emitting method according to claim 37 containing, as said alkylene oxide adduct of polyhydric alcohol, one or more of organic compounds represented by the chemical formulas 33 to 35:

[chemical formula 33]

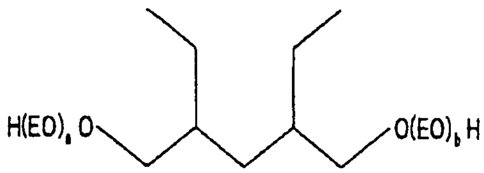

wherein EO denotes an ethylene oxide group, with $1 \leq a+b \leq 6$;

[chemical formula 34]

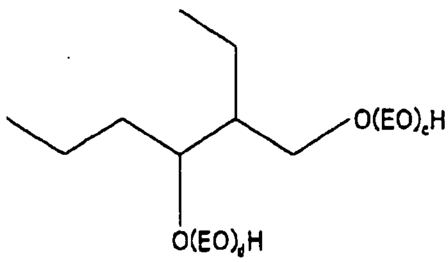

wherein EO denotes an ethylene oxide group, with $1 \leq c+d \leq 6$; and

[chemical formula 35]

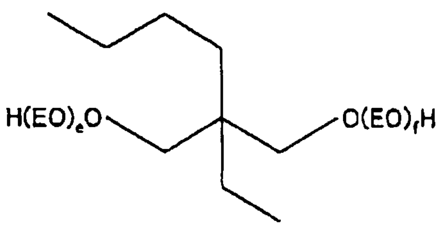

wherein EO denotes an ethylene oxide group, with 1 ≤ e+f ≤ 5.

**40.** The liquid emitting method according to claim 34 wherein said recording liquid having the static surface tension not less than 30 mN/m and not more than 35 mN/m is emitted via said emitting opening.

**41.** The liquid emitting method according to claim 33 wherein said recording liquid containing, as a surfactant, at least one ethylene oxide/ propylene oxide copolymer represented by the chemical formula 36:

[chemical formula 36]

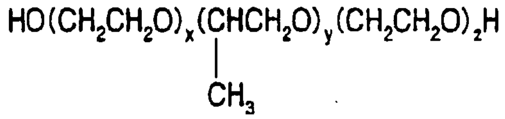

is emitted via said emitting opening, wherein x, y and z are integers, with 3 ≤ x+z ≤ 12 and 8 ≤ y ≤ 21, and wherein the content of ethylene oxide units in a molecule ranges between 20 wt% and 40 wt%.

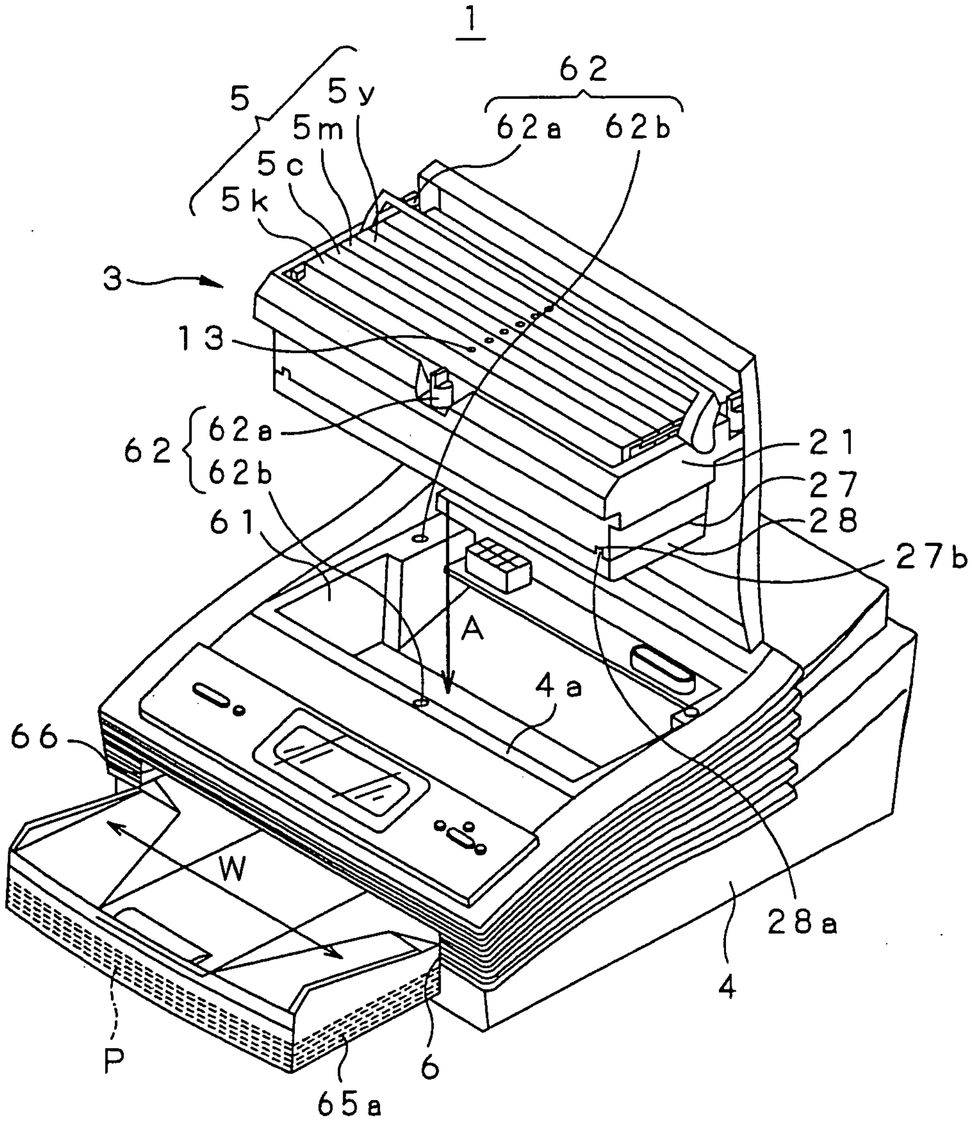
1
5
5y
5m
5c
5k
62
62a
62b
3
13
62
62a
62b
61
21
27
28
27b
A
4a
66
W
28a
4
P
6
65a

FIG. 1

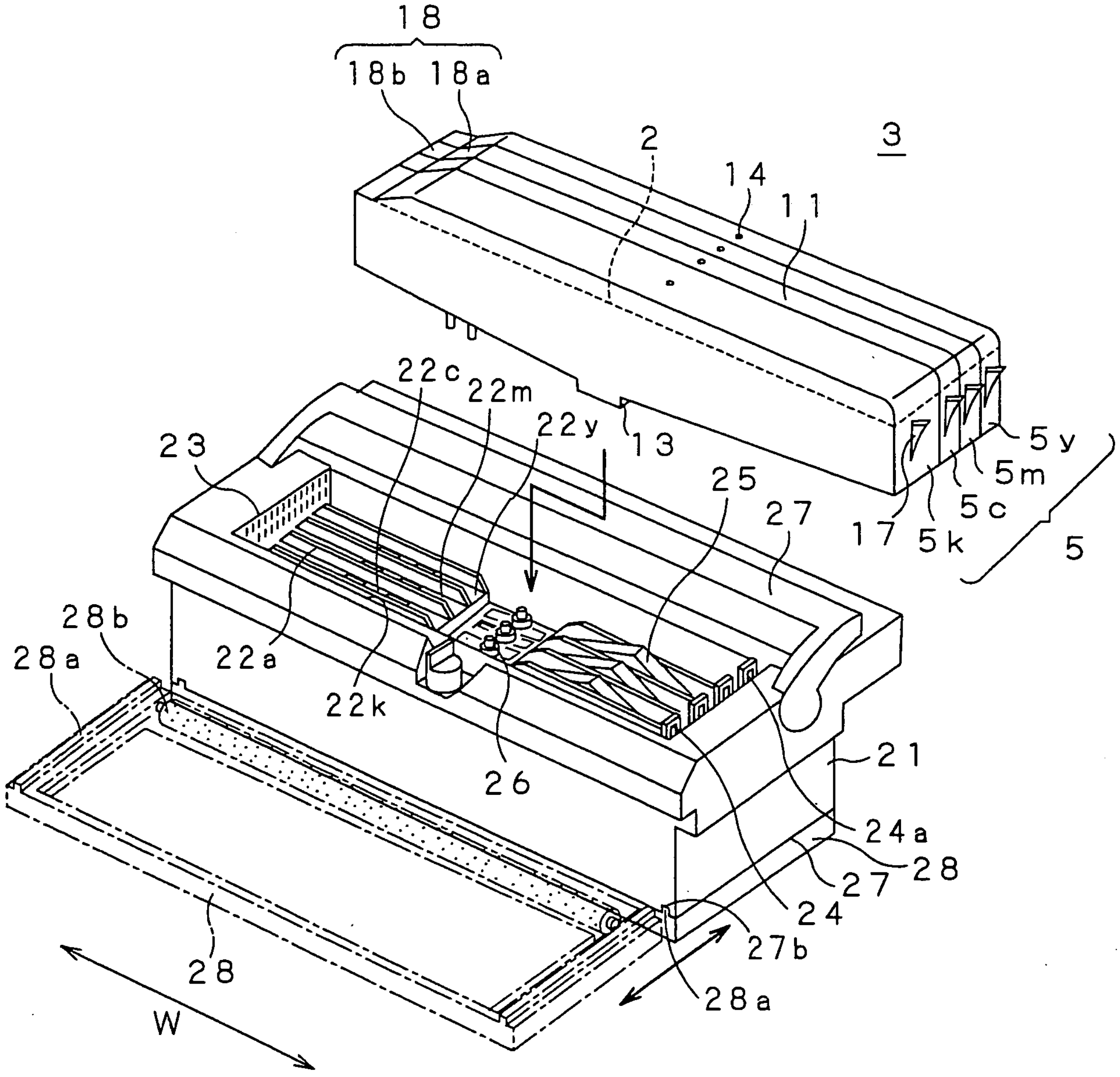
18
18b
18a
2
3
14
11
22c
22m
22y
13
23
25
27
5y
5m
5c
17
5k
5
28b
28a
22a
22k
26
21
24a
28
27
24
27b
28
28a
W

FIG.2

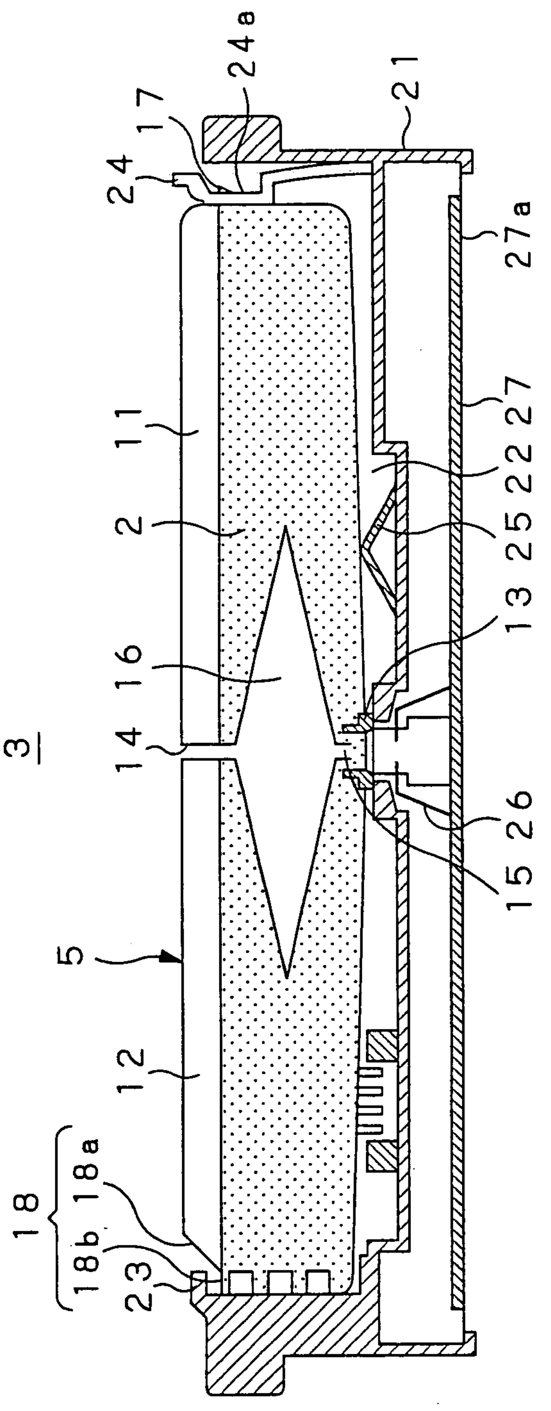


FIG.3

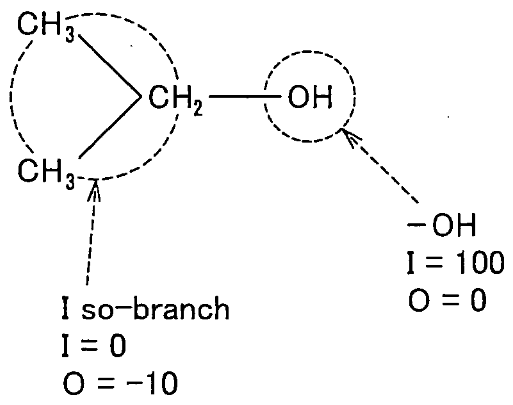


FIG.4

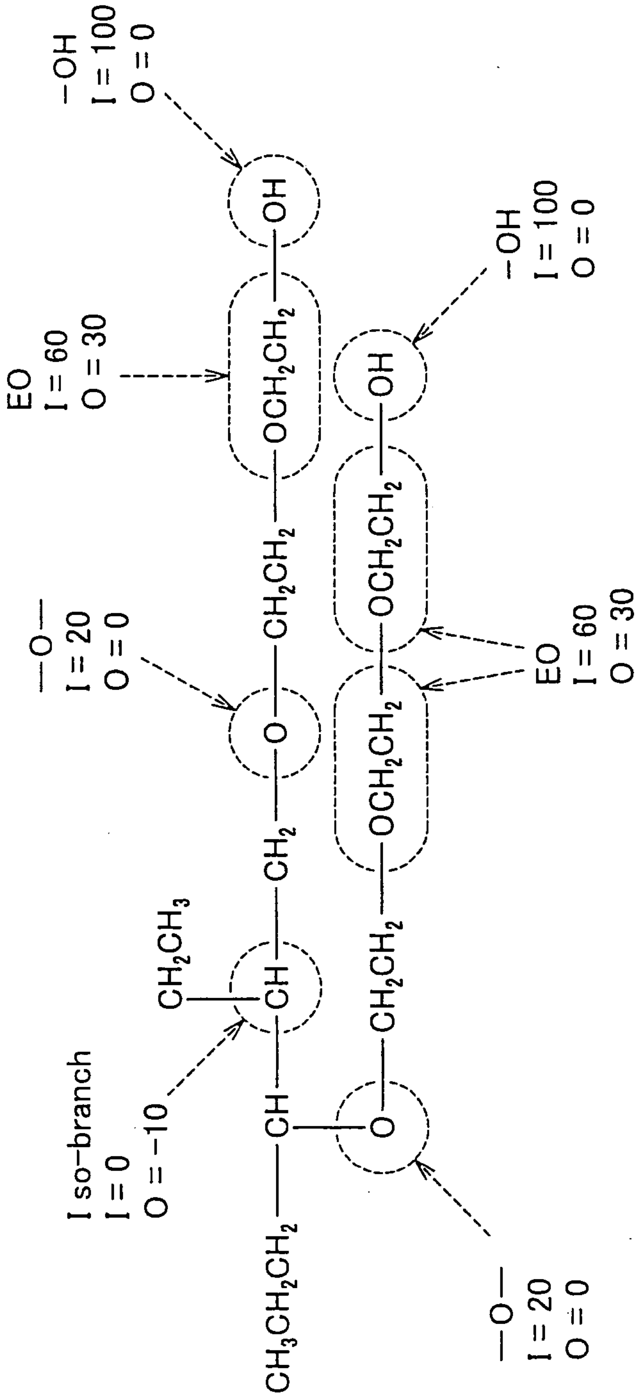

FIG.5

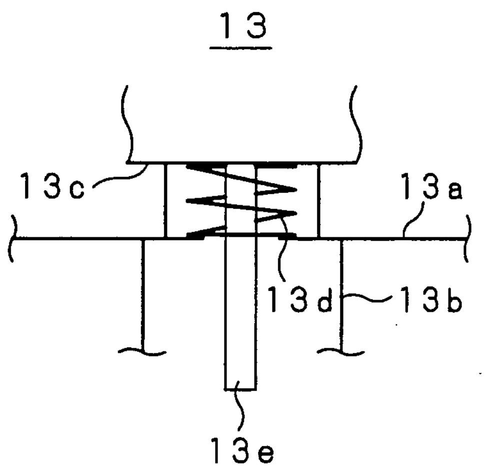


FIG.6A

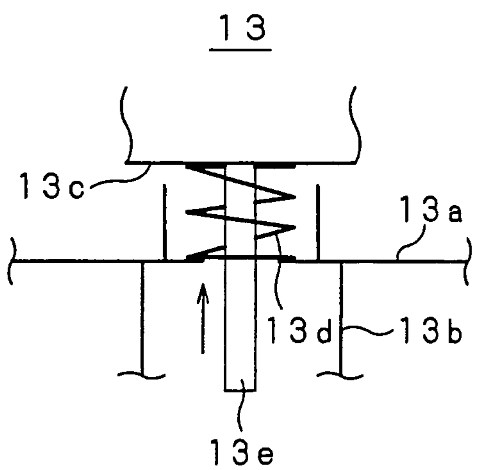


FIG.6B

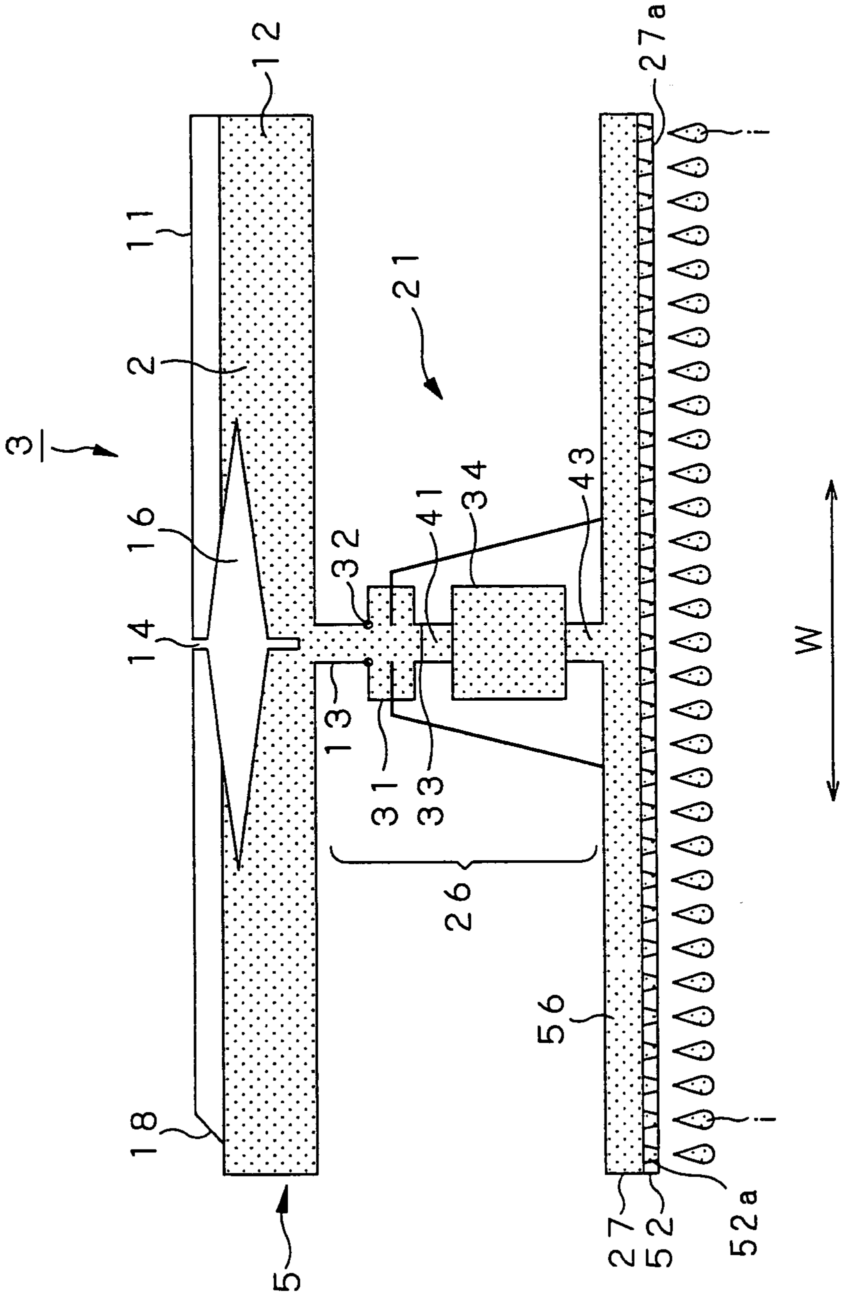


FIG.7

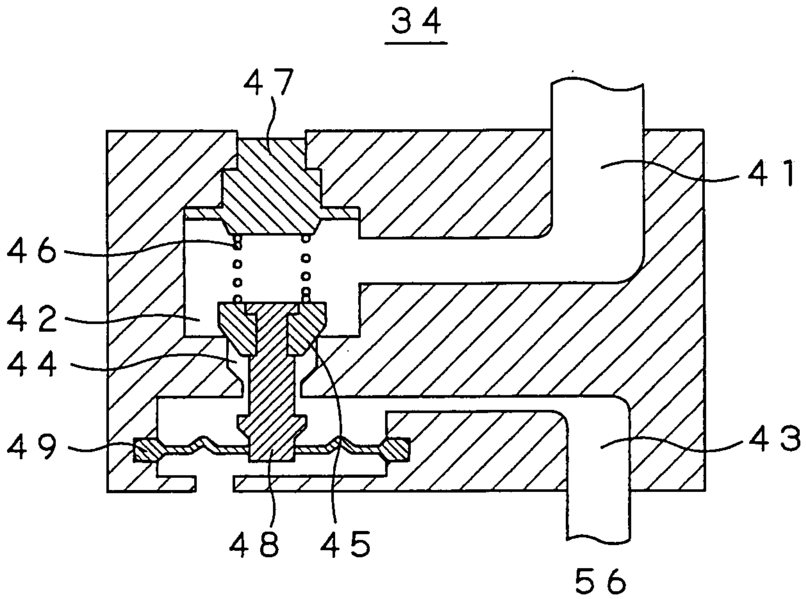


FIG.8A

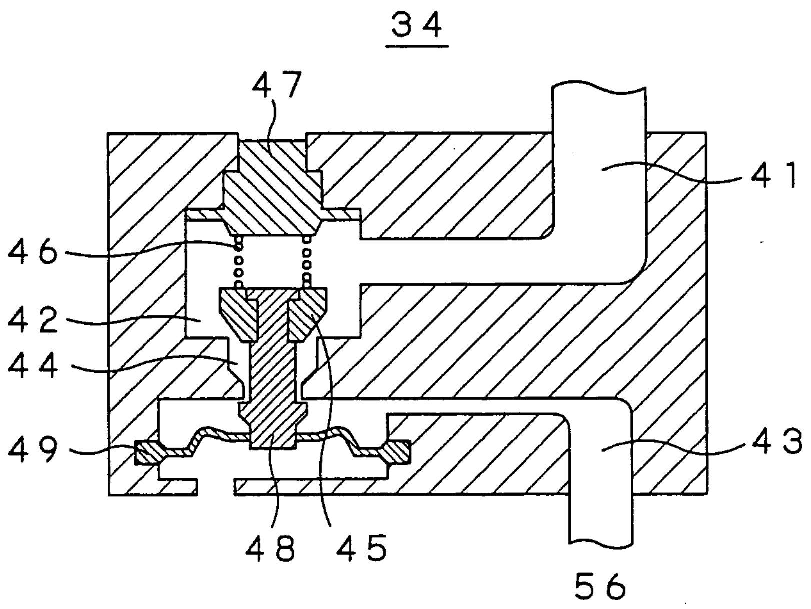


FIG.8B

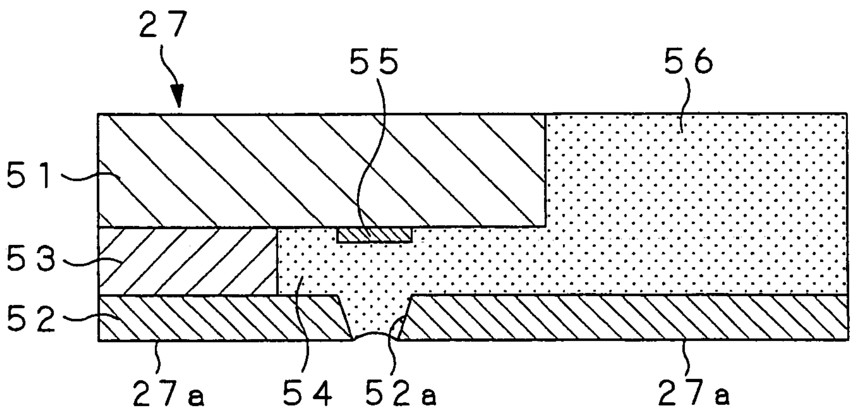


FIG.9

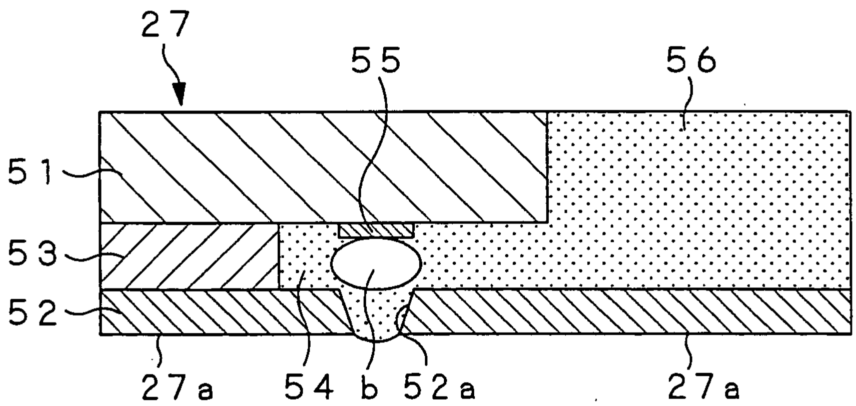


FIG.10A

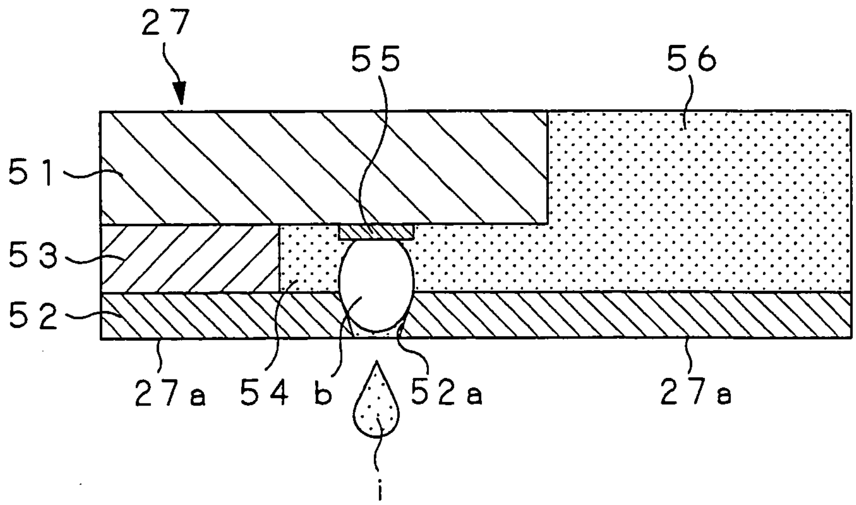


FIG.10B

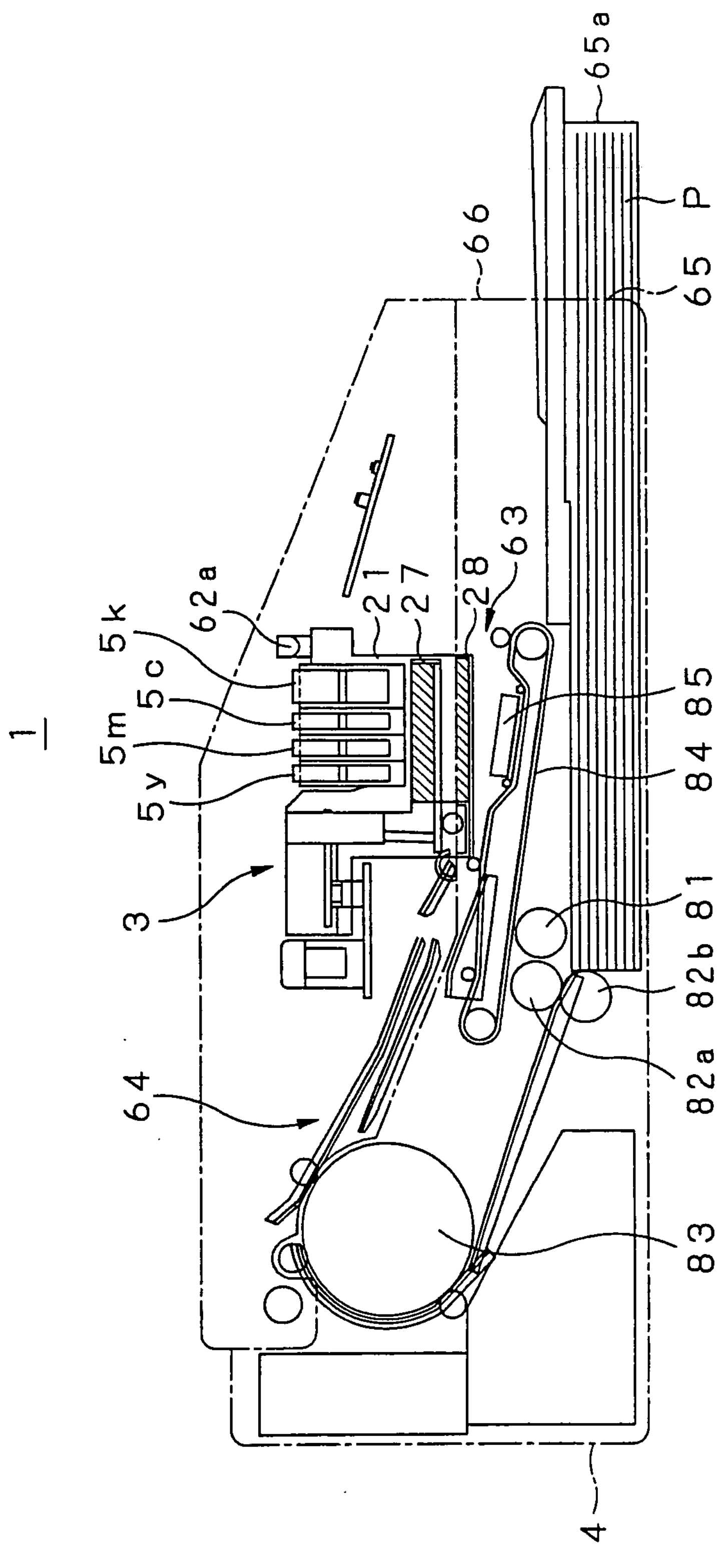


FIG.11

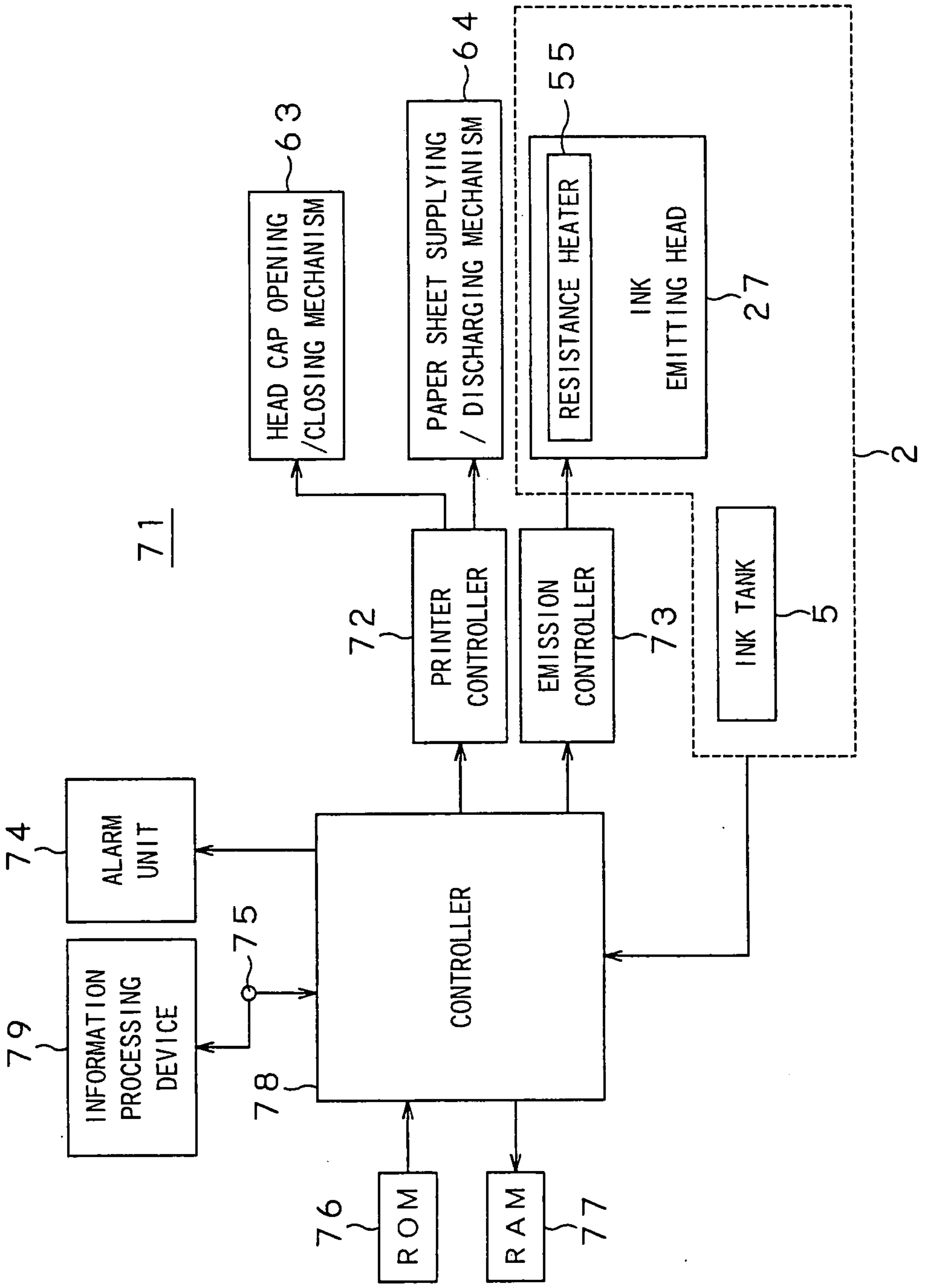
71
HEAD CAP OPENING /CLOSING MECHANISM
63
PAPER SHEET SUPPLYING / DISCHARGING MECHANISM
64
RESISTANCE HEATER
55
INK EMITTING HEAD
27
2
PRINTER CONTROLLER
72
EMISSION CONTROLLER
73
INK TANK
5
ALARM UNIT
74
INFORMATION PROCESSING DEVICE
79
75
CONTROLLER
78
ROM
76
RAM
77

FIG.12

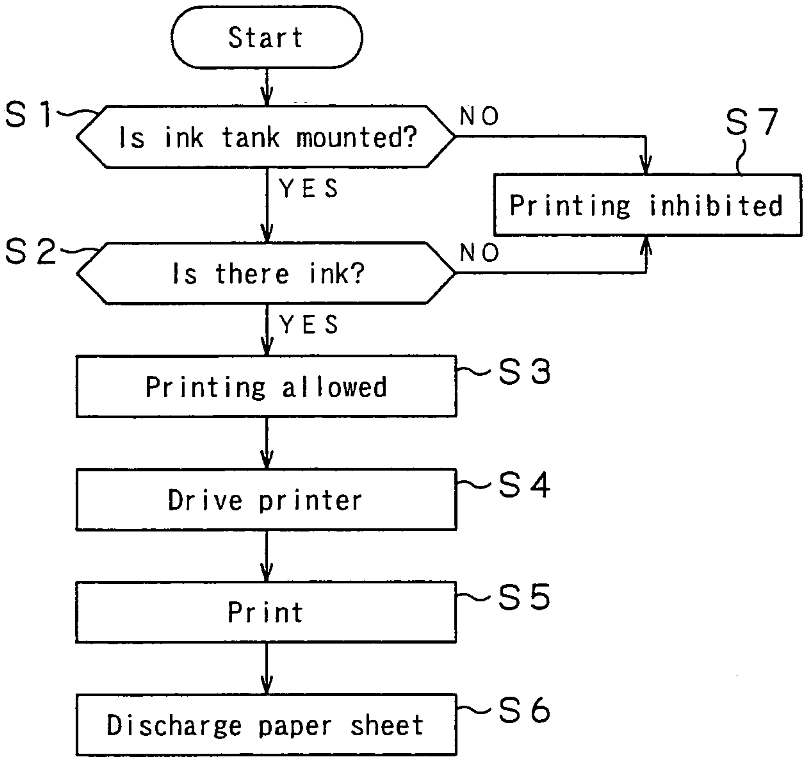
Start
S1
Is ink tank mounted?
NO
YES
S7
Printing inhibited
S2
Is there ink?
NO
YES
Printing allowed
S3
Drive printer
S4
Print
S5
Discharge paper sheet
S6

FIG.13

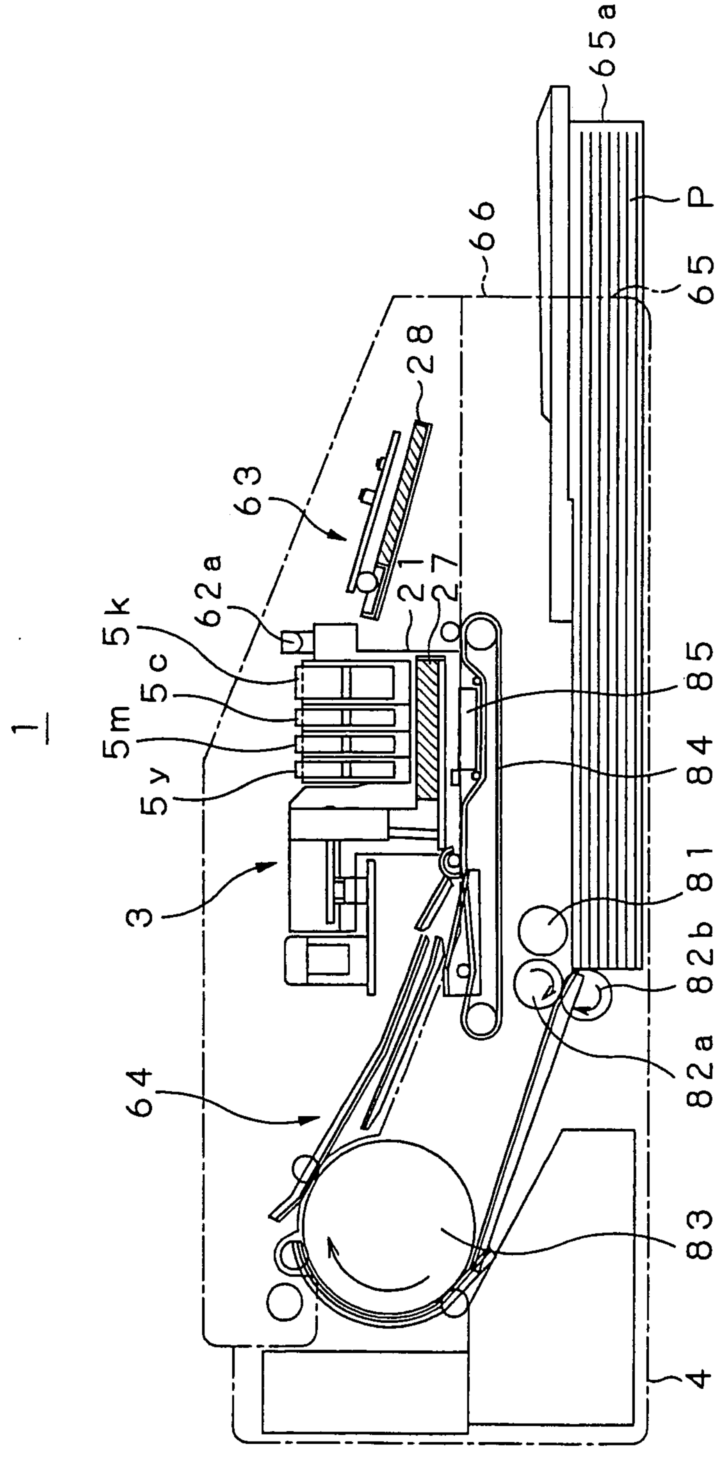


FIG.14

**INTERNATIONAL SEARCH REPORT**

International application No.
PCT/JP2004/018316

A. CLASSIFICATION OF SUBJECT MATTER
Int.Cl[7] C09D11/00, B41J2/01, B41M5/00

According to International Patent Classification (IPC) or to both national classification and IPC

B. FIELDS SEARCHED

Minimum documentation searched (classification system followed by classification symbols)
Int.Cl[7] C09D11/00, B41J2/01, B41M5/00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2000-327974 A (Seiko Epson Corp.), 28 November, 2000 (28.11.00), Claims; Par Nos. [0037] to [0040], [0084] to [0116] & EP 978547 A1 | 1-41 |
| X | JP 2000-345082 A (Seiko Epson Corp.), 12 December, 2000 (12.12.00), Claims; Par Nos. [0020] to [0021], [0025], [0038] to [0046] (Family: none) | 1-41 |
| P,X<br>P,A | JP 2004-197037 A (Seiko Epson Corp.), 15 July, 2004 (15.07.04), Claims (Family: none) | 1-9,11-19, 21-30,32-40<br>10,20,31,41 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>11 January, 2005 (11.01.05) | Date of mailing of the international search report<br>25 January, 2005 (25.01.05) |
| Name and mailing address of the ISA/<br>Japanese Patent Office<br>Facsimile No. | Authorized officer<br>Telephone No. |

Form PCT/ISA/210 (second sheet) (January 2004)

**INTERNATIONAL SEARCH REPORT**

International application No.
PCT/JP2004/018316

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-272252 A (Mitsubishi Chemical Corp.), 03 October, 2000 (03.10.00), Claims; Par Nos. [0028], [0029] (Family: none) | 1-41 |

Form PCT/ISA/210 (continuation of second sheet) (January 2004)

**INTERNATIONAL SEARCH REPORT**

International application No.
PCT/JP2004/018316

With respect to ethylene oxide adducts of dihydric alcohol represented by chemical formulae shown in the description, the results of calculation of inorganic values and organic values as per the calculation basis set forth on pages 12-16 of the description, as apparent from comparisons of, for example, chemical formula 9 with chemical formula 10 and chemical formula 11 with chemical formula 12, often definitely disagree with the respective inorganic values and organic values indicated in the description.

Therefore, whether or not the ethylene oxide adducts of dihydric alcohol mentioned in the description correspond to the ethylene oxide adducts of dihydric alcohol mentioned in the claims is unclear, and what particular compounds are the ethylene oxide adducts of dihydric alcohol mentioned in the claims is unclear.

Form PCT/ISA/210 (extra sheet) (January 2004)